# EUROPÄISCHE PATENTANMELDUNG

(11) **EP 2 296 346 A1**
(43) Veröffentlichungstag der Anmeldung: **16.03.2011**
(21) Anmeldenummer: 10180102.5
(22) Anmeldetag: 24.05.2000
(51) Int. Cl.: H04L 29/08, H04L 29/12, H04L 29/06

(54) **Mobilgerät und Verfahren zur vereinfachten elektronischen Bestellung von Gütern und Dienstleistungen mittels gespeicherter Katalogdaten**

(30) Priorität: 24.05.1999 DE 19923370; 31.03.2000 DE 10016117
(62) Teilanmeldung aus: 00935114.9
(71) Anmelder: Borgward, Glenn Rolus, 80796 München (DE)
(72) Erfinder: Borgward, Glenn Rolus, 80796 München (DE)
(74) Vertreter: Grünecker, Kinkeldey, Stockmair & Schwanhäusser Anwaltssozietät

(57) **Zusammenfassung**

Die Erfindung stellt eine Datenverarbeitungseinrichtung (3000) bereit zur Auswahl und Bestellung von Gütern und/oder Dienstleistungen, insbesondere die nicht unmittelbar über Datenleitungen erbracht werden können, umfassend einen Handteil (3020) und ein Kartenmodul (3010), wobei der Handteil und/oder das Kartenmodul mindestens eine nichtflüchtige Datenspeichereinrichtung aufweist, in der ein Katalog der bestellbaren Güter und/oder Dienstleistungen abgelegt ist, wobei die Datenverarbeitungseinrichtung derart ausgebildet ist, dass nach Auswahl eines Guts und/oder einer Dienstleistung eine Telekommunikationsverbindung zu einem Serverrechner hergestellt und Bestelldaten übermittelt werden können.

## Beschreibung

Die Erfindung betrifft eine Datenverarbeitungseinrichtung. Insbesondere betrifft die Erfindung eine durch eine Telekommunikationseinrichtung vernetzte Datenverarbeitungseinrichtung.

Seit einiger Zeit werden durch das Internet oder andere Telekommunikationssysteme vernetzte Datenverarbeitungseinrichtungen nicht nur von Unternehmen, sondern auch von Endverbrauchern im Rahmen des "Elektronischen Handels" ("E-Commerce") zur Abwicklung von Geschäften aller Art herangezogen.

Die Nutzung des Internet und anderer Telekommunikationssysteme wie beispielsweise proprietärer Online-Systeme durch den Endbenutzer erfolgt fast stets unter Verwendung eines "Personal Computers", auch "PC" genannt, oder eines vergleichbaren Gerätes, beispielsweise einer Workstation, eines tragbaren Computers ("Notebook") oder eines in einer Hand zu haltenden Minigerätes ("Palmtop").

Personal Computer und solche vergleichbaren Geräte haben den Vorteil, daß der Umfang an Funktionalität, der durch sie dem Endbenutzer zur Verfügung gestellt werden kann, nicht allein durch die verwendete Hardware determiniert ist, sondern durch das Laden verschiedener Programme zu einem beliebigen Zeitpunkt äußerst flexibel verändert werden kann. Beispielsweise ist es möglich, nachträglich eine bestimmte Software aufzuspielen und zu installieren, wenn der Endbenutzer zusätzliche Funktionalitäten nutzen möchte.

Der Nachteil dieser Universalität besteht in einer ausufernden Komplexität von mit üblichen Betriebssystemen wie Windows oder Unix ausgestatteten PCs bzw. Workstations. Der Endbenutzer muß zunächst ein beträchtliches Hintergrundwissen über den Aufbau und die Funktionszusammenhänge des komplexen Gesamtsystems erwerben, um die in ihm angelegte potentielle Universalität zur Lösung konkreter Aufgaben praktisch nutzen zu können.

Es erweist sich, daß nicht unbeachtliche Gruppen von Endbenutzern oder prospektiven Endbenutzern Telekommunikationsdienste deshalb insbesondere für Zwecke des E-Commerce nicht nutzen wollen oder nutzen können, weil sie die Komplexität von PCs oder vergleichbaren Geräten nicht zu meistern imstande sind, deren Einsatz bislang de facto eine notwendige Voraussetzung für die Teilnahme an oder Nutzung von Telekommunikationsdiensten ist.

Die für den Endbenutzer bei herkömmlichen Datenverarbeitungseinrichtungen auftretenden technischen Probleme sind vielgestaltig. Sie beginnen in der Regel damit, daß nicht nur das Betriebssystem eingerichtet, sondern auch eine Verbindung zu einem Telekommunikationssystem, beispielsweise dem Internet, konfiguriert und schließlich hergestellt werden muß. Die Modalitäten des Zuganges zum Internet variieren dabei unter anderem lokal je nach Land oder Region und überdies am selben Ort von Provider zu Provider.

Wenn schließlich eine einsatzfähige vernetzte Datenverarbeitungseinrichtung erzielt worden ist, sieht sich der Endbenutzer beispielsweise im Internet einer unstrukturierten Vielfalt von Angeboten zur geschäftlichen Betätigung gegenüber. Bei herkömmlichen Datenverarbeitungseinrichtungen muß sich der Endbenutzer selber ein umfangreiches Funstellenwissen erarbeiten und aneignen, um die für ihn interessanten Angebote über das Telekommunikationsnetz nutzen zu können.

Hat der Endbenutzer schließlich einen Anbieter gefunden, mit dem er geschäftlich näher in Verbindung treten möchte, so sind in der Regel bei jedem Anbieter zahlreiche Besonderheiten hinsichtlich der Identifizierung und der Authentikation des Kunden sowie der Lieferung der bestellten Güter und bei Zahlungsabwicklung zu beachten.

In Anbetracht dieses Problemes ist bislang vorgeschlagen worden, extrem spezialisierte Datenverarbeitungseinrichtungen zu schaffen, die lediglich einen einzige Funktionalität oder höchstens einige wenige Funktionalitäten zu erbringen vermögen. Ein Beispiel hierfür ist das Mobiltelefon, das eine an ein Telekommunikationsnetz angekoppelte Datenverarbeitungseinrichtung darstellt, welche im wesentlichen lediglich einem einzelnen Zweck, nämlich dem Telefonieren dient. Eine Beschränkung auf eine einzelne Funktionalität je Gerätetyp erweist sich jedoch bei zunehmender Bedeutung von vernetzten Datenverarbeitungseinrichtungen als hinderlich, da die Anzahl der für die verschiendenen Nutzungsbereiche benötigten unterschiedlichen Gerätetypen zu stark ansteigt. Bei einer Erhöhung der Anzahl der Funktionalitäten je Gerät entlang herkömmlicher Vorgehensweisen beispielsweise durch Hinzunahme von Textnachrichtenabruf bei Mobiltelefonen wird rasch wieder ein Komplexitätsniveau hinsichtlich der Gerätebedienung erreicht, welches für breite Nutzerkreise abschreckend wirkt.

Ein wichtiges Anwendungsfeld des E-Commerce besteht im Zusammenhang mit der Distribution von Dateien, die Datenverarbeitungsprogramme, Texte, Abbildungen, multimediale Werke oder Videoanimationen beinhalten können, durch Inhalteanbieter an Kunden. Bei diesem Anwendungsfeld besteht eine Besonderheit darin, daß der Leistungstausch zwischen Inhalteanbieter und Kunde vollkommen körperlos ablaufen kann, da sowohl der Angebotskatalog, der Bestellvorgang, die Lieferung der bestellten Ware als auch die Abrechnung in Form von über Telekommunikationseinrichtungen ausgetauschten Daten abgewickelt werden kann. Ein Nachteil bisheriger Lösungsansätze zur Distribution von Werken besteht darin, daß der Kunde in der Regel ein Vervielfältigungsexemplar des Werkes als Kaufstück erwerben muß, auch wenn er dieses lediglich kurzzeitig oder auszugsweise nutzt.

Die Erfindung steht daher in einem Zusammenhang mit einer für derartige Zwecke geeigneten technischen Infrastruktur.

Aufgabe der Erfindung ist es daher, eine verbessertes Datenverarbeitungseinrichtung vorzusehen, die die Nutzung von Telekommunikationsdiensten mit möglichst wenig Systemkenntnissen ermöglicht und dennoch äußerst flexibel ist.

Aufgabe der Erfindung ist es weiterhin, eine verbesserte Datenverarbeitungseinrichtung vorzusehen, bei der die Abrechnung besonders flexibel durchgeführt werden kann.

Diese Aufgabe wird erfindungsgemäli gelöst durch eine Datenverarbeitungseinrichtung mit den im Anspruch 1 angegebenen Merkmalen, durch eine Datenverarbeitungseinrichtung mit den im Anspruch 40 angegebenen Merkmalen, durch eine Datenverarbeitungseinrichtung mit den im Anspruch 77 angegebenen Merkmalen sowie durch eine Datenverarbeitungseinrichtung mit den im Anspruch 78 angegebenen Merkmalen,

Die Gegenstände der unabhängigen Patentansprüche weisen jeweils für sich eigenständigen erfinderischen Gehalt auf.

Im folgenden wird die Erfindung anhand von Ausführungsbeispielen näher erläutert:
- **Fig. 1**: zeigt schematisch eine erfindungsgemäße vernetzte Datenver- arbeitungseinrichtung mit einem Serverteil und einem Clientteil.
- **Fig. 2**: zeigt eine schematische Darstellung verschiedener Aspekte bei der geschäftlichen Nutzung einer erfindungsgemäßen Datenver- arbeitungseinrichtung.
- **Fig. 3**: zeigt eine erste Applikation der Erfindung anhand einer sche- matischen Darstellung einer erfindungsgemäßen Datenvararbei- tungseinrichtung.
- **Fig. 4**: zeigt eine zweite Applikation der Erfindung anhand einer sche- matischen Darstellung einer erfindungsgemäßen Datenvararbei- tungseinrichtung.
- **Fig. 5**: zeigt eine dritte Applikation der Erfindung anhand einer sche- matischen Darstellung einer erfindungsgemäßen Datenvararbei- tungseinrichtung.
- **Fig. 6**: zeigt eine erste Variante einer Ausführungsform der in **Fig. 1** dargestellten erfindungsgemäßen Lösung.
- **Fig. 7**: zeigt eine zweite Variante einer Ausführungsform der in **Fig. 1** dargestellten erfindungsgemäßen Lösung.
- **Fig. 8**: zeigt eine dritte Variante einer Ausführungsform der in **Fig. 1** dargestellten erfindungsgemäßen Lösung.
- **Fig. 9**: zeigt eine vierte Variante einer Ausführungsform der in **Fig. 1** dargestellten erfindungsgemäßen Lösung.
- **Fig. 10**: zeigt eine fünfte Variante einer Ausführungsform der in **Fig. 1** dargestellten erfindungsgemäßen Lösung.
- **Fig. 11**: zeigt eine sechste Variante einer Ausführungsform der in **Fig. 1** dargestellten erfindungsgemäßen Lösung.
- **Fig. 12**: zeigt eine siebte Variante einer Ausführungsform der in **Fig. 1** dargestellten erfindungsgemäßen Lösung.
- **Fig. 13**: zeigt eine achte Variante einer Ausführungsform der in **Fig. 1** dargestellten erfindungsgemäßen Lösung.
- **Fig. 14**: zeigt eine neunte Variante einer Ausführungsform der in **Fig. 1** dargestellten erfindungsgemäßen Lösung.
- **Fig. 15**: zeigt eine zehnte Variante einer Ausführungsform der in **Fig. 1** dargestellten erfindungsgemäßen Lösung.
- **Fig. 16**: zeigt schematisch eine erste Ausführungsform der erfindungs- gemäßen Lösung.
- **Fig. 17**: zeigt schematisch eine zweite Ausführungsform der erfindungs- gemäßen Lösung.
- **Fig. 18**: zeigt schematisch eine dritte Ausführungsform der erfindungs- gemäßen Lösung.
- **Fig. 19**: zeigt schematisch eine vierte Ausführungsform der erfindungs- gemäßen Lösung.
- **Fig. 20**: zeigt schematisch eine fünfte Ausführungsform der erfindungs- gemäßen Lösung.
- **Fig. 21**: zeigt schematisch eine sechste Ausführungsform der erfindungs- gemäßen Lösung.
- **Fig. 22**: zeigt schematisch eine andere Variante der sechsten Ausfüh- rungsform der erfindungsgemäßen Lösung aus **Fig. 21****.**
- **Fig. 23**: zeigt schematisch eine andere Variante der sechsten Ausfüh- rungsform der erfindungsgemäßen Lösung aus **Fig. 22****.**
- **Fig. 24**: zeigt schematisch Vorrichtungen zur Ver- und Entschlüsselung von urheberrechtlich geschützte (multimediale) Werke repräsen- tierenden Dateien unter Einbeziehung des Kartenmoduls.
- **Fig. 25**: zeigt in den **Teil-****Fign. 25a** bis **25f** unterschiedliche Ausgestal- tungen aus **Fig. 24****.**
- **Fig. 26**: zeigt schematisch an einem Beispiel den zeitlichen Ablauf des Datenaustausches zwischen Clientteil und Serverteil.
- **Fig. 27**: zeigt schematisch ein Ablaufdiagramm eines ersten Verfahrens zur Abrechnung des Bezuges von Software, Texte oder multi- mediale Werke repräsentierender Dateien von einem Serverteil.
- **Fig. 28**: zeigt schematisch ein Ablaufdiagramm eines zweiten Verfahrens zur Abrechnung des Bezuges von Software, Texte oder multi- mediale Werke repräsentierender Dateien von einem Serverteil.
- **Fig. 29**: zeigt zeigt eine perspektivische Ansicht eines Hardware-Erwei- terungsmoduls mit einer Chipkarte als Kartenmodul.
- **Fig. 30**: zeigt eine schematisierte Ablaufdarstellung eines exemplarischen Abonnement-Bestellvorganges.
- **Fig. 31**: zeigt eine schematische Ablaufdarstellung einer ersten Variante einer Abonnement-Abwicklung mittels der erfindungsgemäßen Lösung.
- **Fig. 32**: zeigt eine schematische Ablaufdarstellung einer zweiten Varian- te einer Abonnement-Abwicklung mittels der erfindungsge- mäßen Lösung.
- **Fig. 33**: zeigt eine schematische Ablaufdarstellung einer dritten Variante einer Abonnement-Abwicklung mittels der erfindungsgemäßen Lösung.
- **Fig. 34**: zeigt in den **Teil-****Fign. 34a** bis **34h** schematisch Abläufe im Zusammenhang mit der Abrechnung gelieferter Dateien im Kontext der erfindungsgemäßen Lösung.
- **Fig. 35**: zeigt in den Teil-Fign. **35a** bis **35c** eine erfindungsgemäße Datenverarbeitungseinrichtung mit einem Wearable-Rechner.
- **Fig. 36**: zeigt in den Teil-Fign. **36a** bis **36c** Varianten der in **Fig. 35** dargestellten Datenverarbeitungseinrichtung.
- **Fig. 37**: zeigt in den Teil-Fign. **37a** bis **37c** eine weitere Variante einer erfindungsgemäßen Datenverarbeitungseinrichtung.
- **Fig. 38**: zeigt eine Ansicht einer ersten Variante eines erfindungsgemä- ßen Datenverarbeitungssystems mit einem Wearable-Rechner und einem Handteil, die über ein Kabel **(****Fig. 38a****)** oder drahtlos **(****Fig. 38b****)** miteinander verbunden sind.
- **Fig. 39**: zeigt ein stark schematisiertes Blockschaltbild der in **Fig. 38** dargestellten ersten Variante eines erfindungsgemäßen Daten- verarbeitungssystems
- **Fig. 40**: zeigt eine Ansicht einer zweiten Variante eines erfindungsgemä- ßen Datenverarbeitungssystems mit einem Wearable-Rechner und einem Handteil, wobei der Handteil auch für sich allein verwendbar ist **(****Fig. 40a****)** oder drahtlos und/oder mit einem Kabel mit einem Wearable-Rechner verbunden werden kann **(****Fig. 40b****).**
- **Fig. 41**: zeigt ein stark schematisiertes Blockschaltbild der in **Fig. 39** dargestellten zweiten Variante eines erfindungsgemäßen Daten- verarbeitungssystems.
- **Fig. 42**: zeigt eine Ansicht einer dritten Variante eines erfindungsgemä- ßen Datenverarbeitungssystems mit einem Wearable-Erweite- rungsgerät und einem Handteil, wobei der Handteil auch für sich allein verwendbar ist.
- **Fig. 43**: zeigt ein stark schematisiertes Blockschaltbild der in **Fig. 42** dargestellten dritten Variante eines erfindungsgemäßen Daten- verarbeitungssystems.
- **Fig. 44**: zeigt schematisch eine erfindungsgemäße Datenverarbeitungs- einrichtung zur Auswahl und Bestellung von materiellen Gütern.
- **Fig. 45**: zeigt schematisch ein Ablaufdiagramm eines Auswähl- und Bestellvorganges mit der in **Fig. 44** dargestellten Datenverarbei- tungseinrichtung.
- **Fig. 46**: zeigt schematisch einen Ablauf gemäß dem Ablaufdiagramm aus **Fig. 45****.**
- **Fig. 47**: zeigt in den Teil-Fign. **47a** bis **47e** die Rücken- bzw. Außen- ansicht des Gehäuses verschiedener Varianten erfindungsgemä- ßer digitaler Handteile.
- **Fig. 48**: zeigt eine schematisierte Querschnittdarstellung durch ein Ge- häuse aus **Fig. 47c****.**
- **Fig. 49**: zeigt eine schematische Darstellung eine Gehäuserückenteils.
- **Fig. 50**: zeigt eine schematische Darstellung auswechselbarer Bestand- teile eines modularen Gehäuserückenteils.
- **Fig. 51**: zeigt in den Teil-Fign. **51a** bis **51c** Rückenansichten weiterer Varianten von Gehäusen erfindungsgemäßer digitaler Handteile.
- **Fig. 52**: zeigt schematisch den Vorgang des Auswechselns von bestimm- ten Rückenteilen bei modularen Gehäuserücken.
- **Fig. 53**: zeigt in den Teil-Fign. **53a** und **53b** schematisch unterschied- liche Funktionszonen bei einem modularen Gehäuse eines ein- bzw. zweiflügeligen erfindungsgemäßen digitalen Handteils.
- **Fig. 54**: zeigt in den Teil-Fign. **54a** bis **54c** verschiedene Aspekte eine modularen Gehäuses eines erfindungsgemäßen digitalen Hand- teils.

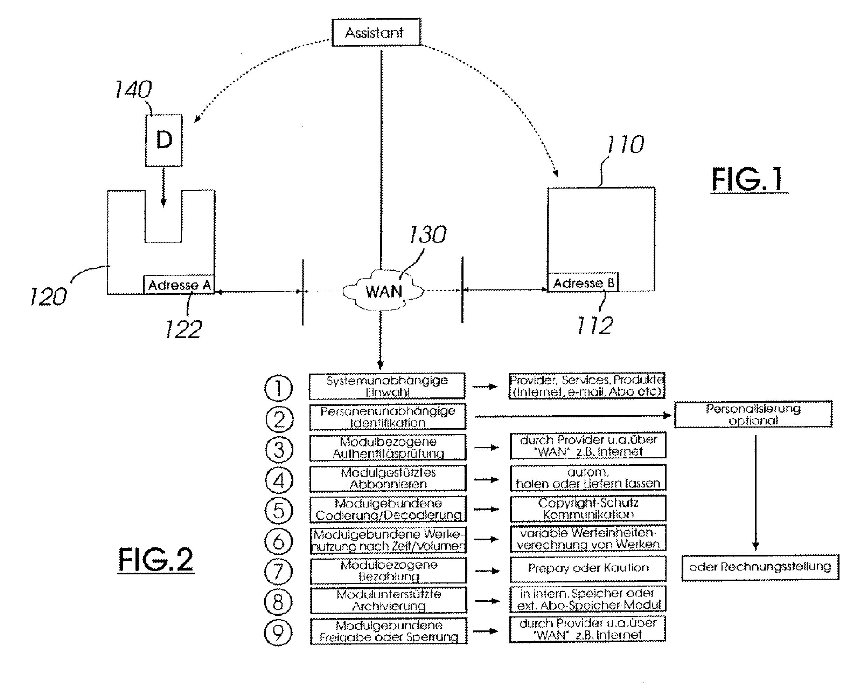

**Fig. 1** zeigt schematisch eine erfindungsgemäße vernetzte Datenverarbeitungseinrichtung mit einem Serverteil 110 und einem Clientteil 120. Der Serverteil 110 und der Clientteil 120 sind über ein als WAN (Wide Area Network) bezeichnetes Telekommunikationsnetz 130, beispielsweise über das analoge Telefonnetz, über das ISDN-Netz, über das Internet oder über einen Satellitenlink zum Austausch von Daten miteinander verbunden. Typischerweise ist dem Serverteil 110 und dem Clientteil 120 zum Zwecke des Datenaustausches über das WAN 130 jeweils eine eindeutige Adresse oder Kennung 112, 122 zugeordnet, beispielsweise eine Telefonnummer, eine Internet-Adresse oder dergleichen. Wenn der Clientteil 120 über das WAN 130 eine Verbindung zum Serverteil 110 aufbauen will, benötigt er eine Information über dessen Adresse 112. Umgekehrt benötigt der Serverteil 110 eine Information über die Adresse 122 des Clientteils 120.

Der Clientteil 120 ist eingerichtet zur Aufnahme eines mobilen Kartenmoduls 140. Das Kartenmodul 140 umfaßt mindestens eine Speichereinrichtung zur nichtflüchtigen Speicherung von Daten (nicht dargestellt) und kann über eine Datenkommunikationseinrichtung (nicht dargestellt) Daten mit dem Clientteil 120 austauschen. Das Kartenmodul kann insbesondere als Chipkarte ausgestaltet sein; es kommen aber auch andere leicht transportable Bauformen in Betracht. Grundlegende Eigenschaften von Chipkarten sind unter anderem in Wolfgang Rankl und Wolfgang Effing: "Handbuch der Chipkarten", München: Carl Hanser Verlag, 2. Auflage 1996, bekannt. Der Offenbarungsgehalt dieser Druckschrift wird durch Bezugnahme in die vorliegende Beschreibung aufgenommen.

Der Serverteil 120 ist ein Computer, der typischerweise einem kommerziellen Anbieter von Waren und/oder Dienstleistungen zugeordnet ist. Der Serverteil 120 kann beispielsweise ein über Modem oder ISDN mit dem Telefonnetz gekoppelter Rechner sein, der über eine Wählleitungsverbindung von dem Clientteil 120 aus zur Datenkommunikation angewählt werden kann. Bei einer anderen Ausführungsform ist der Serverteil 120 ein am Internet angeschlossener "World Wide Web"-Server ("WWW-Server"), der über das "Hypertext Transport Protokoll" ("HTTP-Protokoll") mit dem Clientteil 120 kommunizieren kann. bei einer weiteren Ausführungsform ist der Serverteil beispielsweise als ein am Internet angeschlossener Rechner ausgeführt, der über das "Simple Mail Transport Protocol" ("SMTP") und über das "Post Office Protokoll" ("POP") elektronische Post ("E-Mail") mit dem Clientteil 120 austauschen kann. Die Erfindung ist nicht auf bestimmte Typen von Telekommunikationsnetzen oder auf bestimmte Protokolle beschränkt; die vorstehenden Angaben dienen insoweit ausschließlich der Illustration.

**Fig. 2** zeigt eine schematische Darstellung verschiedener Aspekte bei der geschäftlichen Nutzung einer erfindungsgemäßen Datenverarbeitungseinrichtung. Das erfindungsgemäße Zusammenwirken des Kartenmoduls 140 mit dem Clientteil 120 ermöglicht dem über den Clientteil 120 auf den Serverteil 110 Zugriff nehmenden Endbenutzer (nicht dargestellt) eine vorteilhafte Abwicklung von Transaktionen.
- Aspekt (1):: Zum einen ermöglicht das Kartenmodul 140 im Zusammenwirken mit dem Clientteil 120 einen systemunabhängigen Aufbau der Kommunikationsbeziehung zum Serverteil 112, beispielsweise durch einen systemunabhängigen Einwählvorgang. Dazu werden Zugangsdaten, Zugangskonfigurationen oder Zugangsprozeduren im Speicher des Kartenmoduls 140 abgespeichert. Dies erspart dem Endbenutzer eine aufwendige Konfiguration der Zugangsdaten beispielsweise zu einem Internet-Zugangsprovider, zu einem Server für elektronische Post oder zu einem Server zur Abwicklung elektronischer Abonnements. In einer bevorzugten Variante kann der Clientteil 120 mit dem Kartenmodul 140 derart ausgestaltet sein, daß der Endbenutzer lediglich das Kartenmodul 140 in den Clientteil 120 einstecken muß, um den Aufbau einer Telekommunikationsverbindung zu einem Serverteil 110 zu initiieren. Dort, wo es angezeigt ist, kann die Initiierung des Aufbaues einer Telekommunikationsverbindung zu dem Serverteil 110 zusätzlich von der Betätigung eines Bedienelementes insbesondere am Clientteil 120 und/oder von der Eingabe einer Sicherheitsinformation, beispielsweise einer PIN, abhängig gemacht werden.
- Aspekt (2):: Das Kartenmodul 140 ermöglicht im Zusammenwirken mit dem Clientteil 120 die Unterscheidung und/oder Identifikation des Endbenutzers gegenüber dem Serverteil 110. Hierbei sind drei Fälle zu unterscheiden: Zum einen kann es Fälle geben, bei denen eine Identifikation des Endbenutzers mit Namen, Adresse usw. nicht erforderlich oder nicht wünschenswert oder gesetzlich nicht zulässig ist, bei denen aber dennoch verschiedene Endbenutzer, die jeweils über gesonderte Kartenmodule 140 verfügen, voneinander unterscheidbar sein sollen. Dies kann einerseits durch eine reine Serialisierung des Kartenmoduls 140 beispielsweise mittels einer in einen nicht überschreibbaren Speicherbereich des Kartenmoduls 140 eingeschriebenen eindeutigen, sich nie wiederholenden Seriennummer geschehen; wenn der Endbenutzer nacheinander verschiedene Kartenmodule 140 mit verschiedener Seriennummer verwendet, kann ohne zusätzliche Verknüpfungsinformationen nicht auf die Person des Endbenutzers rückgeschlossen werden. Eine dritte Variante beinhaltet eine pseudonyme Identifikation des Endbenutzers über mehrere Kartenmodule 140 hinweg, die jedoch ohne zusätzliche Informationen keinen Rückschluß auf die Identität des Endbenutzers zuläßt. Bei vorbezahlten Kartenmodulen 140 wird häufig auf eine Identifikation des Endbenutzers verzichtet werden können. Wenn eine Zahlungsabwicklung über Rechnungsstellung, Kreditkarte, Lastschrift etc. vorgesehen ist, werden in der Regel Daten zur vollen Identifizierung des Endbenutzers erforderlich sein. Ein Pseudonym ist stets dann sinnvoll, wenn der beabsichtigte Leistungstausch auch ohne Kenntnis der Identität des Endbenutzers, aber unter Berücksichtigung des Wissens, welche verschiedenen Kartenmodule 140 ein und demselben Endbenutzer zuzuordnen sind, abgewickelt werden soll (siehe auch insbesondere Aspekt 7).
- Aspekt (3):: Auch ermöglicht das Kartenmodul 140 im Zusammenwirken mit dem Clientteil 120 seine Authentikation gegenüber dem Serverteil 110, d.h., es können bestimmte Echtheitseigenschaften eines Kartenmoduls 140 vom Serverteil aus überprüft werden. Hierzu können bevorzugt bekannte kryptographische Verfahren herangezogen werden. Beispielsweise ist es möglich, in einen einbruchssicher gestalteten ("tamper-proof") nichtflüchtigen Bereich des Speichers (nicht dargestellt) des Kartenmoduls 140 einen einem bestimmten Endbenutzer zugeordneten geheimen kryptographischen Schlüssel zu speichern. Der kryptographische Schlüssel muß jedoch nicht in jedem Fall einem Endbenutzer zugeordnet sein; es ist auch möglich, mit denselben Techniken von einem autorisierten Hersteller befugterweise in den Verkehr gebrachte Kartenmodule 140 von solchen Kartenmodulen zu unterscheiden, die von unbefugten Dritten nachgemacht worden sind.
- Aspekt (4):: Ferner ermöglicht das Kartenmodul 140 im Zusammenwirken mit dem Clientteil 120 die Steuerung zeitlich wiederkehrender Transaktionen gegenüber dem Serverteil 110, insbesondere Abonnements bestimmter Leistungen.
- Aspekt (5):: Weiterhin ermöglicht das Kartenmodul 140 im Zusammenwirken mit dem Clientteil 120 eine Kartenmodulgebundene Entschlüsselung von durch den Serverteil 110 gelieferten Dateien, die beispielsweise Software, Texte und/oder multimediale Werke repräsentieren können. Dadurch läßt sich ein wirksamer technischer Schutz von Urheberrechten erreichen.
- Aspekt (6):: Das Kartenmodul 140 ermöglicht im Zusammenwirken mit dem Clientteil 140 ferner eine nach Zeittakt bemessene Nutzung von durch den Serverteil 110 gelieferten Dateien, die beispielsweise multimediale Werke repräsentieren können. Dadurch kann eine technische Infrastruktur zur nutzungszeitabhängigen Berechnung von Urheberrechten realisiert werden (siehe auch insbesondere Aspekt 7).
- Aspekt (7):: Auch ermöglicht das Kartenmodul 140 im Zusammenwirken mit dem Clientteil 120 die Abwicklung von Zahlungsvorgängen gegenüber dem Serverteil 110 beispielsweise durch Übertragung von Kreditkartennummern oder digitalen Wertzeichen ("Digital Cash"). Dabei sind verschiedene Alternativen zu unterscheiden: Zum einen kann ein in den Verkehr gebrachtes Kartenmodul 140 ein vorbestimmtes vorbezahltes Guthaben verkörpern, das durch ein entsprechendes, in dem Speicher (nicht dargestellt) des Kartenmoduls abgespeichertes vorbestimmtes Datenelement repräsentiert wird. Zum anderen kann die Zahlung personenbezogen durch Rechnungsstellung, Kreditkarte oder Lastschrift erfolgen, wobei die notwendigen Angaben zur Identität und die Zahlungsverkehrsdaten (Kontonummer, Kreditkartennummer, Rechnungsadresse etc.) in dem Speicher (nicht dargestellt) des Kartenmoduls 140 abgespeichert sind. Für beide Fälle ist es vorteilhaft, die Authentizität des Kartenmoduls 140 und der in seinem Speicher abgelegten Datenelemente mit einer von der befugten ausgebenden Stelle erzeugten digitalen Signatur abzusichern. Unabhängig von der vorstehenden Unterscheidung zwischen vorbezahltem Guthaben und laufender Abrechnung besteht eine Alternative zwischen einem Erwerb von Dateien nach dem Prinzip des Kaufes, d.h. nach einmaliger Entrichtung eines Kaufpreises besteht eine zeitlich unbeschränkte Nutzungsmöglichkeit, und einer Abrechnung nach Nutzungsintensität, vorzugsweise gemessen an der Nutzungszeit oder an dem Volumen tatsächlich genutzter Daten einer Datei. Schließlich besteht eine weitere unabhängige Alternative zwischen Kartenmodulen 140, die bereits zu dem Zeitpunkt, in dem sie in den Verkehr gebracht werden, mit allen erforderlichen abrechnungsbezogenen Datenelementen versehen sind, und solchen Kartenmodulen 140, bei denen die abrechnungsbezogenen Datenelemente erst nach der Abgabe an den Endbenutzer von dem Serverteil 110 zum Speicher (nicht dargestellt) des Kartenmoduls 140 übertragen werden. Die aus der Kombination dieser drei Alternativen herrührenden acht Einzelfälle bedingen jeweils eine bestimmte technische Ausgestaltung des Kartenmoduls und seiner Interaktion im Rahmen der erfindungsgemäßen Lösung.
- Aspekt (8):: Wenn das Kartenmodul 140 mit genügend Speicherkapazität beispielsweise in Gestalt von sog. Flash-Speicher ausgestattet ist, können Dateien, die beispielsweise Programme für Datenverarbeitungsanlagen, Texte oder multimediale Werke repräsentieren, in dem Kartenmodul zeitweise oder dauernd abgelegt werden. Dadurch wird insbesondere die technische Realisierung von bereits in Aspekt (4) angesprochenen Systemen zum automatisierten periodischen Bezug von Software, Texte und/oder multimediale Werke repräsentierenden und durch den Serverteil 110 distributierten Dateien verbessert.
- Aspekt (9):: Schließlich kann das Kartenmodul 140 im Zusammenwirken mit dem Clientteil 120 dazu herangezogen werden, bestimmte Funktionalitäten durch den Serverteil 110 telematisch freizugeben oder zu sperren.

Bei einer erfindungsgemäßen Datenverarbeitungseinrichtung müssen nicht alle Aspekte gleichzeitig verwirklicht sein.

Die im folgenden beschriebenen Ausführungsbeispiele und deren Varianten machen zum Teil Gebrauch von bestimmten kryptographischen Techniken wie beispielsweise asymmetrischer Kryptographie und digitalen Signaturen. Eine Einführung in die angewandte Kryptographie findet sich beispielsweise in: Bruce Schneier: "Applied Cryptography", New York: John Wiley & Sons, Inc., 1994. Der Offenbarungsgehalt dieser Druckschrift wird durch Bezugnahme in die vorliegende Beschreibung aufgenommen.

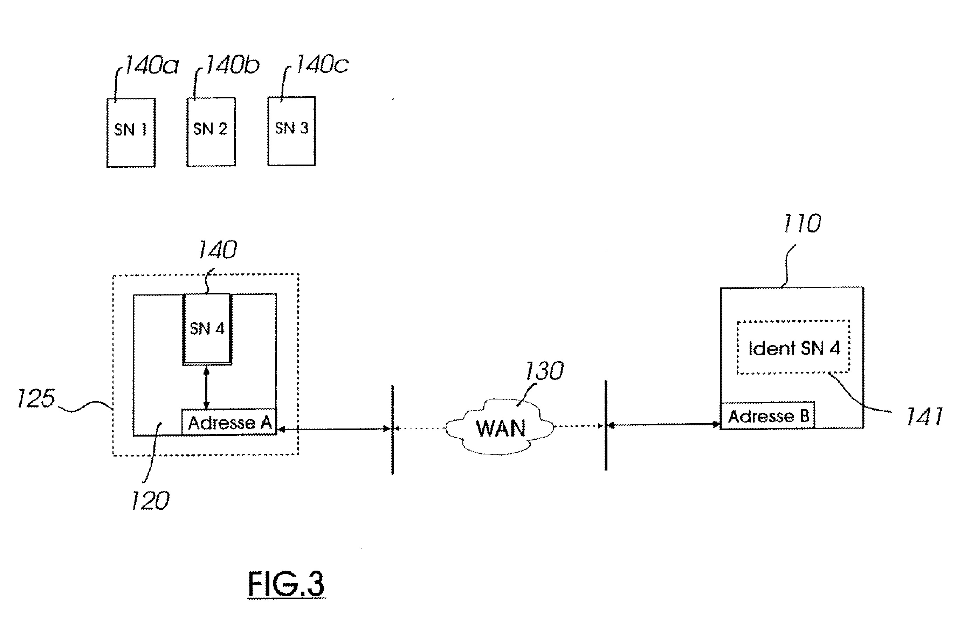

**Fig. 3** zeigt eine erste Applikation der Erfindung anhand einer schematischen Darstellung einer erfindungsgemäßen Datenvararbeitungseinrichtung. Wie bereits in **Fig. 1** dargestellt, ist ein Clientteil 120 über ein WAN 130 mit einem Serverteil 110 verbunden. Der Clientteil 120 ist mit einer nur schematisch dargestellten Anzeigeeinrichtung 125 versehen. Das von dem Clientteil aufgenommene Kartenmodul 140 identifiziert einen bestimmten Endbenutzer (nicht dargestellt), dem das Kartenmodul 140 zugeordnet ist, persönlich oder pseudonym. In dem Kartenmodul 140 ist insbesondere eine Identitätsinformation 141 abgespeichert, die über das WAN 130 zum Serverteil 110 übertragbar ist. Die Identitätsinformation 141 kann auf Seiten des Clientteils 120 auf übliche Weise beispielsweise durch eine PIN oder durch biometrische Identitätsdetektionsvorrichtungen (nicht dargestellt) zusätzlich gesichert sein. Neben dem Kartenmodul 140 können andere Kartenmodule 140a, 140b, 140c existieren, die jeweils den Identitäten SN1, SN2 bzw. SN3 zugeordnet sind. Wenn das zur Identität SN4 141 gehörende Kartenmodul 140 gegen eines der anderen Kartenmodule 140a, 140b, 140c ausgetauscht wird, kann die jeweilige zugeordnete Identitätsinformation SN1, SN2 bzw. SN3 an den Serverteil 110 übertragen werden. Die in **Fig. 3** dargestellte erste Applikation der Erfindung ist vor allem dann von Bedeutung, wenn ein handelndes Subjekt beispielsweise in seiner Eigenschaft als Vertragspartner auf Seiten des Serverteils 110 mindestens unterscheidbar oder aber unmittelbar oder über ein Pseudonym identifizierbar sein soll.

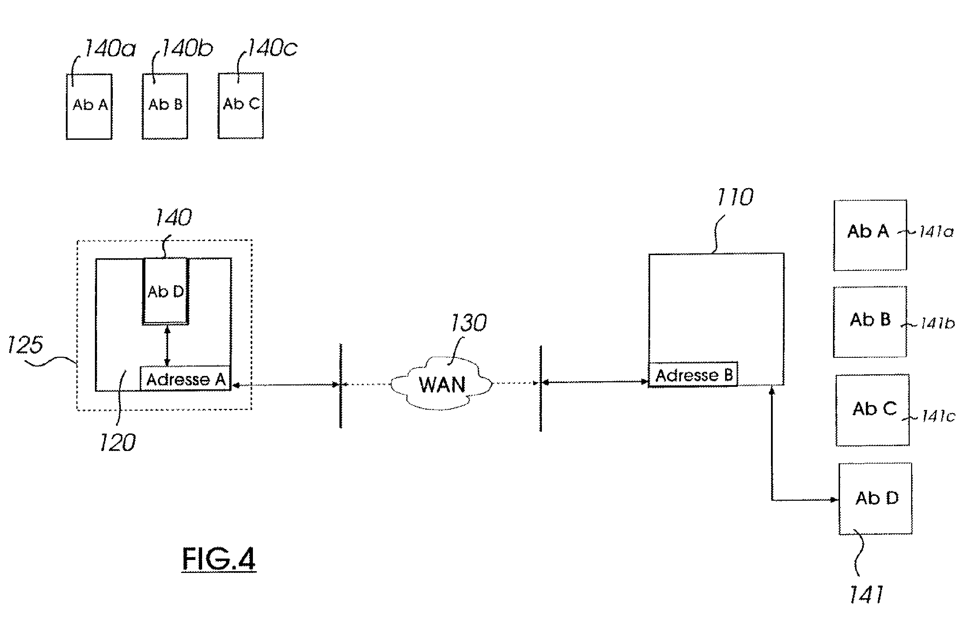

**Fig. 4** zeigt eine zweite Applikation der Erfindung anhand einer schematischen Darstellung einer erfindungsgemäßen Datenvararbeitungseinrichtung. Wie bereits in **Fig. 1** dargestellt, ist ein Clientteil 120 über ein WAN 130 mit einem Serverteil 110 verbunden. Der Clientteil 120 ist mit einer nur schematisch dargestellten Anzeigeeinrichtung 125 versehen. Das von dem Clientteil aufgenommene Kartenmodul 140 kann insbesondere über ein vorbestimmtes Datenelement ein bestimmtes Vertragsverhältnis AbD 141 identifizieren, das im vorliegenden Beispiel die regelmäßige Lieferung (Abonnement) eines digitalen Multimediaerzeugnisses beinhaltet. Neben dem Kartenmodul 140 können andere Kartenmodule 140a, 140b, 140c existieren, die jeweils den Vertragsverhältnissen AbA, AbB bzw. AbC (141a, 141b, 141c) zugeordnet sind. Wenn das zum Vertragsverhältnis 141 gehörende Kartenmodul 140 gegen eines der anderen Kartenmodule 140a, 140b, 140c ausgetauscht wird, kann die jeweilige zugeordnete Vertragsverhältnisinformation 141a, 141b bzw. 141c an den Serverteil 110 übertragen werden. Die jeweilige Vertragsverhältnisinformation 141, 141a, 141b, 141c ist eine Kenngröße, die einen automatischen Selektionsvorgang hinsichtlich der von dem Serverteil 110 auf den Clientteil 120 zu übertragenden und eine multimediale Darstellung repräsentierende Datei (nicht dargestellt) sowie hinsichtlich des Übertragungszeitpunktes steuert.

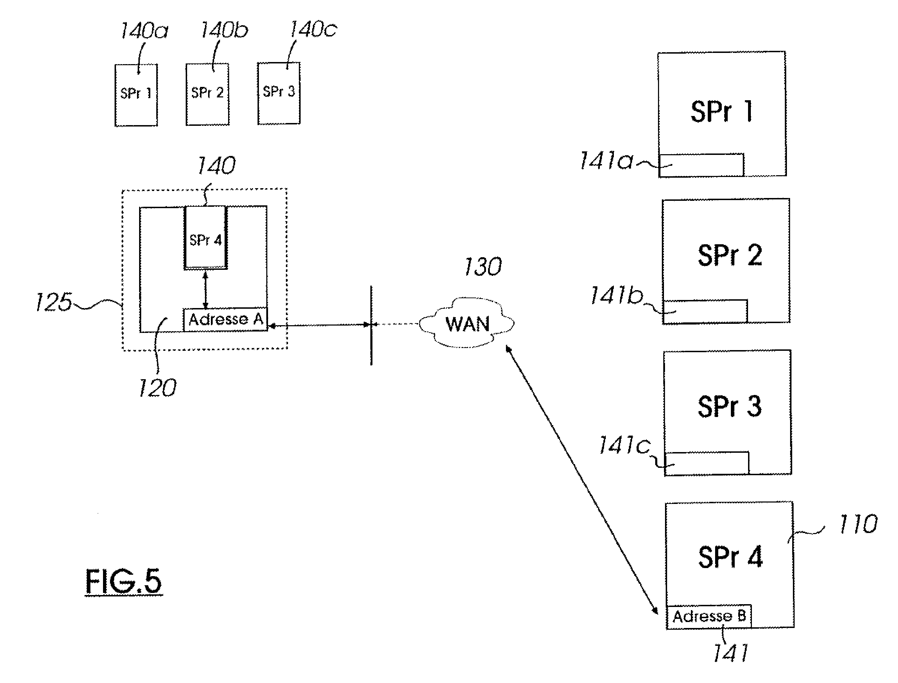

**Fig. 5** zeigt eine vierte Applikation der Erfindung anhand einer schematischen Darstellung einer erfindungsgemäßen Datenvararbeitungseinrichtung. Wie bereits in **Fig. 1** dargestellt, ist ein Clientteil 120 über ein WAN 130 mit einem Serverteil 110 verbunden. Der Clientteil 120 ist mit einer nur schematisch dargestellten Anzeigeeinrichtung 125 versehen. Das von dem Clientteil aufgenommene Kartenmodul 140 identifiziert insbesondere einen bestimmten Serverteil 110, der beispielsweise einem zugehörigen bestimmten Diensteanbieter SPr4 zugeordnet sein kann. Neben dem Kartenmodul 140 können andere Kartenmodule 140a, 140b, 140c existieren, die jeweils den Diensteanbietern SPr1, SPr2 bzw. SPr3 (141a, 141b, 141c) zugeordnet sind. Wenn das zum Diensteanbieter 141 gehörende Kartenmodul 140 gegen eines der anderen Kartenmodule 140a, 140b, 140c ausgetauscht wird, kann die jeweilige zugeordnete Diensteanbieterinformation 141a, 141b bzw. 141c an den Serverteil 110 übertragen werden. Die jeweilige Diensteanbieterinformation 141, 141a, 141b, 141c ist eine Kenngröße, die insbesondere einen automatischen Selektionsvorgang hinsichtlich der von dem Clientteil 120 Datenübertragungsparameter bewirkt, so daß eine automatische Initiierung eines Datenaustausches zwischen Clientteil 120 und Serverteil 110 ermöglicht wird.

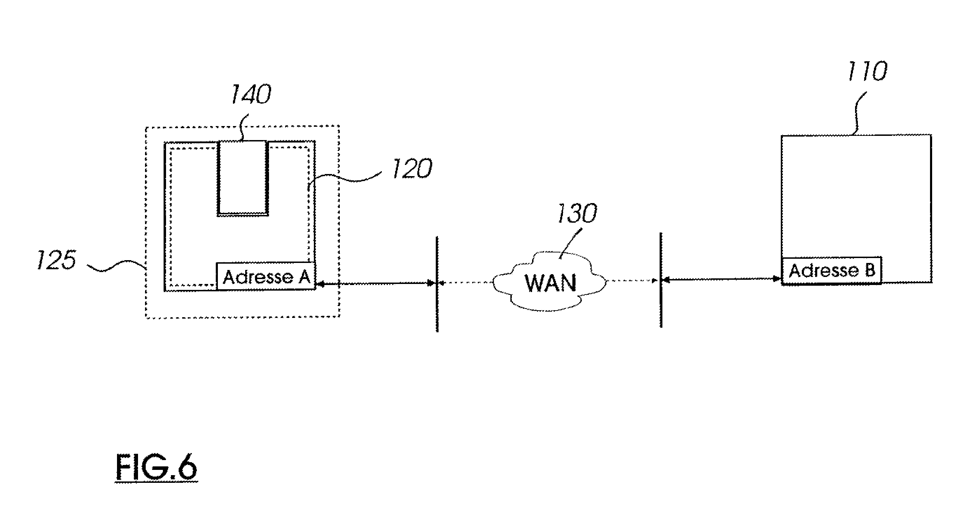

**Fig. 6** zeigt eine erste Variante einer Ausführungsform der in **Fig. 1** dargestellten erfindungsgemäßen Lösung. Wie bereits in **Fig. 1** dargestellt, ist ein zur Aufnahme eines Kartenmoduls 140 eingerichtetes Clientteil 120 über ein WAN 130 mit einem Serverteil 110 verbunden. Der Clientteil 120 ist mit einer nur schematisch dargestellten Anzeigeeinrichtung 125 versehen. **Fig. 6** zeigt somit eine Lösung, bei der der zur Aufnahme eines Kartenmoduls 140 eingerichtete Clientteil 120 und die Anzeigeeinrichtung 125 ein mechanisch im wesentlichen einstückig ausgeführtes Gerät bilden.

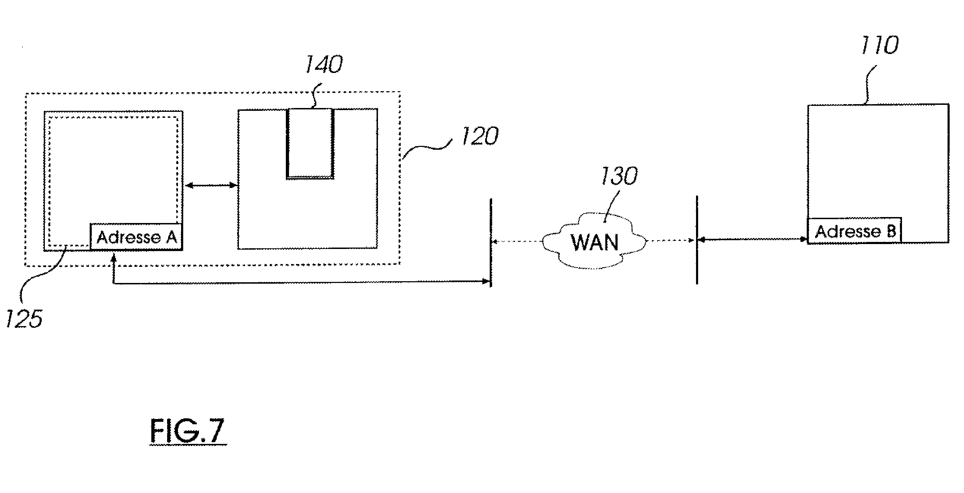

**Fig. 7** zeigt eine zweite Variante einer Ausführungsform der in **Fig. 1** dargestellten erfindungsgemäßen Lösung. Wie bereits in **Fig. 1** dargestellt, ist ein zur Aufnahme eines Kartenmoduls 140 eingerichteter Clientteil 120 vorgesehen. Der Clientteil 120 ist über eine Datenkommunikationseinrichtung 123 mit einer nur schematisch dargestellten Anzeigeeinrichtung 125 gekoppelt, welche über ein WAN 130 mit einem Serverteil 110 verbunden ist. **Fig. 7** zeigt somit eine Lösung, bei der der zur Aufnahme eines Kartenmoduls 140 eingerichtete Clientteil 120 einerseits und die mit dem WAN 130 verbundene Anzeigeeinrichtung 125 andererseits je für sich ein mechanisch im wesentlichen einstückig ausgeführtes Gerät bilden, wobei der Datenaustausch zwischen dem Clientteil 120 und dem Anzeigeteil 125 durch die Datenkommunikationseinrichtung 123 erfolgt. Als technische Realisierungen für die Datenkommunikationseinrichtung kommen drahtlose und drahtgebundene Vorrichtungen Verfahren in Betracht, insbesondere per Datenübertragungskabel (nicht dargestellt), per Funk (nicht dargestellt) oder per Infrarot, z.B IRDA (nicht dargestellt).

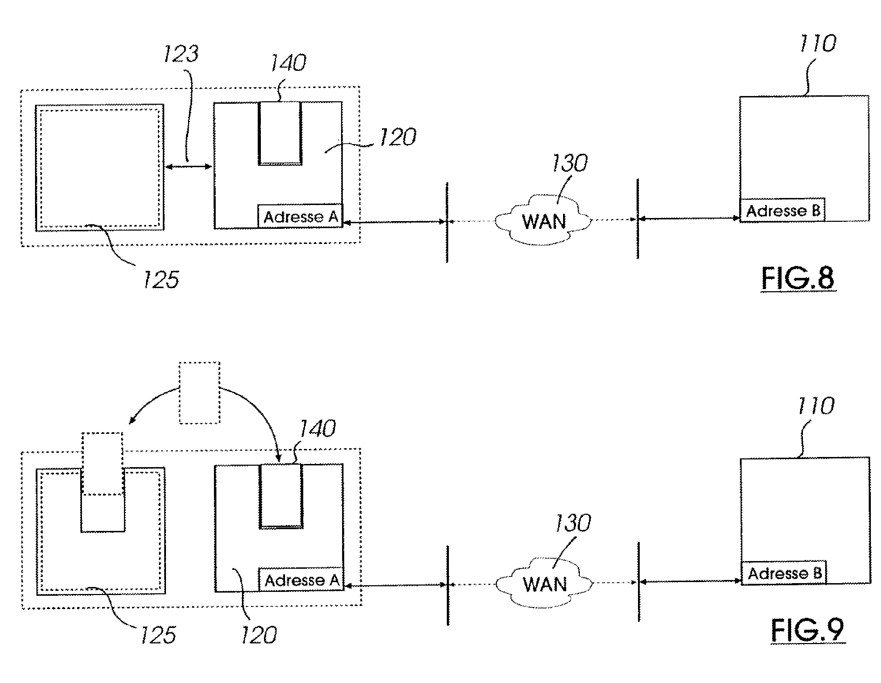

**Fig. 8** zeigt eine dritte Variante einer Ausführungsform der in **Fig. 1** dargestellten erfindungsgemäßen Lösung. Wie bereits in **Fig. 1** dargestellt, ist ein zur Aufnahme eines Kartenmoduls 140 eingerichteter Clientteil 120 vorgesehen, welcher über ein WAN 130 mit einem Serverteil 110 verbunden ist. Der Clientteil 120 ist über eine Datenkommunikationseinrichtung 123 mit einer nur schematisch dargestellten Anzeigeeinrichtung 125 gekoppelt. **Fig. 8** zeigt somit eine Lösung, bei der der zur Aufnahme eines Kartenmoduls 140 eingerichtete und mit dem WAN 130 verbundene Clientteil 120 einerseits und die Anzeigeeinrichtung 125 andererseits je für sich ein mechanisch im wesentlichen einstückig ausgeführtes Gerät bilden, wobei der Datenaustausch zwischen dem Clientteil 120 und dem Anzeigeteil 125 durch die Datenkommunikationseinrichtung 123 erfolgt. Als technische Realisierungen für die Datenkommunikationseinrichtung kommen drahtlose und drahtgebundene Vorrichtungen Verfahren in Betracht, insbesondere per Datenübertragungskabel (nicht dargestellt), per Funk (nicht dargestellt) oder per Infrarot, z.B IRDA (nicht dargestellt).

**Fig. 9** zeigt eine vierte Variante einer Ausführungsform der in **Fig. 1** dargestellten erfindungsgemäßen Lösung. Wie bereits in **Fig. 1** dargestellt, ist ein zur Aufnahme mindestens eines Kartenmoduls 140 eingerichteter Clientteil 120 vorgesehen, welcher über ein WAN 130 mit einem Serverteil 110 verbunden ist. Neben dem Clientteil 120 existiert eine nur schematisch dargestellte Anzeigeeinrichtung 125, welche ebenfalls zur Aufnahme mindestens eines Kartenmoduls 140 eingerichtet ist. **Fig. 9** zeigt somit eine Lösung, bei der der zur Aufnahme eines Kartenmoduls 140 eingerichtete und mit dem WAN 130 verbundene Clientteil 120 einerseits und die Anzeigeeinrichtung 125 andererseits je für sich ein Gerät bilden, das mechanisch im wesentlichen einstückig ausgeführt sein kann, wobei der Datenaustausch zwischen dem Clientteil 120 und dem Anzeigeteil 125 durch Umstecken des Kartenmoduls 140 erfolgt. Beispielsweise kann das Kartenmodul 140 zum Abspeichern von durch den Serverteil 110 gelieferten Daten in dem Clientteil 140 aufgenommen werden. Nachdem die betreffenden Daten in dem Kartenmodul 140 abgespeichert worden sind, können diese Daten durch Umstecken des Kartenmoduls in die Anzeigeeinrichtung wahrnehmbar gemacht werden. Umgekehrt ist es auch möglich, beispielsweise Bestellvorgänge betreffende Daten in das Kartenmodul 140 einzuspeichern, wenn es von der Anzeigeeinrichtung 125 aufgenommen worden ist. Diese Bestelldaten können nach dem Umstecken des Kartenmoduls 140 in den Clientteil 140 über das WAN 130 dem Serverteil 110 zugeleitet werden.

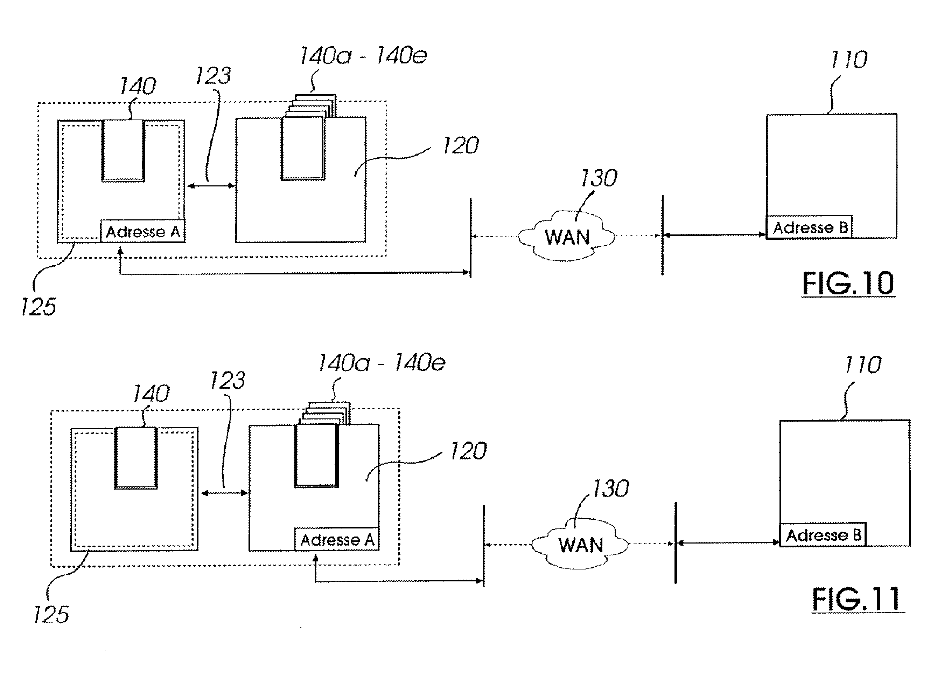

**Fig. 10** zeigt eine fünfte Variante einer Ausführungsform der in **Fig. 1** dargestellten erfindungsgemäßen Lösung. Wie bereits in **Fig. 1** dargestellt, ist ein zur Aufnahme eines Kartenmoduls 140 eingerichteter Clientteil 120 vorgesehen. Der Clientteil 120 ist über eine Datenkommunikationseinrichtung 123 mit einer nur schematisch dargestellten Anzeigeeinrichtung 125 gekoppelt, welche über ein WAN 130 mit einem Serverteil 110 verbunden ist. **Fig. 10** zeigt somit eine Lösung, bei der der zur Aufnahme eines Kartenmoduls 140 eingerichtete Clientteil 120 einerseits und die mit dem WAN 130 verbundene Anzeigeeinrichtung 125 andererseits je für sich ein mechanisch im wesentlichen einstückig ausgeführtes Gerät bilden, wobei der Datenaustausch zwischen dem Clientteil 120 und dem Anzeigeteil 125 durch die Datenkommunikationseinrichtung 123 erfolgt. Als technische Realisierungen für die Datenkommunikationseinrichtung kommen drahtlose und drahtgebundene Vorrichtungen Verfahren in Betracht, insbesondere per Datenübertragungskabel (nicht dargestellt), per Funk (nicht dargestellt) oder per Infrarot, z.B IRDA (nicht dargestellt).

Der in **Fig. 10** dargestellte Clientteil 120 ist zur Aufnahme einer Mehrzahl von Kartenmodulen 140a-140e eingerichtet, die mittels der auf ihnen gespeicherten Kartenmoduldaten (nicht dargestellt) jeweils unabhängig voneinander Kommunikationsvorgänge mit dem Serverteil 110 initiieren und steuern können und die bei von dem Serverteil 110 initiierten Kommunikatiuonsvorgängen aus der Sicht des Serverteils 110 unabhängig voneinander adressierbar sind. Beispielsweise kann mindestens eines der Kartenmodule 140a-140e als Bestandteil eines in **Fig. 4** dargestellten Systems wirken, d.h. ein Kartenmodul oder mehrere Kartenmodule dienen als Speicher für regelmäßig, aber asynchron bezüglich Bedienhandlungen des Benutzers digital durch den Serverteil 110 via das WAN 130 gelieferter digitaler Multimediaerzeugnisse.

Die Besonderheit der in **Fig. 10** dargestellten Anordnung gegenüber der in **Fig. 7** dargestellten Anordnung besteht insbesondere darin, daß ein Master-Kartenmodul 140 vorgesehen ist, mit welchem die Anzeigeeinrichtung 125 sich in einer besonderen Weise gegenüber dem Clientteil 120 bzw. den darin eingesetzten übrigen Kartenmodulen 140a-140e identifizieren und authentisieren kann. Beispielsweise kann das Master-Kartenmodul 140 in ein als Anzeigeeinrichtung 125 verwendetes digitales Buch eingesetzt werden. Durch das Master-Kartenmodul 140 wird dann das digitale Buch derart eingerichtet, daß über die Datenkommunikationseinrichtung 123 gegenüber dem Clientteil bzw. den darin eingesetzten weiteren Kartenmodulen 140a-140e bestimmte priviligierte Bedienvorgänge durch den Benutzer vorgenommen werden können, beispielsweise das Freischalten oder Sperren des Clientteils 120 für Lieferungen durch den Serverteil 110 oder das Vornehmen von Bestellvorgängen gegenüber dem Serverteil 110. Dazu wird die Datenkommunikation über die Datenkommunikationseinrichtung 123 bevorzugt durch geeignete Techniken, insbesondere kryptographische Techniken, gegen Anzapfen und Manipulation gesichert.

**Fig. 11** zeigt eine sechste Variante einer Ausführungsform der in **Fig. 1** dargestellten erfindungsgemäßen Lösung. Wie bereits in **Fig. 1** dargestellt, ist ein zur Aufnahme eines Kartenmoduls 140 eingerichteter Clientteil 120 vorgesehen, welcher über ein WAN 130 mit einem Serverteil 110 verbunden ist. Der Clientteil 120 ist über eine Datenkommunikationseinrichtung 123 mit einer nur schematisch dargestellten Anzeigeeinrichtung 125 gekoppelt. Auch **Fig. 10** zeigt somit eine Lösung, bei der der zur Aufnahme mindestens eines Kartenmoduls 140 eingerichtete Clientteil 120 einerseits und die mit dem WAN 130 verbundene Anzeigeeinrichtung 125 andererseits je für sich ein mechanisch im wesentlichen einstückig ausgeführtes Gerät bilden, wobei der Datenaustausch zwischen dem Clientteil 120 und dem Anzeigeteil 125 durch die Datenkommunikationseinrichtung 123 erfolgt. Die Besonderheit der in **Fig. 10** dargestellten Anordnung gegenüber der in **Fig. 7** dargestellten Anordnung besteht insbesondere darin, daß der Clientteil 120 wie auch bei dem in **Fig. 10** dargestellten Fall zur Aufnahme einer Mehrzahl von Kartenmodulen 140a-140e eingerichtet ist, die mittels der auf ihnen gespeicherten Kartenmoduldaten (nicht dargestellt) jeweils unabhängig voneinander Kommunikationsvorgänge mit dem Serverteil 110 initiieren und steuern können und die bei von dem Serverteil 110 initiierten Kommunikatiuonsvorgängen aus der Sicht des Serverteils 110 unabhängig voneinander adressierbar sind. Beispielsweise kann mindestens eines der Kartenmodule 140a-140e als Bestandteil eines in **Fig. 4** dargestellten Systems wirken, d.h. ein Kartenmodul oder mehrere Kartenmodule dienen als Speicher für regelmäßig, aber asynchron bezüglich Bedienhandlungen des Benutzers digital durch den Serverteil 110 via das WAN 130 gelieferter digitaler Multimediaerzeugnisse.

Bei der in **Fig. 11** dargestellten Variante erweist es sich als besonders vorteilhaft, den Clientteil 120 als eine stationäre Kartenmodulstation zu realisieren, die im wesentlichen ständig mit dem WAN 130 verbunden ist und somit stets Datenkommunikationsvorgänge gegenüber dem Serverteil 110 initiieren kann und darüber hinaus von dem Serverteil 110 initiierte Datenkommunikationsvorgänge asynchron zu Benutzungshandlungen des Benutzers entgegennehmen kann, auch wenn die Anzeigevorrichtung 125 als mobiles Gerät ausgeführt ist, das der Benutzer auch bei Ortsabwesenheit mit sich führt.

Sowohl hinsichtlich der in **Fig. 10** dargestellten Variante als auch hinsichtlich der in **Fig. 11** dargestellten Variante kann es sich als vorteilhaft erweisen, die Anzeigeeinrichtung 125 zur Aufnahme mindestens eines Kartenmoduls 140 auszubilden, so daß durch Umstecken eines Kartenmoduls der in **Fig. 9** dargestellte Nutzungsmodus genutzt werden kann.

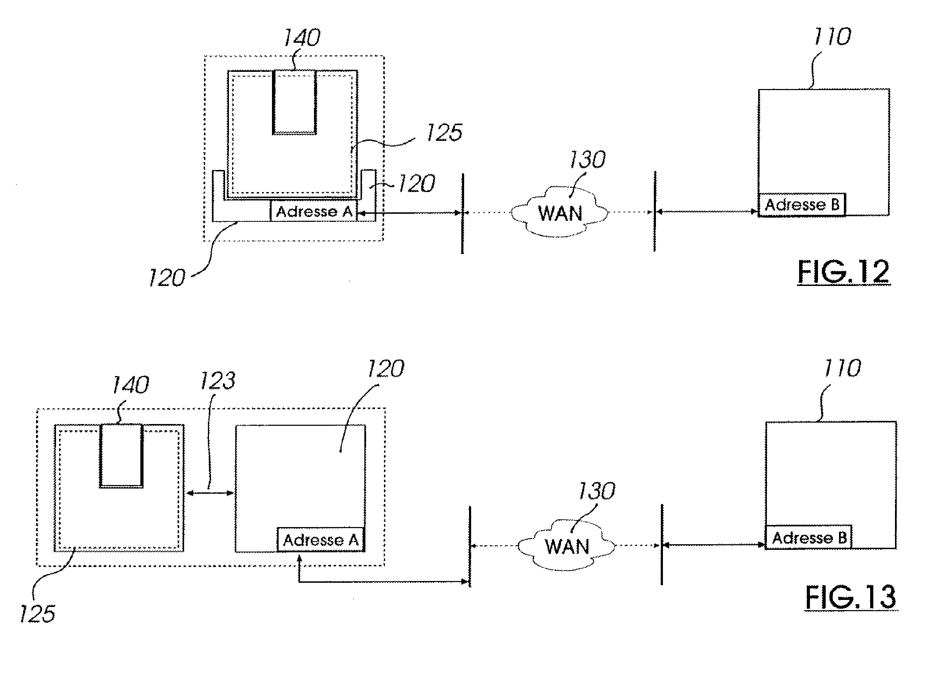

Während bei den in den **Fign. 6** bis **11** dargestellten Varianten der Clientteil 120 zur Aufnahme mindestens eines Kartenmoduls 140 eingerichtet ist, zeigen die **Fign. 12** und **13** jeweils eine Variante, bei der ein Clientteil 120 ohne eigenes Kartenmodul zum Einsatz gelangt. **Fig. 13** zeigt ein Clientteil 120, das zur Aufnahme einer kompletten Anzeigeeinrichtung 125 eingerichtet ist, wobei die Anzeigeeinrichtung 125 wiederum zur Aufnahme von mindestens einem Kartenmodul 140 eingerichtet ist. Eine Datenkommunikation zwischen Serverteil 110 und Kartenmodul 140 läuft ein einer Weise ab, bei der die ausgetauschten Daten mittels geeigneter elektronischer Vorkehrungen durch die Anzeigeeinrichtung 125 hindurchgereicht werden. Freilich ist es nicht zwingend erforderlich, daß der Clientteil 120 zur Aufnahme einer kompletten Anzeigeeinrichtung 125 eingerichtet ist. Der Datenaustausch zwischen Clientteil 120 einerseits und zur Aufnahme mindestens eines Kartenmoduls 140 vorbereiteter Anzeigeeinrichtung 125 andererseits kann beispielsweise auch wie in **Fig. 13** dargestellt mittels einer Datenkommunikationseinrichtung 123 realisiert werden. Als technische Realisierungen für die Datenkommunikationseinrichtung kommen drahtlose und drahtgebundene Vorrichtungen Verfahren in Betracht, insbesondere per Datenübernagungskabel (nicht dargestellt), per Funk (nicht dargestellt) oder per Infrarot, z.B IRDA (nicht dargestellt).

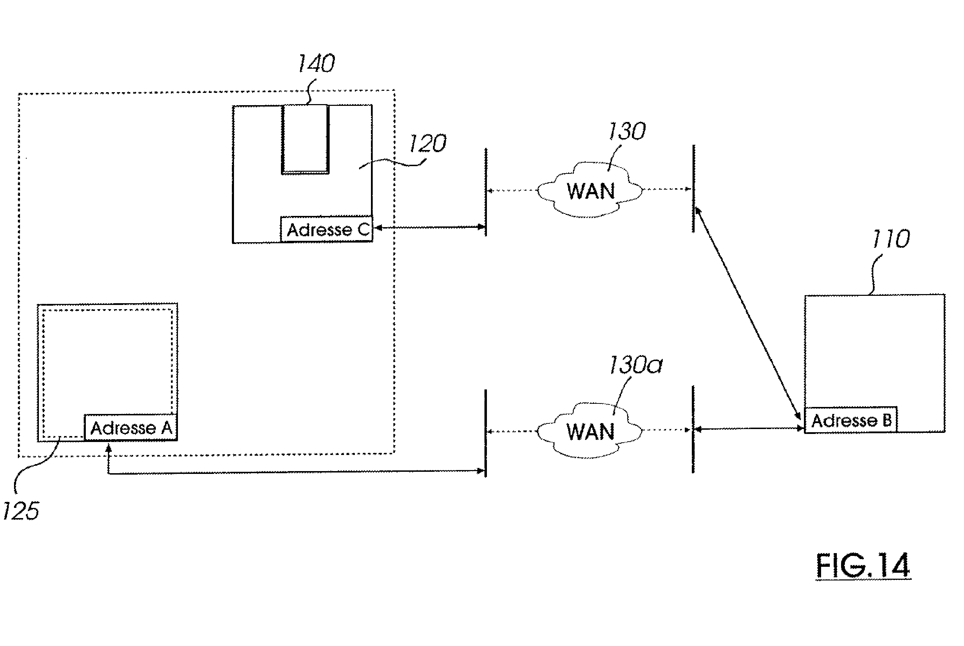

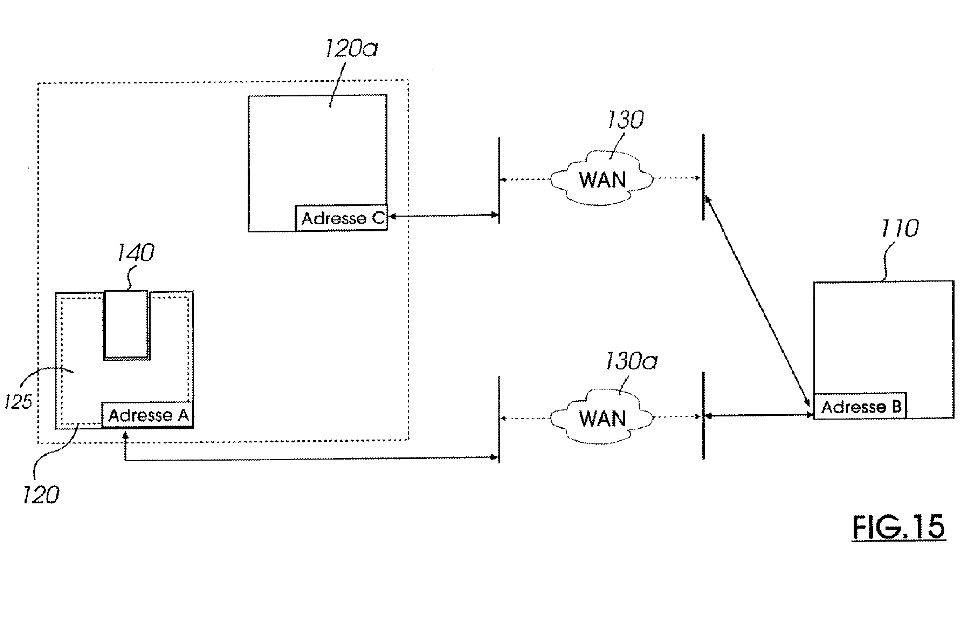

**Fign. 14** und **15** zeigen weitere Varianten einer Ausführungsform der in **Fig. 1** dargestellten erfindungsgemäßen Lösung. Wie bereits in **Fig. 1** dargestellt, ist auch in **Fig. 14** ein zur Aufnahme eines Kartenmoduls 140 eingerichteter Clientteil 120 vorgesehen, welcher über ein WAN 130 mit einem Serverteil 110 verbunden ist. Eine Anzeigeeinrichtung 125 ist ebenfalls mit dem WAN 130a verbunden. Das WAN 130 kann mit dem WAN 130a identisch sein. Eine über die Anzeigeeinrichtung 125 ausgelöste und über das WAN 130a übertragene Interaktion mit dem Serverteil 110 führt zur Übertragung von multimedialen Daten von Server 110 über das WAN 130 zum Clientteil 120. Dadurch kann der Benutzer (nicht dargestellt) beispielsweise von unterwegs beim Serverteil 110 Daten abrufen, die über das WAn 130 zu dem beispielsweise zu hause aufgestellten Clientteil 120 übertragen werden.

**Fig. 15** zeigt eine Variante, bei der der Clientteil 120 mit einer Anzeigeeinrichtung 125 versehen ist. Die Übertragung der beim Serverteil 110 abgerufenen Daten (nicht dargestellt) erfolgt über das WAN 130 zu einem Sekundär-Clientteil 120a.

Jede der in den **Fign. 3** bis **5** dargestellten Applikationsmodi der Erfindung kann grundsätzlich mit jeder der in den **Fign. 6** bis **15** dargestellten Varianten realisiert werden.

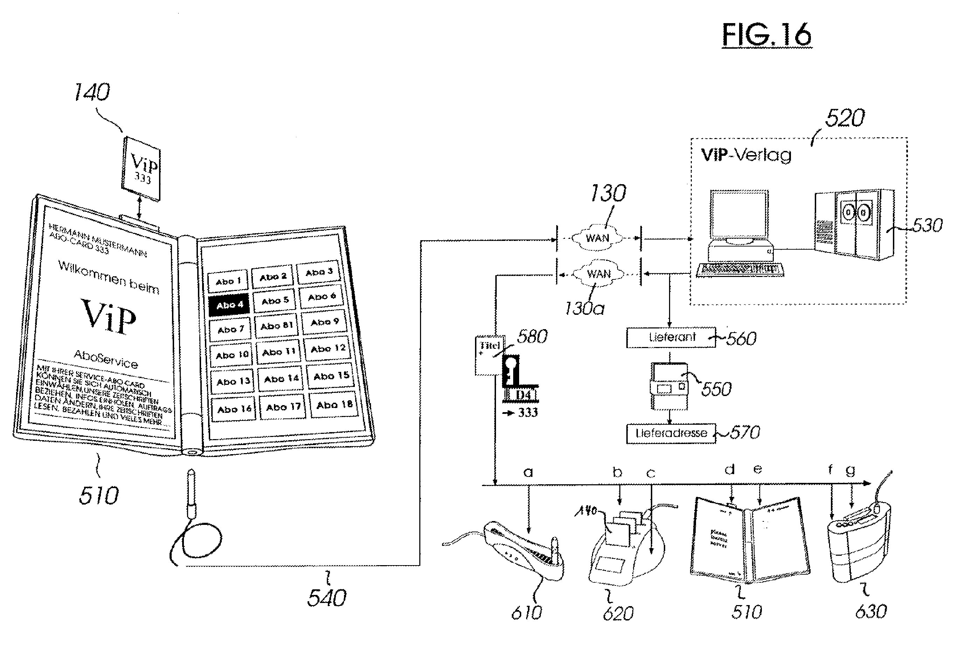

**Fig. 16** zeigt schematisch eine erste Ausführungsform der erfindungsgemäßen Lösung. Ein digitales Buch 510 ist mit einer Aufnahmevorrichtung (nicht dargestellt) für ein Kartenmodul 140 versehen. Ein digitales Buch der dargestellten Art ist beispielsweise in WO-A1-99/15982 offenbart; auf den Offenbarungsgehalt dieser Druckschrift wird ausdrücklich Bezug genommen. Durch das Einstecken des Kartenmoduls 140 wird das digitale Buch 510 durch auf dem Kartenmodul 140 gespeicherte Daten gesteuert.

Bei dem in **Fig. 16** dargestellten Fall gelangt nach dem Einstecken des Kartenmoduls 140 in das digitale Buch 510 ein beispielsweise im Kartenmodul 140 abgespeicherter oder aufgrund von im Kartenmodul 140 gespeicherten Verknüpfungsinformationen seitens des Serverteils 530 gelieferter Katalog verschiedener Möglichkeiten zur Anzeige, sich Printmedien oder digitale Multimediaprodukte regelmäßig von einem Diensteanbieter 520 zusenden zu lassen. Der Benutzer (nicht dargestellt) hat dann die Möglichkeit, beispielsweise über eine Betätigung des Touchscreens des digitalen Buches 510 eine Alternative auszuwählen und seinen Willen zu bekunden, zukünftig regelmäßig in einer vorbestimmten Art und Weise beliefert zu werden. Dabei legt der Benutzer alle erforderlichen Daten hinsichtlich des beabsichtigten Geschäftes wie Art, Umfang, Lieferweg und Zahlungsmodalität, fest.

Die das beabsichtigte Geschäft beschreibenden Daten werden sodann über das WAN 130 zu einem Server 530 des Diensteanbieters 520 übertragen. Hierzu kann das digitale Buch 510 beispielsweise mit einem internen Modem (nicht dargestellt) versehen sein, das über ein Anschlußkabel 540 mit dem als WAN 130 fungierenden öffentlichen Telefonnetz verbunden ist, wobei die Daten bis zum Server 530 direkt über Telefonleitungen geführt werden. Alternativ kann es vorteilhaft sein, über das Anschlußkabel 540 eine Verbindung in das Internet, beispielsweise über einen zwischengeschalteten Access-Provider (nicht dargestellt), zu schaffen, wobei der Server 530 dann ebenfalls eine Verbindung zum Internet aufweisen muß. Auch andere Datenkommunikationswege sind geeignet; beispielsweise kann das digitale Buch 510 über das Anschlußkabel 540 oder über eine IRDA-Verbindung mit einem Mobiltelefon anstatt mit dem Telefon-Festnetz gekoppelt sein.

Nachdem die das beabsichtigte Geschäft beschreibenden Daten über das WAN 130 zum Server 530 des Diensteanbieters 520 übertragen worden sind, kann eine Rückmeldung mit Bestätigungsdaten vom Server 530 auf demselben oder einem anderen Weg vorgesehen sein. Dieser Datenaustausch kann sich in Abhängigkeit von den technischen und rechtlichen Gegebenheiten sooft wiederholen, bis der vollzogene Datenaustausch einen vollzogenen Geschäftsabschluß repräsentiert.

Nach dem Abschluß dieser Geschäftsabschlußphase kann die Verbindung zwischen dem digitalen Buch 510 und dem Server 530 aufgehoben werden.

Es versteht sich, daß die vorstehend beschriebene Geschäftsabschlußphase dazu genutzt werden kann, die regelmäßige Lieferung von körperlichen Printerzeugnissen, Ton- und Videoträgern 550 durch einen Lieferanten 560, der nicht mit dem Diensteanbieter identisch sein muß, an eine postalische Lieferadresse zu vereinbaren.

Da der Inhalt von Printmedien, Ton- und Videoträgern läßt sich stets digitalisieren, und daher wird es als vorteilhaft angesehen, die Gegenstände des Geschäftsabschlusses beispielsweise in Gestalt von Software, Texte oder Multimediawerke usw. repräsentierenden Dateien per Datenübertragung zu liefern.

Da es sich in der Regel um urheberrechtlich geschütze Werke handelt, die in Gestalt digitaler und damit verlustfrei kopierbarer Daten übertragen werden, kann es vorteilhaft sein, die den zu übertragenden Datenverarbeitungsprogrammen, Texten oder multimedialen Werken usw. entsprechenden Daten zu verschlüsseln, so daß ein unrechtmäßiger Kopiervorgang als solcher zunächst kein nutzbares unrechtmäßiges Vervielfältigungsstück schaffen kann, um dem Benutzer den zur Entschlüsselung nötigen Entschlüsselungsschlüssel in einer Art und Weise zugänglich zu machen, die sicherstellt, daß der Benutzer durch technische und/oder rechtliche Rahmenbedingungen daran gehindert wird, unerwünschte Vervielfältigungsstücke anzufertigen und gegebenenfalls auch noch zu verbreiten. Der nur dem rechtmäßigen Benutzer zugestandene Entschlüsselungsvorgang wird nach der Übertragung der das zu liefernde Werk repräsentierenden multimedialen Daten 580 über ein WAN 130a (welches mit dem zur Bestellung verwendeten WAN 130 identisch sein kann, aber nicht sein muß) vorgenommen.

Ein technischer Aspekt bei der vereinbarten regelmäßigen Lieferung ("Abonnement") von Datenverarbeitungsprogrammen, Texten oder multimedialen Daten besteht darin, daß die Initiative zur Übertragung einer bestimmten aktuell zur Distribution vorgesehenen Datei nicht in jedem Fall notwendig von dem Benutzer ausgehen sollte ("Pull"), sondern zumindest wahlweise auch von dem Server 530 ("Push").

Bei einer "Pull"-Lösung sieht sich der Benutzer veranlaßt, des öfteren von sich aus mit dem Server 530 Kontakt aufzunehmen, um zu prüfen, ob neue multimediale Daten im Rahmen des Abonnements zum Abruf bereitstehen, und aller Erfahrung nach führt dies zu einer Vielzahl vergeblicher Abfragen, die zum einen für den Benutzer äußerst lästig sind und die zum anderen Telekommunikationskosten verursachen. Dies könnte vermieden werden, wenn die Freigabezeitpunkte der geschuldeten regelmäßig zu liefernden multimedialen Daten im vorhinein äußerst exakt vorbestimmt wären. Dies würde jedoch die Flexibilität auf Seiten des Diensteanbieters 520 erheblich einschränken und wäre überdies kaum praktikabel, da in der Praxis unvermeidliche Betriebsstörungen auf Seiten des Diensteanbieters 520 zur Verzögerungen Anlaß geben können, die wiederum eine Vielzahl erfolgloser Abfrageversuche nach sich ziehen müßten. Eine wirksame Verbesserung wäre dann möglich, wenn die technische Systemstruktur des zur Lieferung der geschuldeten multimedialen Daten für eine vollständig asynchrone Zustellung der Daten geeignet wäre, d.h. der Benutzer weiß den genauen Lieferzeitpunkt nicht und muß ihn auch nicht kennen.

Es ist festzuhalten, daß auch die als "Push"-Konzept bezeichneten "Channels" für Datenzustellungen über das Internet eine "Pull"-Komponente aufweisen, da zwar die Zusammenstellung der Inhalte nicht vom Benutzer erfolgt, letzterer aber nach wie vor durch Einschalten des PCs und Starten geeigneter Channel-Clientprogramme (beispielsweise geeignete Browser) selbst aktiv dafür sorgen muß, daß die multimedialen Daten zugestellt werden.

Bei der erfindungsgemäßen Lösung ist eine vollständige "Push"-Zustellung der zur Lieferung geschuldeten multimedialen Daten möglich. Dazu ist vorgesehen, daß der Benutzer ein Datenverarbeitungssystem oder ein Teil eines Datenverarbeitungssystems stets an einem geeigneten WAN 130, beispielsweise dem Telefonnetz, angeschlossen hält, um im wesentlichen jederzeit seitens des Servers 530 initiierte Lieferungen multimedialer Daten entgegennehmen und speichern zu können. Die auf diese Weise abgespeicherten multimedialen Daten können dann beispielsweise mittels des digitalen Buches 510 konsumiert werden.

Neben dem erläuterten "Push"-Modus sind weitere Varianten möglich. Beispielsweise kann es bei Anwendungsfällen auch sinnvoll sein, Möglichkeiten dafür vorzusehen, daß der Benutzer den Abruf selbst beeinflussen kann. Zum einen kann dann der Benutzer über das WAN 130 eine Verbindung zum Server 530 aufbauen, ein geeignetes Bedienelement betätigen (nicht dargestellt) und dadurch den Server 530 veranlassen, über den bestehenden, vom Clientteil 120 aus aufgebauten Kommunikationskanal die gewünschte Datei zu liefern ("On-Demand-Lieferung"). Eine Variante der "On-Demand-Lieferung" besteht dann darin, daß der Benutzer zunächst wie gehabt eine Verbindung zum Server 530 aufbaut, durch Betätigung eines Bedienelementes ein einen Lieferwunsch anzeigendes Datenlement übermittelt und dann die Verbindung zum Server 530 abbricht. Die Übertragung der gewünschten Datei erfolgt dann zu einem späteren Zeitpunkt durch einen von Seiten des Servers 530 aus aufgebauten Kommunikationskanal. Schließlich ist auch eine "Broadcast"-Variante möglich, bei der der Server an eine Vielzahl von Clientteile 120 eine Datei zu übertragen versucht. Dies kann insbesondere bei funkbasierten Systemen leicht realisiert werden. Es liegt dann bei jedem einzelnen Clientteil 120, in Abhängigkeit von den wirksamen Voreinstellungen, insbesondere in Abhängigkeit von den im Kartenmodul 140 gespeicherten Daten, eine an alle übertragene Datei tatsächlich abzuspeichern oder aber zu ignorieren.

Aus der Benutzersicht kann eine Zustellung einer gewünschten Datei per Push-Verfahren oder im Broadcast-Modus beispielsweise durch Einstecken eines entsprechend voreingestellten Kartenmoduls 140 in den Clientteil 140 initiiert werden. Es wird dann solange gewartet, bis die Übertragung per Einzeladressierung, d.h. Push, oder an alle, d.h. Broadcast, durch den Server 530 abgeschlossen ist. Bei On_Demand-Abrufen mit oder ohne Rückruf durch den Server 530 ist es erforderlich, daß der Benutzer seinen Lieferwunsch dem Server 530 zunächst über das Clientteil 120 mitteilt und dann unmittelbar oder zu einem späteren Zeitpunkt mit der Übertragung der gewünschten Datei rechnet. Bei dieser Alternative kann der Abruf auch an die Eingabe einer PIN o.dgl. zur Sicherung der Berechtigung geknüpft werden.

Bei dem in **Fig. 16** dargestellten Ausführungsbeispiel sind hinsichtlich Zustellung der ein Datenverarbeitungsprogramm, einen Text oder ein multimediales Werk darstellenden Datei 580 folgende Alternativen dargestellt:
a) Die seitens des Servers 530 gelieferten multimedialen Daten können einer Buchstation 610 zugespeist werden.
b) Die seitens des Servers 530 gelieferten multimedialen Daten können einer Kartenstation 620 zugespeist und in einzelnen darin eingesteckten Kartenmodulen 140 abgespeichert werden.
c) Die seitens des Servers 530 gelieferten multimedialen Daten können einer Kartenstation 620 zugespeist und ein einem in der Kartenstation 620 selbst fest eingebauten Speicher (nicht dargestellt) abgespeichert werden.
d) Die seitens des Servers 530 gelieferten multimedialen Daten können dem digitalen Buch 510 zugespeist werden und in einzelnen darin eingesteckten Kartenmodulen 140 abgespeichert werden.
e) Die seitens des Servers 530 gelieferten multimedialen Daten können dem digitalen Buch 510 zugespeist werden und in einem darin fest eingebauten Speicher (nicht dargestellt) abgespeichert werden.
f) Die seitens des Servers 530 gelieferten multimedialen Daten können einem Wearable-Rechner 630 zugespeist werden und in einzelnen darin eingesteckten Kartenmodulen 140 abgespeichert werden.
g) Die seitens des Servers 530 gelieferten multimedialen Daten können einem Wearable-Rechner 630 zugespeist werden und in einem darin fest eingebauten Speicher (nicht dargestellt) abgespeichert werden.

Über die dargestellten Alternativen hinaus sind auch weitere Varianten möglich, beispielsweise Übertragen der Datei 580 auf einen herkömmlichen PC, auf eine Notebook oder auf einen Palmtop (alle nicht dargestellt).

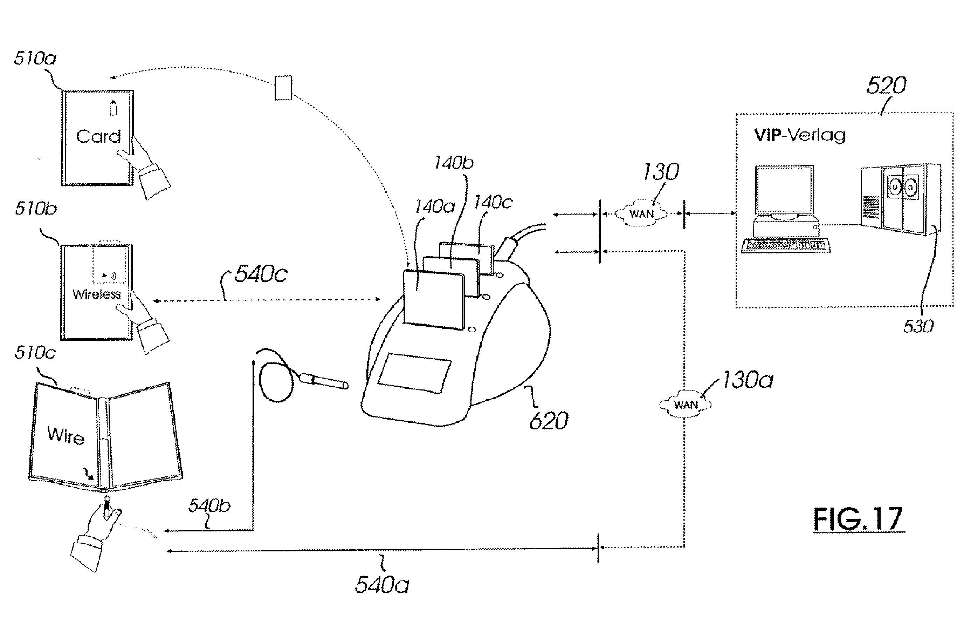

**Fig. 17** zeigt schematisch Einzelheiten einer Variante der ersten Ausführungsform der erfindungsgemäßen Lösung aus **Fig. 16** mit der Kartenstation 620. Nachdem die zur Lieferung durch den Diensteanbieter 520 geschuldeten multimedialen Daten (nicht dargestellt) vom Server 530 über das WAN 130 zur Kartenstation 620 übertragen worden sind, ist es erforderlich, technische Mittel vorzusehen, um die diesen Daten entsprechenden multimedialen Werke für den Benutzer (nicht dargestellt) konsumierbar zu machen. Dazu sind in **Fig. 17** exemplarisch mehrere entsprechende Varianten dargestellt:
a) Die durch den Server 530 über das WAN 130 übertragenen multimedialen Daten werden in einem in die Kartenstation 620 eingesteckten vorbestimmten Kartenmodul 140a gespeichert. Nachdem der Übertragungsvorgang beendet ist, entnimmt der Benutzer das Kartenmodul 140a zu einem beliebigen Zeitpunkt der Kartenstation 620 und setzt es in das digitale Buch 510a ein, wo die multimedialen Daten aus dem Kartenmodul angezeigt oder abgespielt werden können.
b) Die durch den Server 530 über das WAN 130 übertragenen multimedialen Daten werden in einem in die Kartenstation 620 fest eingebauten Speicher (nicht dargestellt) oder in einem in die Kartenstation 620 eingesteckten vorbestimmten Kartenmodul 140a gespeichert. Nachdem der Übertragungsvorgang beendet ist, werden die gespeicherten multimedialen Daten zu einem beliebigen Zeitpunkt auf Initiative des Benutzers über eine drahtlose Datenkommunikationsverbindung (Funk, IRDA o. dgl.) 540c zum digitalen Buch 510b übertragen und abgespeichert, wo die multimedialen Daten aus dem Kartenmodul angezeigt oder abgespielt werden können.
c) Die durch den Server 530 über das WAN 130 übertragenen multimedialen Daten werden in einem in die Kartenstation 620 fest eingebauten Speicher (nicht dargestellt) oder in einem in die Kartenstation 620 eingesteckten vorbestimmten Kartenmodul 140a gespeichert. Nachdem der Übertragungsvorgang beendet ist, werden die gespeicherten multimedialen Daten zu einem beliebigen Zeitpunkt auf Initiative des Benutzers über eine drahtgebundene Datenkommunikationsverbindung (LAN) 540b zum digitalen Buch 510b übertragen und abgespeichert, wo die multimedialen Daten aus dem Kartenmodul angezeigt oder abgespielt werden können.
d) Die durch den Server 530 über das WAN 130 übertragenen multimedialen Daten werden in einem in die Kartenstation 620 fest eingebauten Speicher (nicht dargestellt) oder in einem in die Kartenstation 620 eingesteckten vorbestimmten Kartenmodul 140a gespeichert. Nachdem der Übertragungsvorgang beendet ist, werden die gespeicherten multimedialen Daten zu einem beliebigen Zeitpunkt auf Initiative des Benutzers über ein WAN 130a, das mit dem WAN 130 identisch oder aber verschieden sein kann, zum digitalen Buch 510b übertragen und abgespeichert, wo die multimedialen Daten aus dem Kartenmodul angezeigt oder abgespielt werden können. Diese Anordnung hat ihren Sinn darin, dem Benutzer auch auf Reisen jederzeit die Nutzung der in der Kartenstation abgelegten Daten zu ermöglichen.

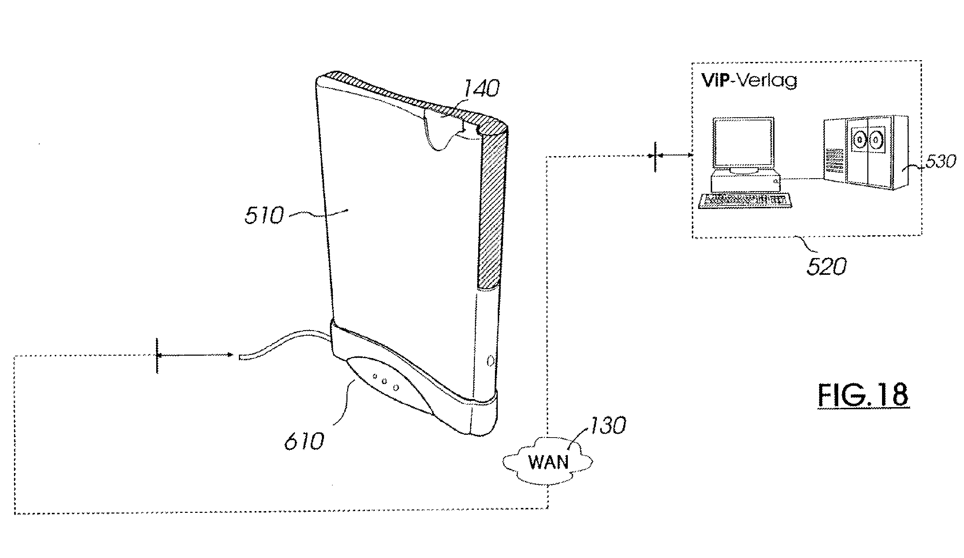

**Fig. 18** zeigt schematisch Einzelheiten einer weiteren Variante der ersten Ausführungsform der erfindungsgemäßen Lösung aus **Fig. 16** mit der Buchstation 610. Um den technischen Aufwand für eine Kartenstation 620 stark zu vermindern, ist es möglich, eine Buchstation 610 anstelle der Kartenstation 620 vorzusehen.In die Buchstation 610 ist das digitale Buch 510 eingesetzt. Die Buchstation 610 ist über eine Datenkommunikationseinrichtung (nicht dargestellt) mit dem digitalen Buch 510 gekoppelt, wobei hinsichtlich der Datensignale von der Buchstation 610 aus durch das digitale Buch 510 hindurch auf das in das digitale Buch 510 eingesetzte Kartenmodul 140 zugegriffen werden kann. Zu Steuerung des Datenverkehres verfügt mindestens entweder die Buchstation 610 oder das digitale Buch über eine Steuerungseinrichtung (nicht dargestellt); bei einer bevorzugten Variante enthalten beide je eine Steuerungseinrichtung. Ferner verfügt die Buchstation 610 über eine Verbindung zu dem WAN 130. In einer besonders bevorzugten Ausführungsvariante wird das digitale Buch 510 im eingesetzten Zustand durch die Buchstation darüberhinaus mit Strom versorgt.

Wenn das vorbestimmte Kartenmodul 140 in das digitale Buch 510 eingesetzt ist und überdies da digitale Buch 510 mitsamt dem Kartenmodul 140 in die Buchstation 610 eingestellt wird, kann der Server 530 über das WAN 130, über die Buchstation 610 und über das digitale Buch 510 auf das Kartenmodul 140 zugreifen und darin multimediale Daten (nicht dargestellt) ablegen.

Die in **Fig. 18** dargestellte Variante kann vor allem dann sinnvoll eingesetzt werden, wenn der zusätzliche Aufwand für eine Kartenstation 620 vermieden werden soll und wenn das digitale Buch 510 während ausreichend dimensionierter Zeitabschnitte vom Benutzer nicht für andere Zwecke benötigt wird, so daß es in die Buchstation 610 gestellt und über diese mit dem WAN 130 verbunden werden kann. Beispielsweise könnte eine Vereinbarung mit dem Diensteanbieter 520 bestehen, durch den Server 530 initiierte Datenübertragungsvorgänge nur zu den Nachtstunden vorzunehmen, so daß der Benutzer das digitale Buch 510 tagsüber für andere Zwecke nutzen kann und es des Nachts regelmäßig in der Buchstation zum Empfang seitens des Servers 530 übertragener multimedialer Daten bereithält. Das Kartenmodul 140 legitimiert den Diensteanbieter mittels vorbestimmter, darin abgespeicherter Datenelemente. Wenn neutrale Kartenmodule 140 ohne diesbezügliche vorbestimmte Datenelemente an den Benutzer abgegeben werden, kann vorgesehen werden, die Datenelemente nachträglich mittels eines elektronischen Buches oder eines Notebooks etc. durch den Benutzer einstellen zu lassen, beispielsweise durch Spezifikation einzelner Diensteanbieter, mit denen Geschäftsbeziehungen möglich sein sollen.

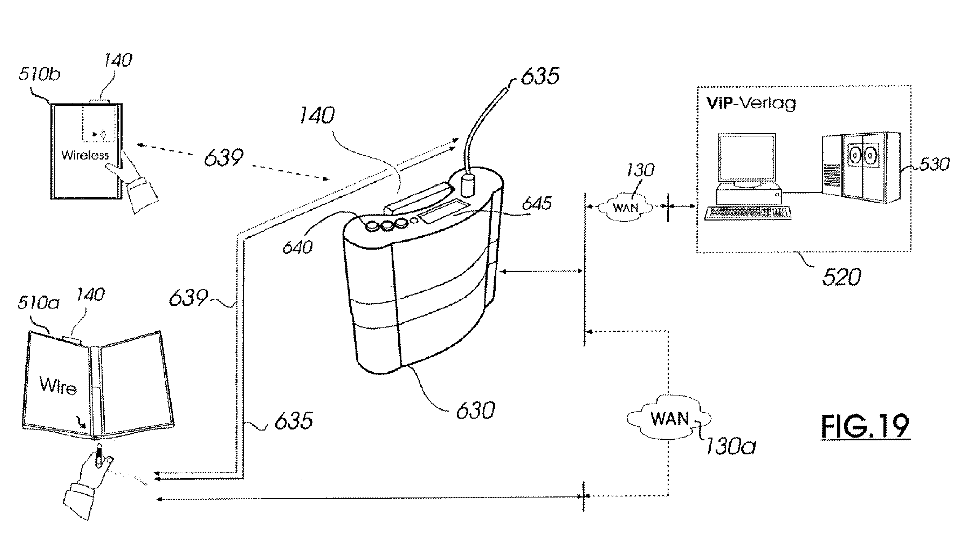

**Fig. 19** zeigt schematisch Einzelheiten einer weiteren Variante der ersten Ausführungsform der erfindungsgemäßen Lösung aus **Fig. 16** mit dem Wearable-Rechner 630. Obgleich mobile Rechner wie Notebooks oder Palmtops leicht transportabel sind und viele der mit dem Betrieb stationärer Computer verbundenen Einschränkungen aufgehoben haben, besteht ein Bedarf nach Rechnern, die unterwegs noch unkomplizierter benutzbar sind. Unter dem Begriff "Wearable"-Rechner werden Geräte verstanden, die beispielsweise in die Kleidung integriert oder an dieser befestigt werden können, so daß keine Aufstellfläche auf einem Tisch oder dergleichen erforderlich ist. Herkömmliche Konzepte zur Datenein- oder Ausgabe auf der Grundlage von Tastatur und konventioneller Displaytechnik sind bei dieser Kategorie von Geräten in der Regel nicht einsetzbar.

**Fig. 19** zeigt exemplarisch einen Wearable-Rechner 630, der beispielsweise an einem Kleidungsgürtel getragen werden kann. Der Wearable-Rechner 630 verfügt über kein eigenes Display, welches zur Darstellung eines größeren zusammenhängenden Bereiches eines Dokumentes geeignet wäre; vielmehr ist ein Kabel 635 vorgesehen, über das ein externes Display (nicht dargestellt) angeschlossen werden kann. Zur Erleichterung der Bedienung kann der Wearable-Rechner 630 mit (einigen wenigen) Bedienelementen 640 sowie einem kleinen Hilfsdisplay 645 versehen sein. Insbesondere kann der Wearable-Rechner 630 zur Aufnahme eines Kartenmoduls 140 eingerichtet sein.

Nachdem die zur Lieferung durch den Diensteanbieter 520 geschuldeten multimedialen Daten (nicht dargestellt) vom Server 530 über das WAN 130 zum Wearable-Rechner 630 übertragen worden sind, ist es erforderlich, technische Mittel vorzusehen, um die diesen Daten entsprechenden multimedialen Werke für den Benutzer (nicht dargestellt) konsumierbar zu machen:
a) Die durch den Server 530 über das WAN 130 übertragenen multimedialen Daten werden in einem in den Wearable-Rechner 630 eingesteckten vorbestimmten Kartenmodul 140a gespeichert. Nachdem der Übertragungsvorgang beendet ist, entnimmt der Benutzer das Kartenmodul 140a zu einem beliebigen Zeitpunkt dem Wearable-Rechner 630 und setzt es in das digitale Buch (nicht dargestellt) ein, wo die multimedialen Daten aus dem Kartenmodul angezeigt oder abgespielt werden können.
b) Die durch den Server 530 über das WAN 130 übertragenen multimedialen Daten werden in einem in den Wearable-Rechner 630 fest eingebauten Speicher (nicht dargestellt) oder in einem in den Wearable-Rechner 630 eingesteckten Kartenmodul 140 gespeichert. Nachdem der Übertragungsvorgang beendet ist, werden die gespeicherten multimedialen Daten zu einem beliebigen Zeitpunkt auf Initiative des Benutzers über eine drahtgebundene Datenkommunikationseinrichtung 635 oder über eine drahtlose Datenkommunikationseinrichtung (Funk, IRDA o. dgl.) 639 zum digitalen Buch 510a bzw. 510b übertragen und abgespeichert, wo die multimedialen Daten aus dem Kartenmodul angezeigt oder abgespielt werden können.
c) Die durch den Server 530 über das WAN 130 übertragenen multimedialen Daten werden in einem in den Wearable-Rechner 630 fest eingebauten Speicher (nicht dargestellt) oder in einem in den Wearable-Rechner 630 eingesteckten Kartenmodul 140 gespeichert. Nachdem der Übertragungsvorgang beendet ist, werden die gespeicherten multimedialen Daten zu einem beliebigen Zeitpunkt auf Initiative des Benutzers über ein WAN 130a, das mit dem WAN 130 identisch oder aber verschieden sein kann, zum digitalen Buch 510a übertragen und abgespeichert, wo die multimedialen Daten aus dem Kartenmodul 140 angezeigt oder abgespielt werden können. Diese Anordnung hat ihren Sinn darin, dem Benutzer auch auf Reisen jederzeit die Nutzung der in dem Wearable-Rechner 630 abgelegten Daten zu ermöglichen.

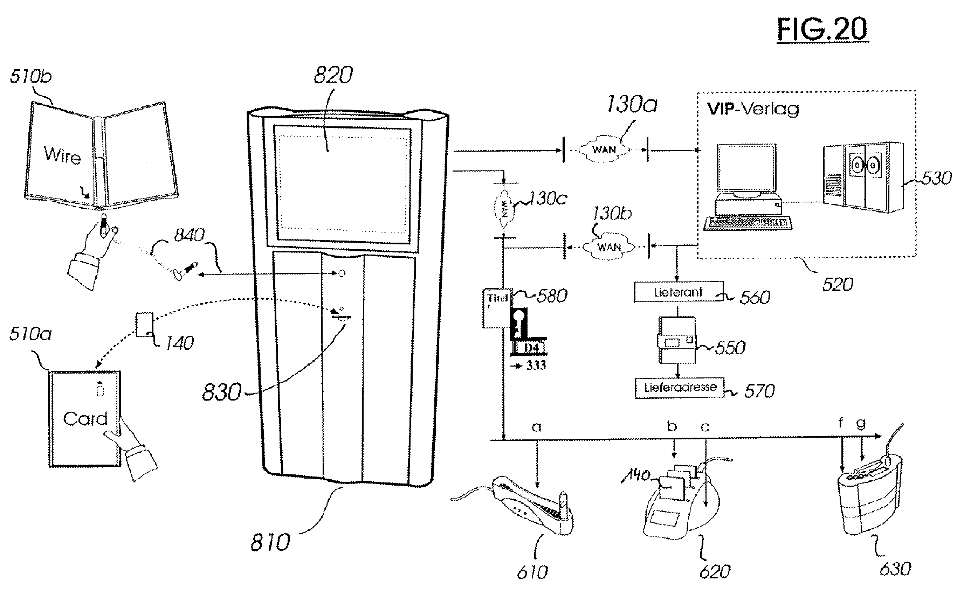

**Fig. 20** zeigt schematisch eine zweite Ausführungsform der erfindungsgemäßen Lösung. Hierbei ist ein im öffentlichen Raum innerhalb eines Gebäudes oder im Außenraum aufgestelltes Aktionsterminal 810 vorgesehen, das typischerweise in Augenhöhe über eine als berührungsempfindliches Display ausgeführte Anzeigeeinrichtung 820 verfügt.

Das Aktionsterminal 810 kann derart ausgestaltet sein, daß auf der Anzeigeeinrichtung 820 ein Katalog unmittelbar erwerbbarer multimedialer Werke dargestellt wird. Wenn das Aktionsterminal mit einem Kartenmodulmagazin (nicht dargestellt) versehen wird, kann nach Eingabe des Kaufwunsches beispielsweise über den berührungsempfindlichen Bildschirm und nach erfolgter Zahlung beispielsweise per Chipkarte (nicht dargestellt) ein Kartenmodul 140 aus dem Kartenmagazin entnommen, mit der das gewünschte multimediale Werk darstellenden Datei versehen und über einen Ausgabeschlitz 830 ausgegeben werden.

Eine andere Variante dieser Ausführungsform sieht vor, das Kartenmodul 140 mit einem bestimmten geeigneten kryptographischen Schlüssel anstelle einer ein Datenverarbeitungsprogramm, ein Text- oder Multimediawerk repräsentierenden Datei zu versehen, mit der die anderweitig in verschlüsselter Form übertragene Datei wieder entschlüsselt werden kann. Diese Vorgehensweise hat den Vorteil, daß Kartenmodule 140 mit relativ wenig Speicherkapazität, beispielsweise herkömmliche Chipkarten, zum Einsatz kommen können.

Soweit es der zur Verfügung stehende Speicherplatz des Kartenmoduls 140 zuläßt, können auch mehrere kryptographische Schlüssel in dem Speicher des Kartenmoduls 140 abgespeichert werden.

Andererseits kann auch eine Kartenmodul-Lesestation 830 vorgesehen werden, in die ein bereits im Besitz des Benutzers befindliches Kartenmodul 140 eingesteckt wird. Nach dem Aufkopieren der das gewünschte Datenverarbeitungsprogramm, Text- oder multimediale Werk repräsentierenden Datei oder auch nur eines bestimmten geeigneten kryptographischen Schlüssels, mit der die anderweitig in verschlüsselter Form übertragene Datei wieder entschlüsselt werden kann, wird das Kartenmodul 830 wieder entnommen.

Das multimediale Werk kann dann durch Einstecken des Kartenmoduls 140 in das digitale Buch 510a vom Benutzer konsumiert werden.

Der Bestellungs- und Lieferungsvorgang kann auch mittels eines über ein Kabel 840 mit dem Aktionsterminal 810 verbundenen digitalen Buch 510b vorgenommen werden.

Das Aktionsterminal 810 kann über einen lokalen Massenspeicher, beispielsweise eine Festplatte (nicht dargestellt) verfügen, auf dem die zum Kauf angebotenen multimedialen Werke in Form digitaler Daten vorgehalten werden. Bei Verbindung des Aktionsterminals 810 mit einem Telekommunikationsnetz können weitere Formen der Belieferung realisiert werden.

Die Bestelldaten können insbesondere über das WAN 130a zum Server 530 des Diensteanbieters 520 übermittelt werden, von wo aus die Übertragung der die multimedialen Werke darstellenden Dateien gesteuert wird.

Der nur dem rechtmäßigen Benutzer zugestandene Entschlüsselungsvorgang wird nach der Übertragung der das zu liefernde Werk repräsentierenden multimedialen Daten 580 über ein WAN 130a (welches mit dem zur Bestellung verwendeten WAN 130 identisch sein kann, aber nicht sein muß) vorgenommen.

Wenn das Aktionsterminal 810 über einen lokalen Massenspeicher (nicht dargestellt) und einen WAN-Abschluß 130c verfügt, kann der Zustellvorgang für die Datei 580 auch direkt vom Aktionsterminal aus erfolgen.

Über ein WAN 130b kann auch die Übertragung von Dateien vom Server 530 zum Aktionsterminal 810 ermöglicht werden.

Das WAN 130a, das WAN 130b und das WAN 130c können identisch oder unterschiedlich sein.

Bei dem in **Fig. 20** dargestellten Ausführungsbeispiel sind hinsichtlich der "Push"- Zustellung der Datei 580 folgende Alternativen dargestellt:
a) Die seitens des Servers 530 gelieferten multimedialen Daten können einer Buchstation 610 zugespeist werden.
b) Die seitens des Servers 530 gelieferten multimedialen Daten können einer Kartenstation 620 zugespeist und in einzelnen darin eingesteckten Kartenmodulen 140 abgespeichert werden.
c) Die seitens des Servers 530 gelieferten multimedialen Daten können einer Kartenstation 620 zugespeist und ein einem in der Kartenstation 620 selbst fest eingebauten Speicher (nicht dargestellt) abgespeichert werden.
f) Die seitens des Servers 530 gelieferten multimedialen Daten können einem Wearable-Rechner 630 zugespeist werden und in einzelnen darin eingesteckten Kartenmodulen 140 abgespeichert werden.
g) Die seitens des Servers 530 gelieferten multimedialen Daten können einem Wearable-Rechner 630 zugespeist werden und in einem darin fest eingebauten Speicher (nicht dargestellt) abgespeichert werden.

Weitere Varianten, beispielsweise mit einem herkömmlichen PC, einem Notebook oder einem Palmtop sind möglich.

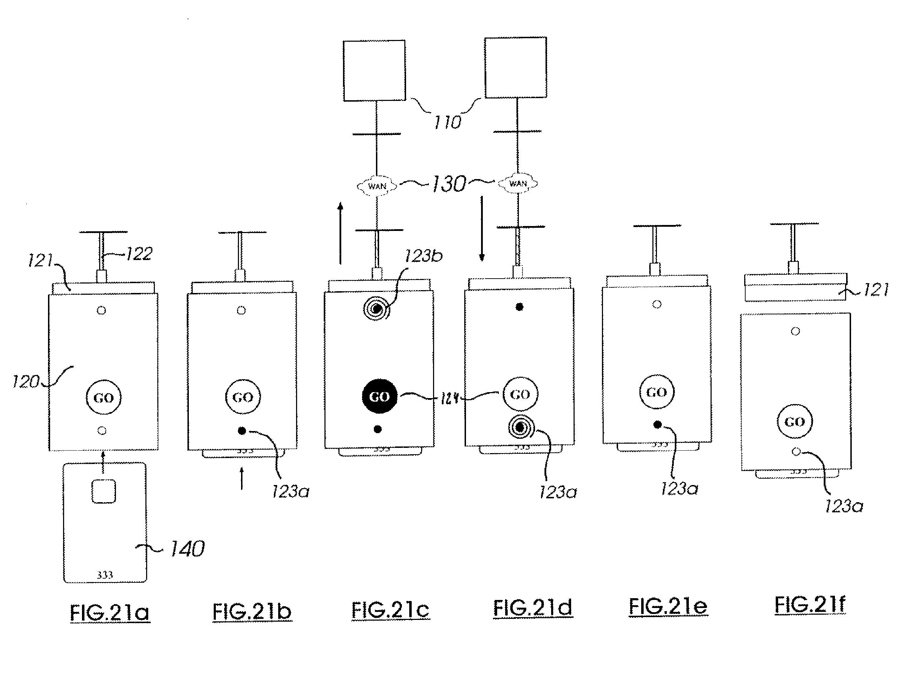

**Fig. 21** zeigt eine weitere Variante der erfindungsgemäßen Lösung. Im einzelnen zeigen **Fign. 21a** bis **21f** eine erfindungsgemäße Anordnung in verschiedenen Phasen bei der Abwicklung als Beispiel ausgewählter elektronischer Post, auch "e-Mail" genannt. Es versteht sich, daß der gezeigte Vorgang auch entsprechend beim Abruf von Computerprogrammen, Texten oder multimedialen Werken von einem Diensteanbieter anwendbar ist.

**Fig. 21a** zeigt ein Clientteil 120 und ein in Gestalt einer Chipkarte ausgeführtes Kartenmodul 140. Der Clientteil 120 ist mit einem eingesteckten Adapterteil 121 versehen, welcher eine Leitung 122 aufweist, die mit einem WAN 130, beispielsweise dem Telefonnetz verbunden ist.

**Fig. 21b** zeigt die Anordnung aus **Fig. 21a** nach dem Einstecken des Kartenmoduls 140 in den Clientteil 120. Durch den Einsteckvorgang wird der Clientteil 120 automatisch eingeschaltet und aktiviert, sofern der Adapterteil 121 eingesteckt ist, was durch ein erstes Anzeigeelement 123a, beispielsweise eine Leuchtdiode, angezeigt wird, d.h., die Anordnung ist bereit, eine Verbindung über die Leitung 122 herzustellen.

**Fig. 21c** zeigt die Anordnung aus **Fig. 21b** während des Herunterladens von auf dem Serverteil 110 gespeicherten e-Mail-Nachrichten (nicht dargestellt) über das WAN 130 und den Clientteil 140 auf das Kartenmodul 140. Dazu steuern die im Datenspeicher (nicht dargestellt) des Kartenmoduls 140 gespeicherten Daten (nicht dargestellt) den Einwählvorgang zu einem e-Mail-Serverteil 110 eines e-Mail-Diensteanbieters über das WAN 130. Der Einwählvorgang wird vorzugsweise erst dann begonnen, wenn der Benutzer (nicht dargestellt) diesen Vorgang durch Betätigung eines dafür vorgesehenen Bedienelementes 124, beispielsweise eines Betätigungstasters, freigibt. Die zeitliche Erstreckung des Herunterladens wird beispielsweise durch ein Blinksignal eines zweiten Anzeigeelementes 123b, beispielsweise einer Leuchtdiode, angezeigt. Das Kartenmodul 140 ist dazu mit einem hinreichend großen Datenspeicher (nicht dargestellt) versehen, der beispielsweise als Flash-Speicher ausgeführt sein kann.

**Fig. 21d** zeigt die Anordnung aus **Fig. 21c** während des Heraufladens von in dem Kartenmodul 140 zuvor abgespeicherten e-Mail-Nachrichten. Die zeitliche Erstreckung des Vorganges des Heraufladens von e-Mail-Nachrichten wird beispielsweise durch ein Blinksignal des ersten Anzeigeelementes 123a angezeigt.

**Fig. 21e** zeigt die Anordnung aus **Fig. 21d** nach dem Abbau der Datenverbindung über das WAN 130 zu dem Serverteil 110. Das Leuchten des ersten Anzeigeelementes 123a zeugt an, daß der Clientteil 120 noch eingeschaltet ist, da sowohl das Kartenmodul 140 als auch das Adapterteil 121 noch eingesteckt sind.

**Fig. 21f** zeigt die Anordnung aus **Fig. 21e** nach dem Herausziehen des Adapterteils 121 aus dem Clientteil 120. Der Clientteil 120 ist nun abgeschaltet und das erste Anzeigeelement 123a erlischt, d.h. der Clientteil 120 kann auch mit eingeschobenem Kartenmodul 140 bequem im ausgeschalteten Zustand transportiert werden, sofern der Adapterteil 121 herausgezogen ist, denn der Adapterteil 121 schaltet über eine geeignete Schaltereinrichtung (nicht dargestellt) die Stromversorgung des Clientteils 120 ein bzw. aus.

Eine modifizierte Variante der erfindungsgemäßen Lösung kann dadurch erhalten werden, indem bei der in **Fig. 21c** gezeigten Phase e-Mail-Nachrichten per SMTP zum Server 110 hinaufgeladen und bei der in **Fig. 21d** gezeigten Phase e-Mail-Nachrichten per POP3 vom Server 110 heruntergeladen werden, d.h. die gezeigte Reihenfolge wird vertauscht.

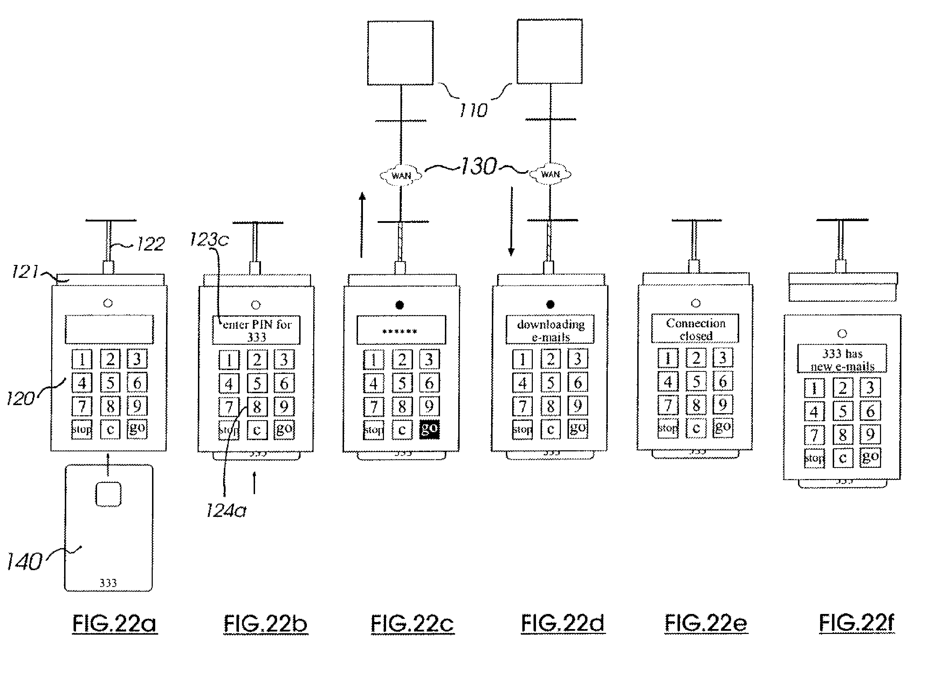

**Fig. 22** zeigt eine weitere Variante der erfindungsgemäßen Lösung, die in den Grundzügen der in Fig. 21 gezeigten Variante entspricht. Im einzelnen zeigen **Fign. 22a** bis **22f** eine erfindungsgemäße Anordnung exemplarisch in verschiedenen Phasen bei der Abwicklung elektronischer Post. Im Gegensatz zu **Fig. 21** ist der Clientteil 120 bei der in **Fig. 22** dargestellten Variante mit einer Zifferntastatur 124a und mit einem Textdisplay 123c versehen.

Wie in **Fig. 22b** dargestellt, ist es dadurch insbesondere möglich, den Aufbau einer Datenverbindung von dem Clientteil 120 zu dem Serverteil 110 von der Entsperrung der in dem Kartenmodul 140 abgespeicherten Benutzer- und Zugangsdaten durch Eingabe einer PIN abhängig zu machen. Dadurch kann die Gefahr des Mißbrauchs und des unbefugten Herunter- oder Heraufladens von e-Mail-Nachrichten wesentlich vermindert werden. Durch die Anzeigevorrichtung 123c können kurze Texte angezeigt werden, die dem Benutzer über die gerade ablaufenden Vorgänge unterrichten.

Die technische Abwicklung des Herauf- und Herunterladens von e-Mail-Nachrichten kann auf der Grundlage erprobter technischer Standards, beispielsweise SMTP für das Heraufladen (Einliefern) elektronischer Nachrichten und POP3 für das Herunterladen (Zustellen) elektronischer Nachrichten, abgewickelt werden.

Eine modifizierte Variante der erfindungsgemäßen Lösung kann dadurch erhalten werden, indem bei der in **Fig. 22c** gezeigten Phase e-Mail-Nachrichten per SMTP zum Server 110 hinaufgeladen und bei der in **Fig. 22d** gezeigten Phase e-Mail-Nachrichten per POP3 vom Server 110 heruntergeladen werden, d.h. die gezeigte Reihenfolge wird vertauscht. Nachrichten, die auf die in den **Fign. 21** und **22** dargestellte Art und Weise zum Serverteil 110 übertragen oder von diesem heruntergeladen werden sollen, müssen vor dem Hochladen zunächst in den Datenspeicher des Kartenmoduls 140 geschrieben bzw. nach dem Herunterladen aus dem Datenspeicher des Kartenmoduls 140 ausgelesen werden.

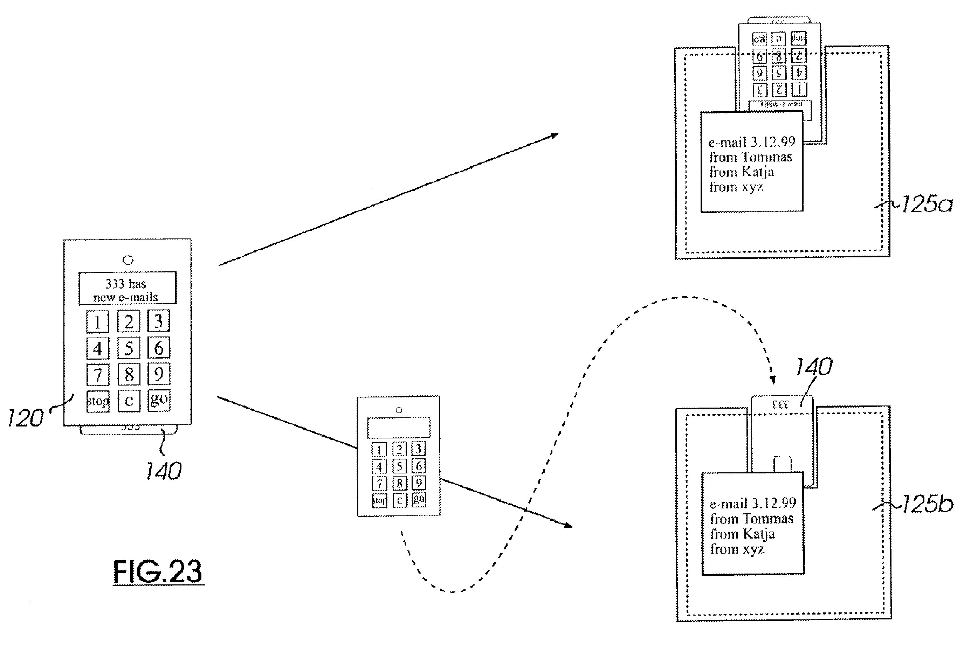

Fig. 23 zeigt zwei Varianten zum Auslesen von dem Serverteil 110 heruntergeladener e-Mail-Nachrichten. Dazu kann der mit dem Kartenmodul 140 versehene Clientteil 140 derart ausgeführt sein, daß er als Ganzes in eine entsprechend ausgestaltete Anzeigeeinrichtung 125a eingeführt kann, wobei sowohl der Clientteil 120 als auch die Anzeigeeinrichtung 125a über eine geeignete Datenkommunikationseinrichtung (nicht dargestellt) Daten austauschen können. Eine andere Variante sieht vor, daß der Benutzer (nicht dargestellt) das Kartenmodul 140 aus dem Clientteil 120 entnimmt und in eine Anzeigeeinrichtung 125b einsetzt.

Sowohl die Anzeigeeinrichtung 125a als auch die Anzeigeeinrichtung 125b verfügen über eine geeignete Software zum Auslesen und Anzeigen der in dem Kartenmodul 140 abgespeicherten e-Mail-Nachrichten. Bei der Anzeigeeinrichtung 125b kann es ich insbesondere um ein mit einer Kartenmodulaufnahmevorrichtung versehenes Notebook (nicht dargestellt) oder um ein digitales Buch (nicht dargestellt) handeln, das mit einem Darstellungsprogramm für e-Mail-Nachrichten versehen ist.

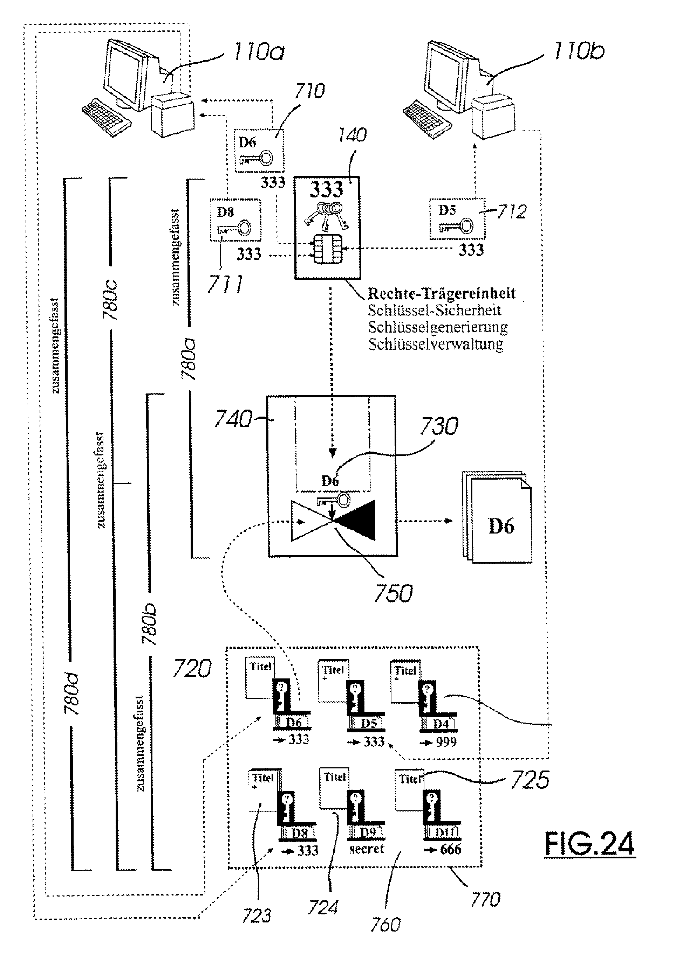

**Fig. 24** zeigt schematisch Vorrichtungen zur Ver- und Entschlüsselung von urheberrechtlich geschützte (multimediale) Werke repräsentierenden Dateien unter Einbeziehung des Kartenmoduls 140. Auf den Serverteilen 110a und 110b sind multimediale Werke repräsentierende Dateien (nicht dargestellt) gespeichert.

Ein Kartenmodul 140 kann mit einem manipulationssicheren physikalischen Zufallszahlengenerator (nicht dargestellt) versehen sein, um eine Zufallszahl zu generieren, aufgrund derer in dem Kartenmodul ein Schlüsselpaar mit einem öffentlichen und einem privaten Schlüssel errechnet wird. Die errechneten Schlüssel werden in der Speichervorrichtung (nicht dargestellt) des Kartenmoduls 140 abgespeichert. Es ist jedoch auch möglich, extern generierte Schlüssel in dem Kartenmodul 140 abzuspeichern. Wenn der zur Verfügung stehende Speicherplatz es erlaubt,können mehrere Schlüsselpaare in dem Speicher des Kartenmoduls 140 abgespeichert sein.

Alternativ kann auch vorgesehen werden, die Schlüsselpaare vor der ausgabe an den Endbenutzer in einer sicheren Umgebung außerhalb des Kartenmoduls 140 zu generieren und dann in den Speicher des Kartenmoduls zu laden.

Bei einem Abruf einer Datei von einem der Serverteile 110a und 110b kann zunächst ein dieser Datei zugeordneter öffentlicher Schlüssel 710, 711, 712 aus dem Kartenmodul 140 ausgelesen und an den Serverteil 110a, 110b übermittelt werden. Auf dem jeweiligen Serverteil 110a, 110b wird die betreffende Datei unter Verwendung des bestimmten, der Datei zugeordneten öffentlichen Schlüssels 710, 711 bzw. 712 verschlüsselt. Das Chiffrat kann nunmehr bedenkenlos über ein WAN distributiert werden; möglicherweise von Dritten unbefugt angefertigte Vervielfältigungsstücke sind ohne Besitz des zugehörigen privaten Schlüssels unbenutzbar. Da dieser zugeordnete private Schlüssel in dem Speicher des Kartenmoduls 140 abgespeichert ist, vermittelt der Besitz des Kartenmoduls 140 mit den darin gespeicherten Schlüsseln im Endeffekt die Entschlüsselungs- und damit Nutzungsberechtigung für die von dem Serverteil 110a bzw. 110b heruntergeladene und ein ein Textwerk oder ein multimediales Werk repräsentierende Datei (nicht dargestellt).

Die Entschlüsselung der verschlüsselten Datei 720 mit dem dazugehörenden privaten Schlüssel kann direkt mit dem in dem Kartenmodul 140 vorgesehenen Prozessor durchgeführt werden. Dies hat den großen Vorteil, daß dazu der entsprechende private Schlüssel nicht außerhalb des Kartenmoduls 140 verfügbar gemacht werden muß, so daß keine Sicherheitsrisiken hinsichtlich eines unbefugten Kopierens des privaten Schlüssels auftreten. Nachteilig ist allerdings, daß bei Verwendung einer Chipkarte mit einem 8-Bit-Chipkartenprozessor als Kartenmodul 140 die Verarbeitungskapazität gering ist und der Entschlüsselungsvorgang lange dauern kann.

Daher kann es zweckmäßig sein, das Kartenmodul 140 zweiteilig auszuführen, wobei eine Chipkarte lediglich zum Speichern der Schlüsselpaare verwendet wird, wohin der Entschlüsselungsvorgang von einem in einer Kryptographieprozessorkomponente 740 vorgesehenen leistungsfähigeren Kryptographieprozessor 750 übernommen wird. Beispielsweise ist es möglich, eine genormte Einschubkarte für PCMCIA-Slots mit einem leistungsfähigen Kryptoprozessor zum Ver- und Entschlüsseln von Massendaten vorzusehen, wobei diese PCMCIA-Einschubkarte derart ausgestaltet sein kann, daß die die kryptographischen Schlüssel tragende Chipkarte darin einsteckbar ausgestaltet ist. Bei einer derartigen Lösung ist es jedoch vorteilhaft, durch geeignete technische Vorkehrungen dafür Sorge zu tragen, daß die von der Chipkarte in die Kryptographieprozessorkomponente 740 übertragenen privaten Schlüssel nicht unbefugt abgehört werden können. Dies kann beispielsweise dadurch geschehen, indem die Kryptographieprozessorkomponente 740 in einem gegen unbefugtes Auslesen besonders geschützten Speicher ein Schlüsselpaar enthält, dessen öffentlicher Schlüssel unmittelbar nach dem Einstecken der Chipkarte an diese übertragen wird, Die Chipkarte kann dann den öffentlichen Schlüssel der Kryptographieprozessorkomponente 740 zur Verschlüsselung des zur Entschlüsselung einer Datei vorgesehenen privaten Schlüssels heranziehen. Die Kryptographieprozessorkomponente 740 entschlüsselt dann das Chiffrat des zur Entschlüsselung einer Datei vorgesehenen privaten Schlüssels und gewinnt so diesen privaten Schlüssel zurück.

Zur Sicherung der Authentizität von Kartenmodulen im allgemeinen sowie entsprechenden Chipkarten sowie der Kryptographieprozessorkomponente 740 kann vorgesehen werden, in den entsprechenden Speichervorrichtungen herstellerseitig unveränderliche digitale Authetizitätsmerkmale einzubringen, die durch kryptographische digitale Signaturen und entsprechende Schlüsselzertifikate, die jeweils den Zusammenhang zwischen einem befugten Hersteller oder Ausgeber und einem öffentlichen Signierschlüssel aussagen, beglaubigt sind.

Das Archiv 760 zur Speicherung von Programme, textuelle oder multimediale Werke repräsentierenden verschlüsselten Dateien 720 kann als separate Archivspeichereinheit 770 ausgebildet sein und vorzugsweise einen nichtflüchtigen Speicher (gepuffertes RAM, EEPROM, Flash-Speicher, Festplattenspeicher etc.) umfassen.

Bei konkreten gegenständlichen Ausführungsformen können die Funktionalitäten des Speicherns von kryptographischen Schlüsseln (vgl. 140), des kryptographischen Ver- und Entschlüsselns (vgl. 740, 750) sowie des Speicherns verschlüsselter Dateien (vgl. 770) jeweils einzelnen separaten Geräten oder kombinierten Funktionseinheiten zugeordnet sein.

Das Bezugszeichen 780a bezeichnet eine kombinierte Funktionseinheit, die die Schlüsselgenerierung, sichere Schlüsselspeicherung und Schlüsselverwaltung zusammen mit der Massendaten-Verschlüsselung und - Entschlüsselung umfaßt.

Das Bezugszeichen 780b bezeichnet eine andere kombinierte Funktionseinheit, die die Massendaten-Verschlüsselung und -Entschlüsselung umfaßt zusammen mit der Speicherung der verschlüsselten Dateien 720 bis 725 umfaßt.

Das Bezugszeichen 780c bezeichnet eine weitere kombinierte Funktionseinheit, die die Schlüsselgenerierung, sichere Schlüsselspeicherung und Schlüsselverwaltung zusammen mit der Massendaten-Verschlüsselung und -Entschlüsselung sowie der Speicherung der verschlüsselten Dateien 720 bis 725 umfaßt.

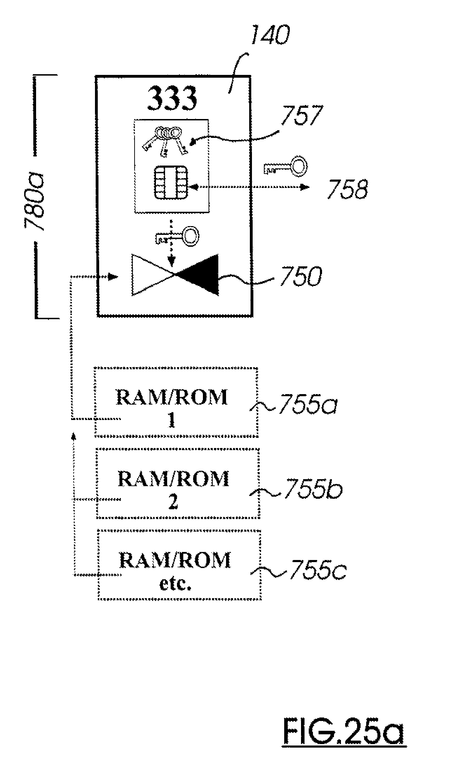

Den **Fign. 25a** bis **25f** sind verschiedene Ausgestaltungen kryptographischer Vorrichtungen aus **Fig. 24** entnehmbar.

**Fig. 25a** zeigt ein Kartenmodul 140, das mit einer Kryptographieprozessor 750 versehen ist. Die zu entschlüsselnden Daten sind in Speichereinrichtungen 755a, 755b, 755c außerhalb des kartenmoduls 140 abgelegt, wohingegen die kryptographischen Schlüssel 757 im Speicher der Chipkarte 140 abgelegt sind.

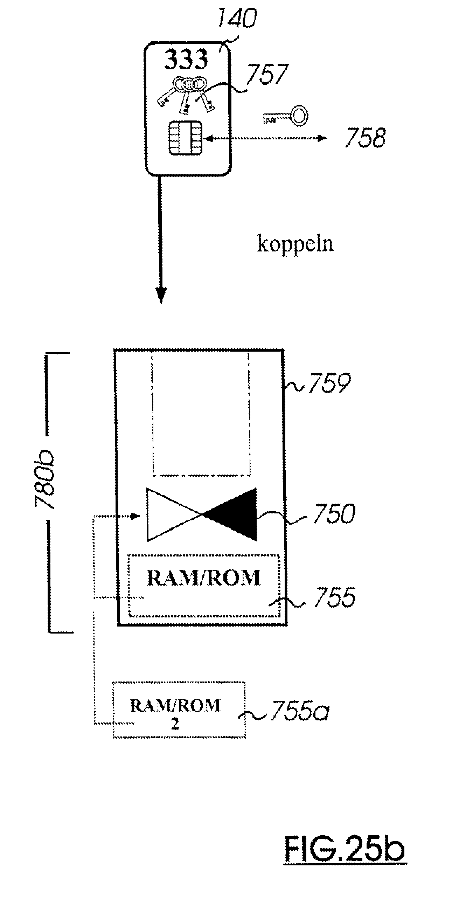

**Fig. 25b** zeigt eine Variante, bei der die Chipkarte 140 in ein Hardware-Erweiterungsmodul 759 einsteckbar ist. Das Hardware-Erweiterungsmodul 759 kann beispielsweise in Gesatlt einer PCMCIA-Karte ausgeführt sein, in der der Kryptographieprozessor 750 sowie ein Speicher 755 für zu entschlüsselnde Daten eingebaut sind; die zu entschlüsselnden Daten können jedoch auch von ausßen aus einem Speicher 755a zugeführt werden. Die kryptographischen Schlüssel 757 sind auf der Chipkarte 140 gespeichert.

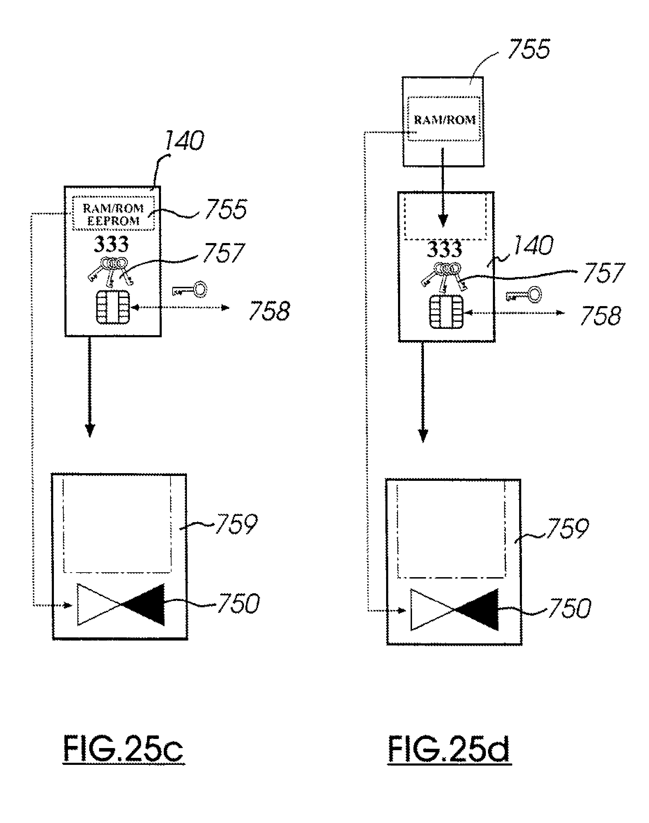

Die in **Fig. 25c** gezeigte Variante unterscheidet sich von der in **Fig. 25b** gezeigten Anordnung dadurch, daß der Speicher 755 für die zu entschlüsselnden Daten beispielsweise als Flash-Speicher auf der Chipkarte 140 angeordnet ist.

Die in **Fig. 25d** gezeigte Variante unterscheidet sich von der in **Fig. 25c** gezeigten Anordnung dadurch, daß der Speicher 755 für die zu entschlüsselnden Daten beispielsweise als Flash-Speicher in ein Kartenmodul 140 einsteckbar ist.

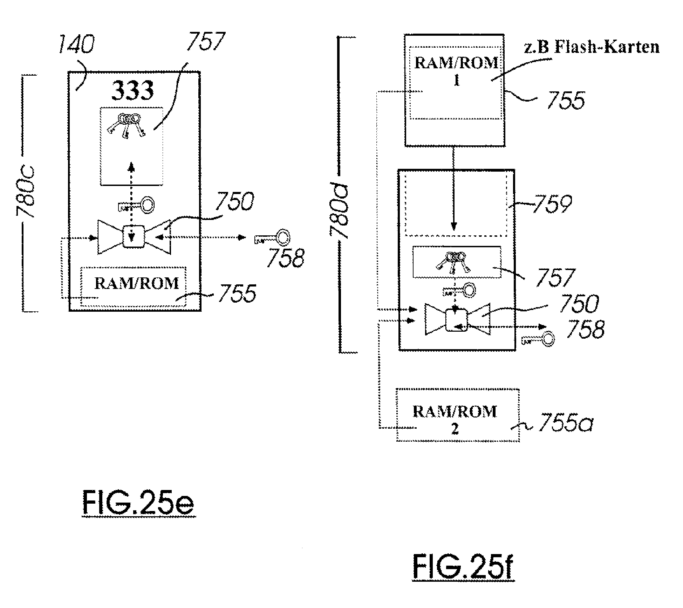

Die in **Fig. 25e** gezeigte Variante unterscheidet sich von der in **Fig. 25a** gezeigten Anordnung dadurch, daß der Speicher 755 für die zu entschlüsselnden Daten beispielsweise als Flash-Speicher auf dem Kartenmodul 140 vorgesehen ist.

Die in **Fig. 25f** gezeigte Variante unterscheidet sich von der in **Fig. 25d** gezeigten Anordnung dadurch, daß der Schlüsselspeicher 757 auf dem Hardware-Erweiterungsmodul759 vorgesehen ist.

Die Schlüssel können auch über geeignete Datenverbindungswege 758 direkt dem Kryptographieprozessor 750 zugespeist werden.

Der Kryptographieprozessor 750 kann auch zum Verschlüsseln verwendet werden. Die Speicher 755 enthalten dann zu verschlüsselnde Daten.

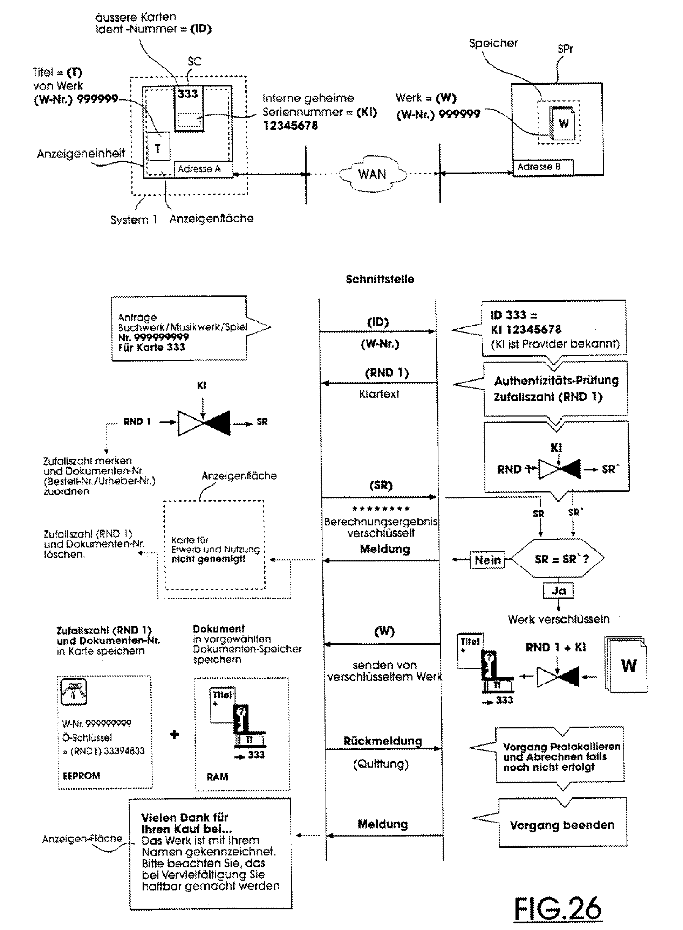

**Fig. 26** zeigt schematisch und exemplarisch einen Ablauf der Übertragung und Entschlüsselung einer ein Werk repräsentierenden verschlüsselten Datei.

Die exemplarisch in Fig. 1 skizzierte erfindungsgemäße Lösung kann zur nutzungsgerechten Abrechnung der Inanspruchnahme durch Dritte erbrachter Leistungen herangezogen werden.

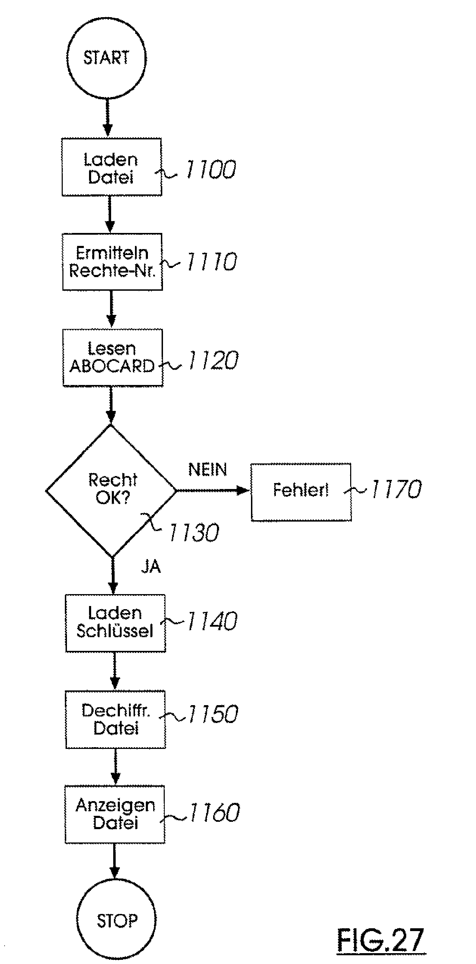

**Fig. 27** zeigt schematisch ein Ablaufdiagramm eines ersten Verfahrens zur Abrechnung des Bezuges von Software, Texte oder multimediale Werke repräsentierender Dateien von einem Serverteil 110. Dabei wird unter Bezugnahme auf **Fig. 24** davon ausgegangen, daß der Serverteil 110a oder 110b eine Software, Texte oder multimediale Werke repräsentierende Datei 720 in verschlüsselter Form zur Verfügung stellt, die ohne vorherige Entschlüsselung für den Benutzer nutzlos ist. Wie in **Fig. 27** dargestellt, wird beim ersten Verfahren im Schritt 1100 die Datei 720 vom Serverteil 110 heruntergeladen. Dabei wird davon ausgegangen, daß die Datei zum einen das verschlüsselte Werk und zum anderen einen unverschlüsselten Identifizierer enthält, der das Werk eindeutig identifiziert. Dieser Identifizierer, beispielsweise in Gestalt eines eine Rechte-Nummer darstellenden Datenelementes, wird im Schritt 1110 aus der Datei extrahiert. Nach dem Einstecken des Kartenmoduls 140 in den Clientteil wird im Schritt 1120 eine im Speicher (nicht dargestellt) des Kartenmoduls 140 abgelegte Tabelle mit einzelnen Identifizierern, für die das betreffende Kartenmodul 140 ein Benutzungsrecht verkörpert, gelesen. Im Schritt 1130 wird dann geprüft, ob der in Schritt 1110 ermittelte Identifizierer in der im Speicher (nicht dargestellt) des Kartenmoduls 140 abgelegten Tabelle mit einzelnen Identifizierern enthalten ist. Fällt die Prüfung positiv aus, wird im Schritt 1140 der zugehörige private Schlüssel geladen und in Schritt 1150 die Dechiffrierung der Datei 720 vollzogen. In Schritt 1160 kann dann der dechiffrierte Klartext der Datei 720 angezeigt oder sonst genutzt werden. Scheitert die Rechteüberprüfung in Schritt 1130, erfolgt eine Fehlermeldung in Schritt 1170. In diesem Fall hat der Endbenutzer kein Recht, das der Datei 720 entsprechende Werk zu nutzen.

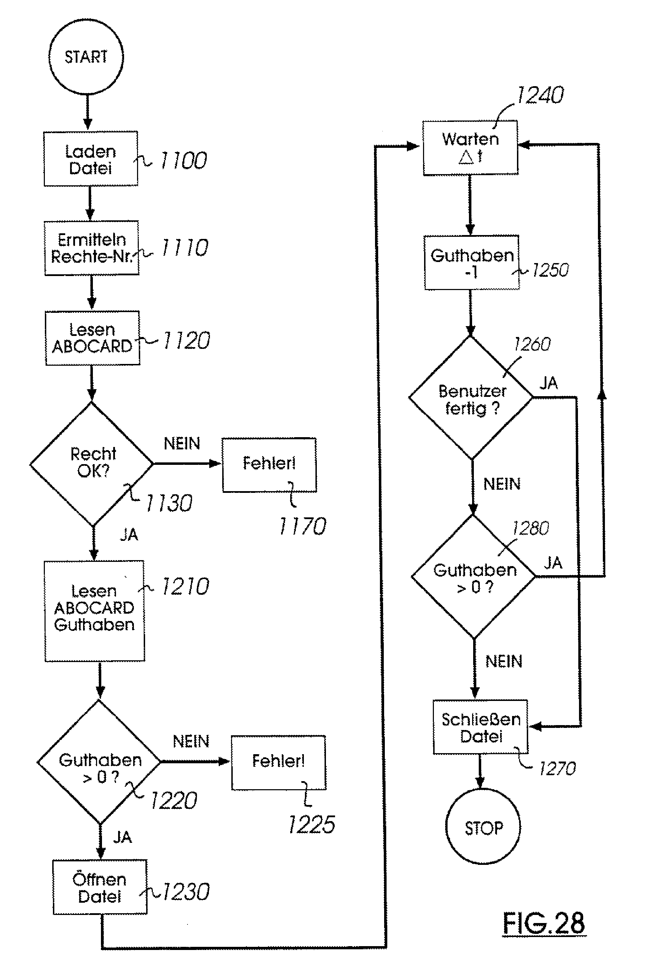

**Fig. 28** zeigt schematisch ein Ablaufdiagramm eines zweiten Verfahrens zur Abrechnung des Bezuges von Software, Texte oder multimediale Werke repräsentierender Dateien von einem Serverteil 110. Dabei wird unter Bezugnahme auf **Fig. 24** davon ausgegangen, daß der Serverteil 110a oder 110b eine Software, Texte oder multimediale Werke repräsentierende Datei 720 in verschlüsselter Form zur Verfügung stellt, die ohne vorherige Entschlüsselung für den Benutzer nutzlos ist. Wie in **Fig. 27** dargestellt, wird beim ersten Verfahren im Schritt 1100 die Datei 720 vom Serverteil 110 heruntergeladen. Dabei wird davon ausgegangen, daß die Datei zum einen das verschlüsselte Werk und zum anderen einen unverschlüsselten Identifizierer enthält, der das Werk eindeutig identifiziert. Dieser Identifizierer, beispielsweise in Gestalt eines eine Rechte-Nummer darstellenden Datenelementes, wird im Schritt 1110 aus der Datei extrahiert. Nach dem Einstecken des Kartenmoduls 140 in den Clientteil wird im Schritt 1120 eine im Speicher (nicht dargestellt) des Kartenmoduls 140 abgelegte Tabelle mit einzelnen Identifizierern, für die das betreffende Kartenmodul 140 ein Benutzungsrecht verkörpert, gelesen. Im Schritt 1130 wird dann geprüft, ob der in Schritt 1110 ermittelte Identifizierer in der im Speicher (nicht dargestellt) des Kartenmoduls 140 abgelegten Tabelle mit einzelnen Identifizierern enthalten ist. Scheitert die Rechteüberprüfung in Schritt 1130, erfolgt eine Fehlermeldung in Schritt 1170. In diesem Fall hat der Endbenutzer kein Recht, das der Datei 720 entsprechende Werk zu nutzen. Im Schritt 1210 wird dann aus der im Speicher (nicht dargestellt) des Kartenmoduls 140 abgelegten Tabelle mit einzelnen Identifizierern, für die das betreffende Kartenmodul 140 ein Benutzungsrecht verkörpert, ein für den globaler oder für den jeweiligen Identifizierer spezifischer Guthabenwert ermittelt. Bei einem Guthaben gleich Null wird in Schritt 1225 eine Fehlermeldung ausgegeben. Bei einem Guthaben größer Null wird im Schritt 1230 der zugehörige private Schlüssel geladen und die Dechiffrierung der Datei 720 vollzogen. Jetzt kann dann der dechiffrierte Klartext der Datei 720 angezeigt oder sonst genutzt werden. Im Schritt 1240 wird eine Nutzung während einer vorbestimmten Zeitdauer ermöglicht. Danach erfolgt in Schritt 1250 eine Verminderung des Guthabens um eine Einheit. Wenn der Benutzer die Nutzung inzwischen eingestellt hat, wird dies in Schritt 1260 festgestellt und in Schritt 1270 die entschlüsselte Datei gelöscht oder auf andere Weise unverfügbar gemacht. Dabei bleibt die Datei 720 in verschlüsselter Form erhalten. Falls der Benutzer die Nutzung fortsetzen will, erfolgt in Schritt 1280 eine Überprüfung, ob ein Guthaben größer Null vorhanden ist und im positiven Fall eine Fortsetzung bei Schritt 1240.

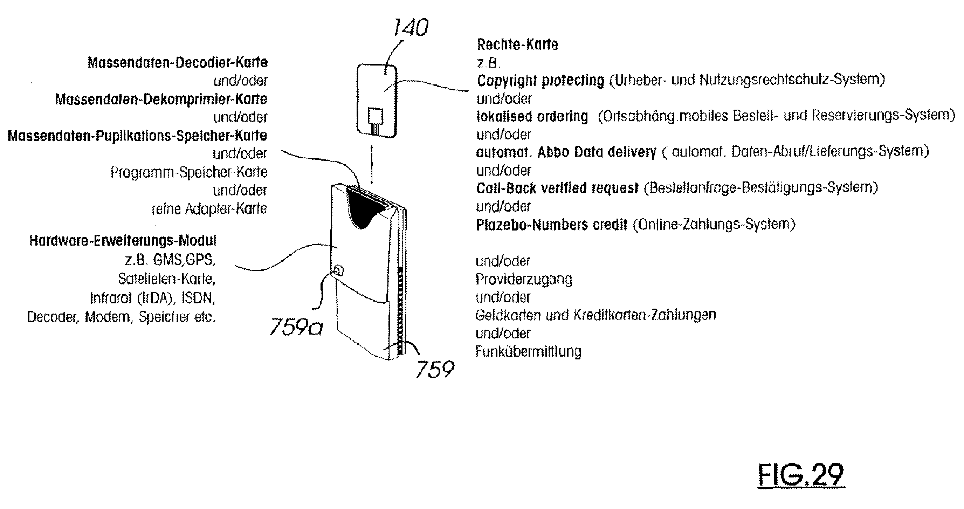

**Fig. 29** zeigt zeigt eine perspektivische Ansicht eines Hardware-Erweiterungsmoduls 759 aus **Fig. 25** mit einer Chipkarte 140 als Kartenmodul.

Auf dem Hardware-Erweiterungsmodul 759 kann ein Bedienelement 759a, beispielsweise eine Taste, vorgesehen sein.

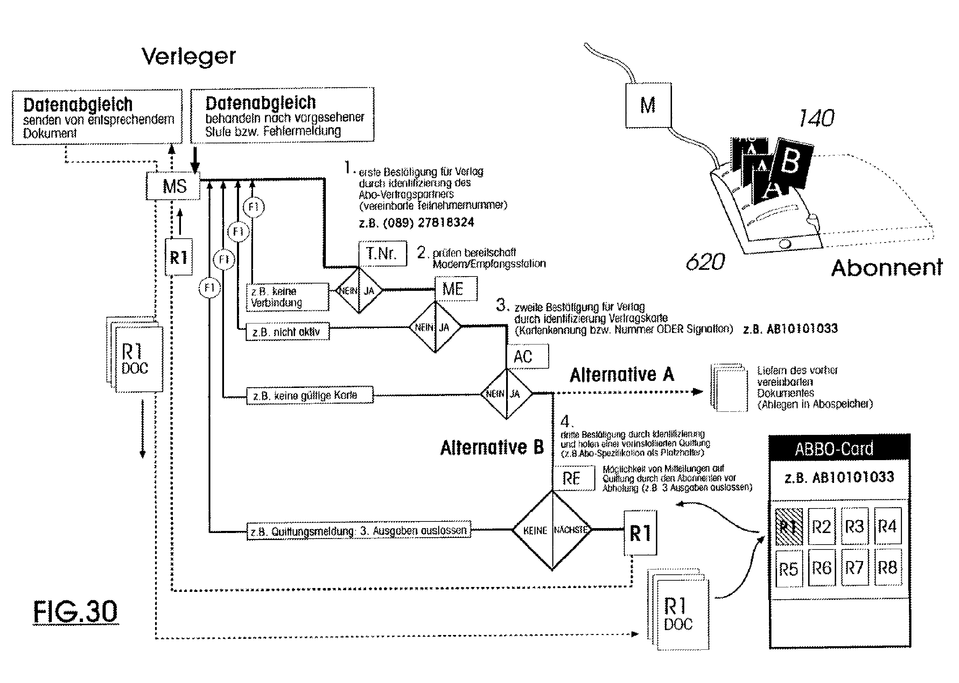

**Fig. 30** zeigt eine schematisierte Ablaufdarstellung eines exemplarischen Abonnement-Bestellvorganges.

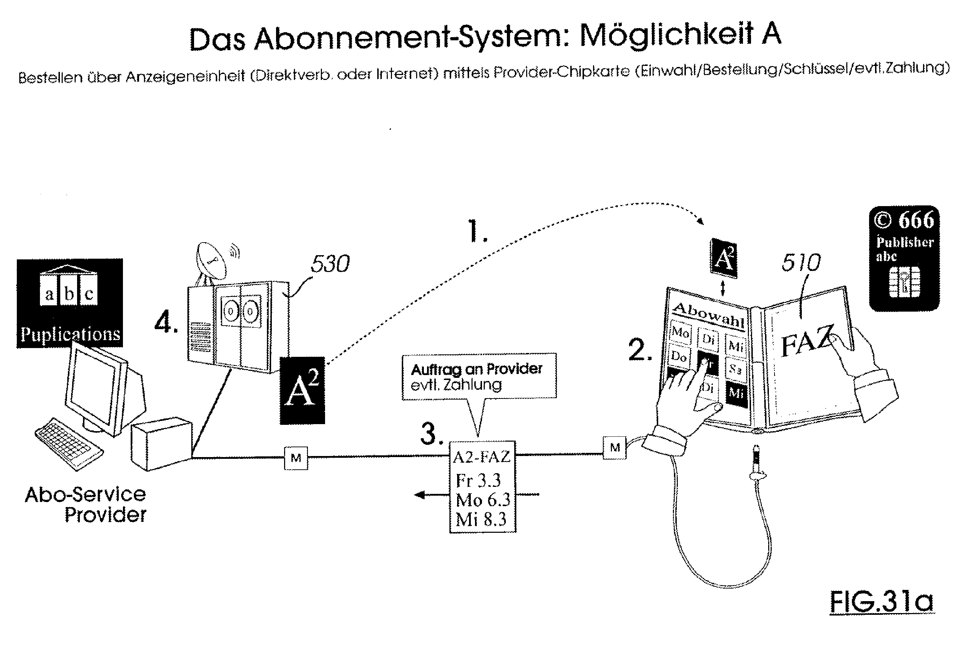

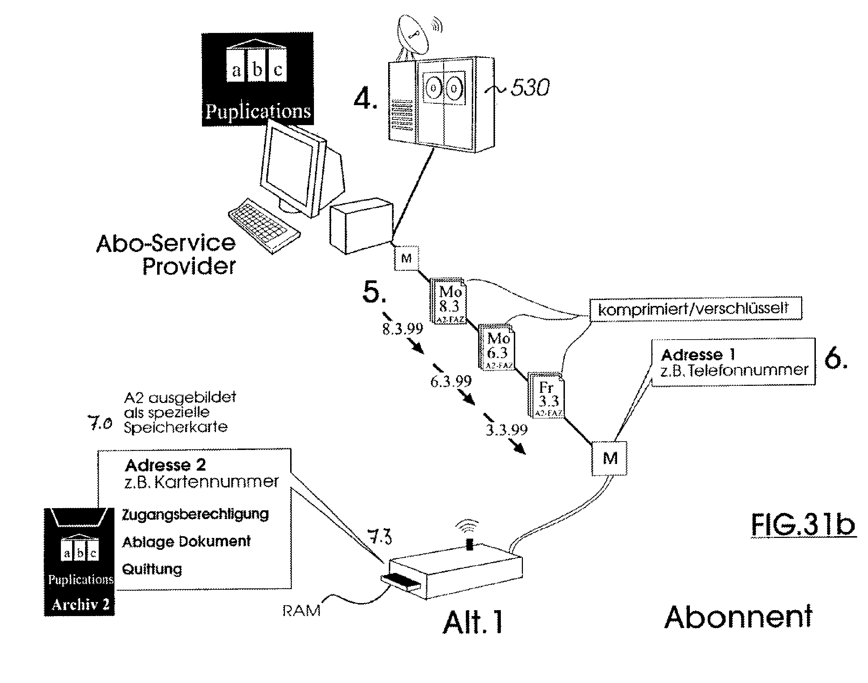

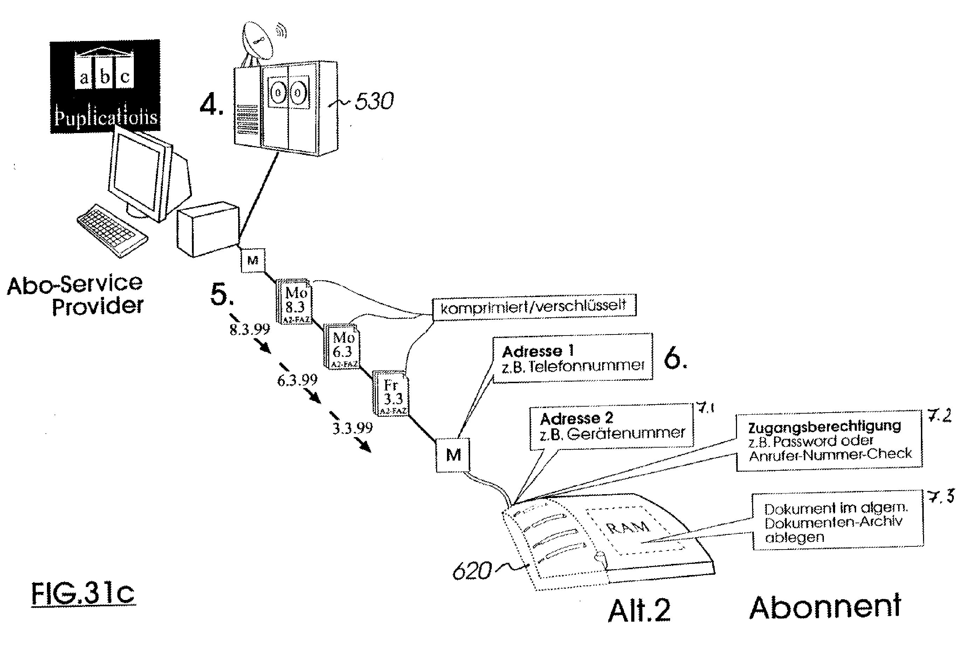

**Fig. 31** zeigt eine schematische Ablaufdarstellung einer ersten Variante einer Abonnement-Abwicklung mittels der erfindungsgemäßen Lösung.

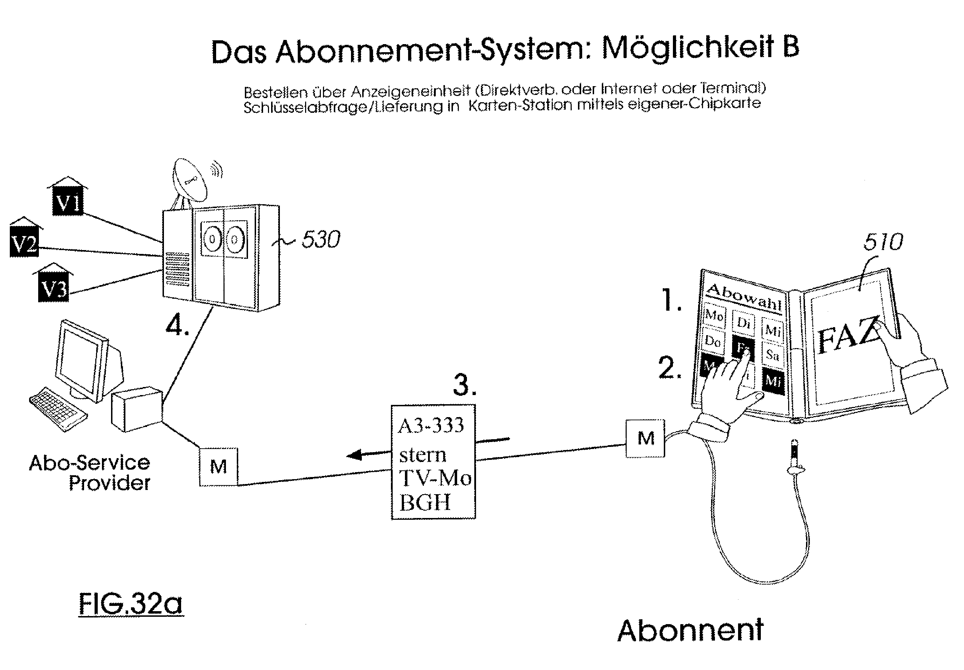

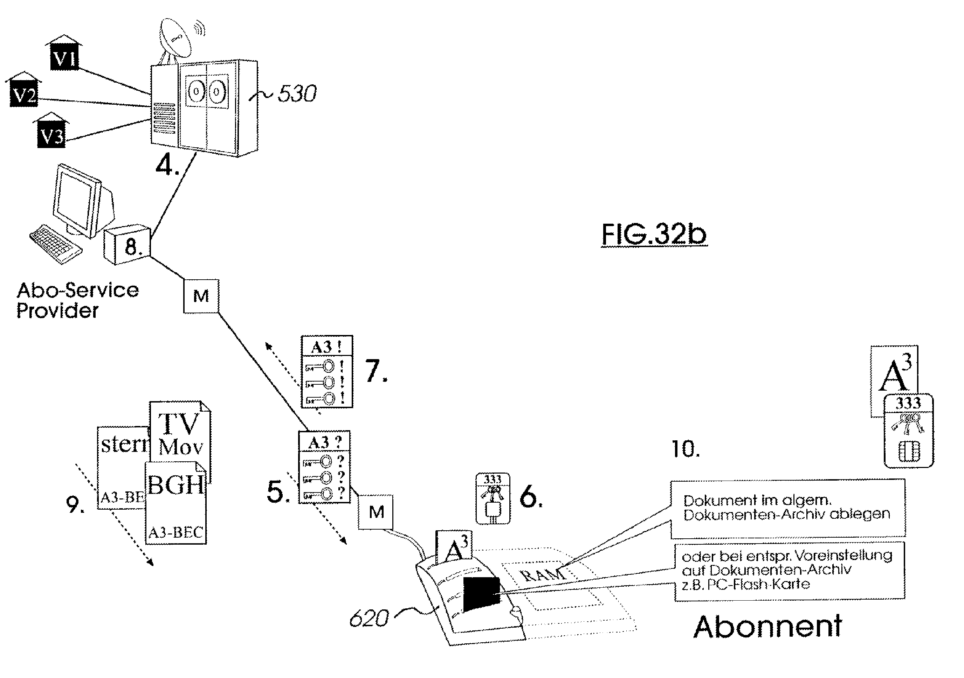

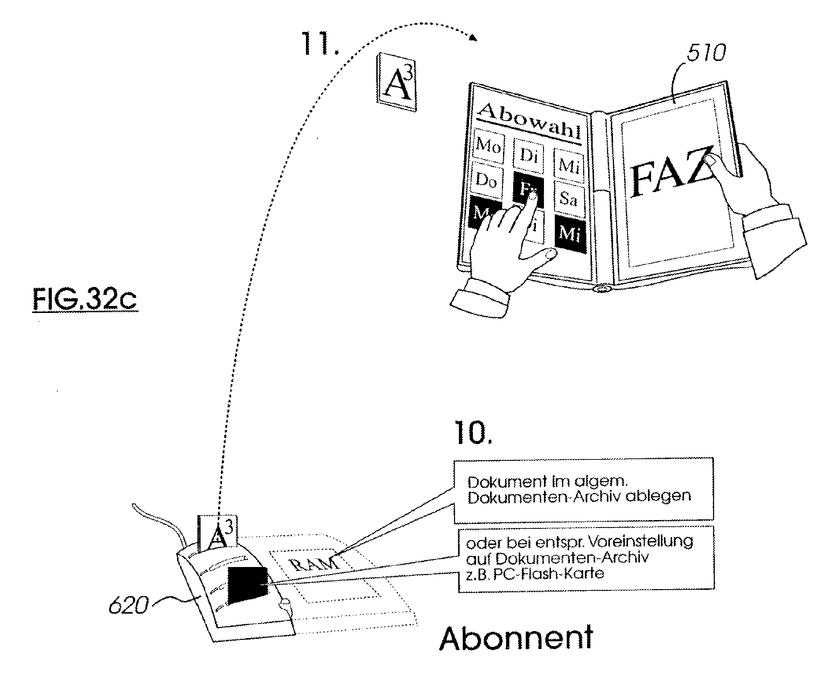

**Fig. 32** zeigt eine schematische Ablaufdarstellung einer zweiten Variante einer Abonnement-Abwicklung mittels der erfindungsgemäßen Lösung.

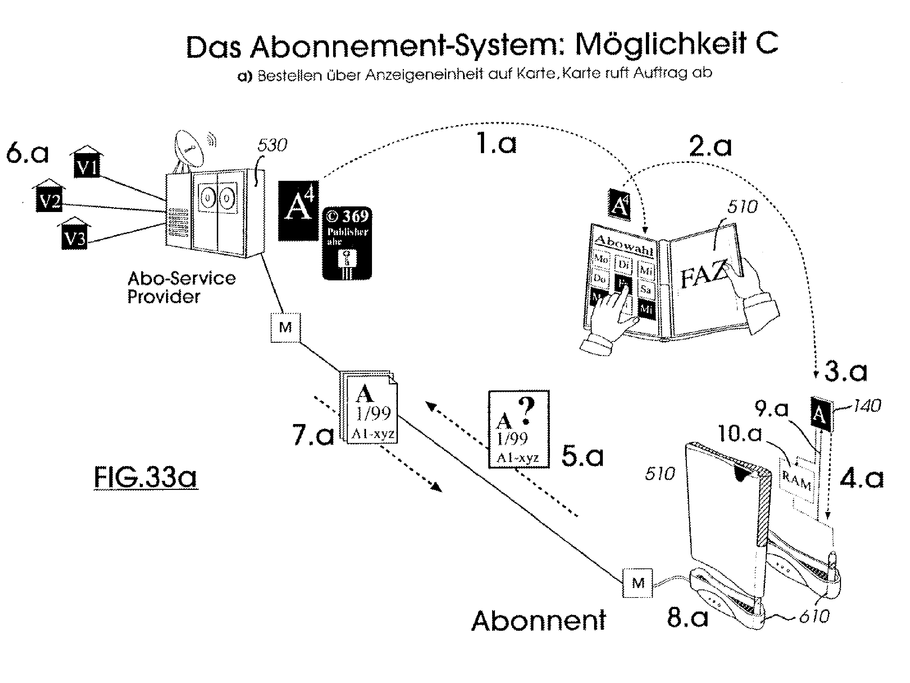

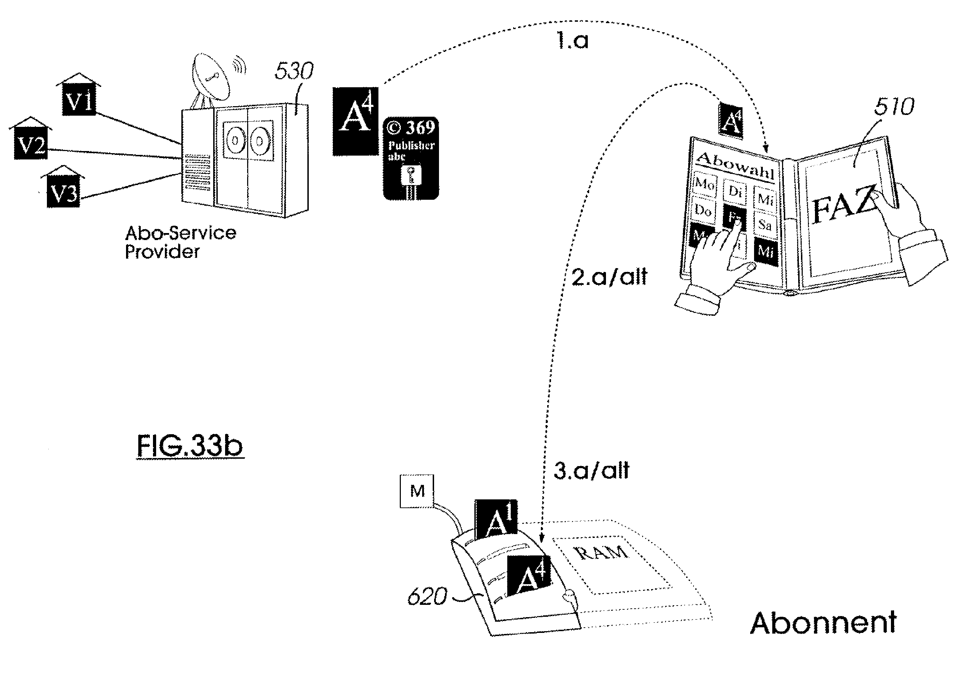

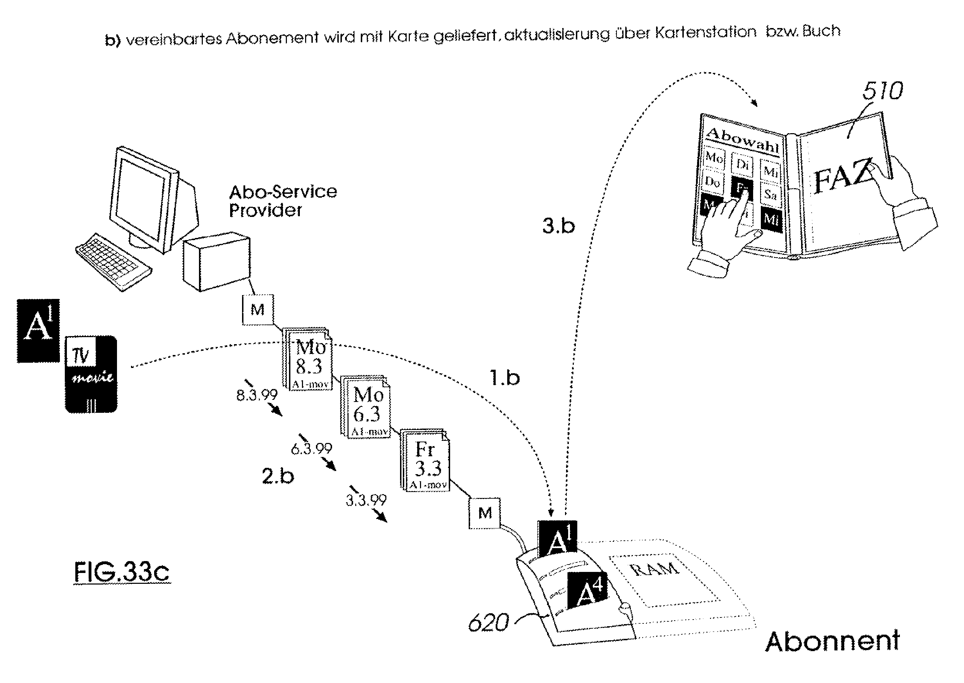

**Fig. 33** zeigt eine schematische Ablaufdarstellung einer dritten Variante einer Abonnement-Abwicklung mittels der erfindungsgemäßen Lösung.

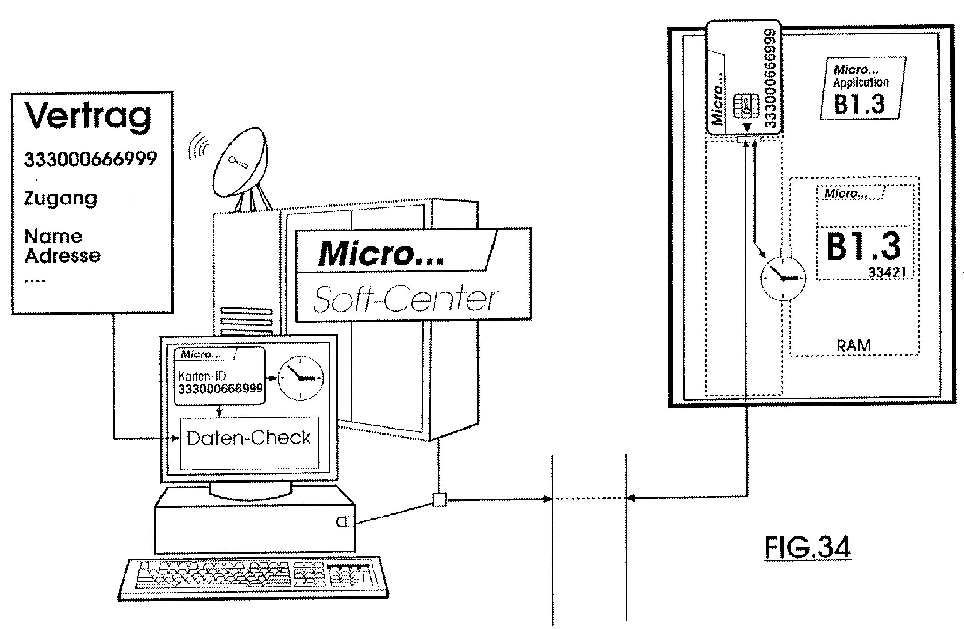

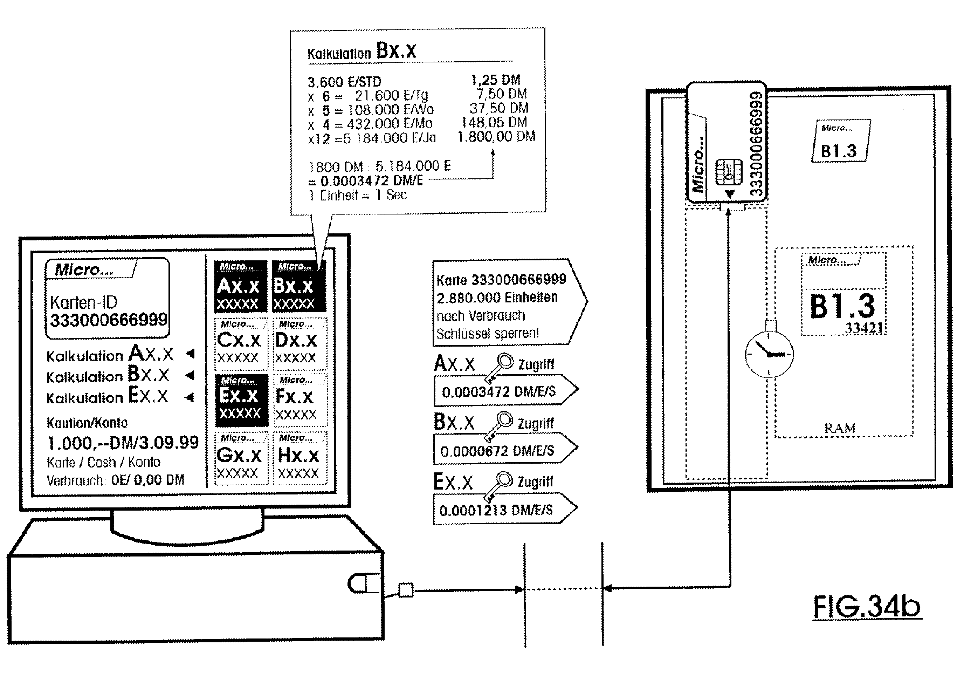

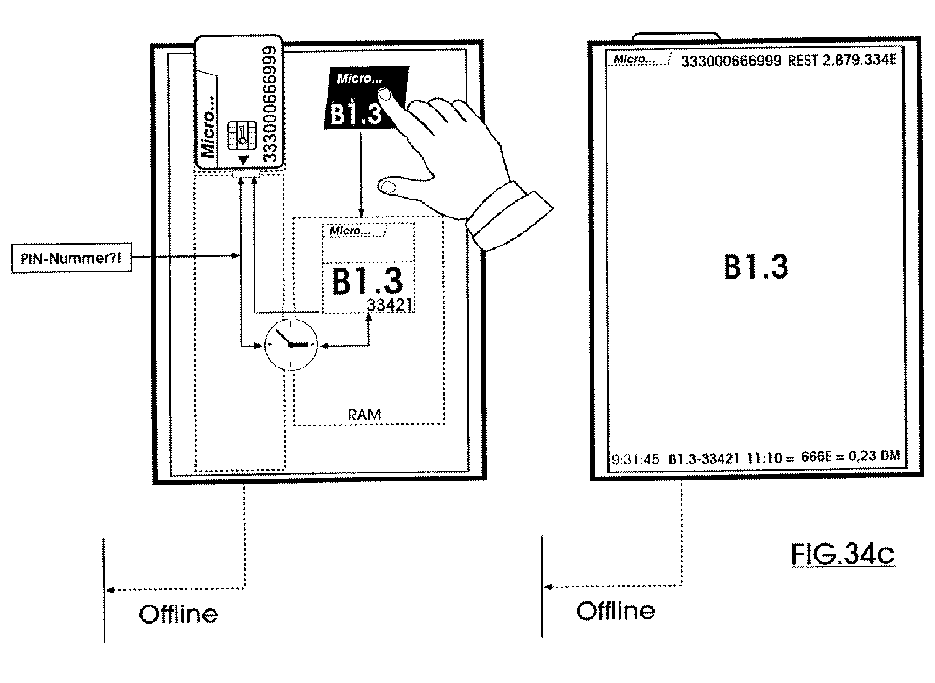

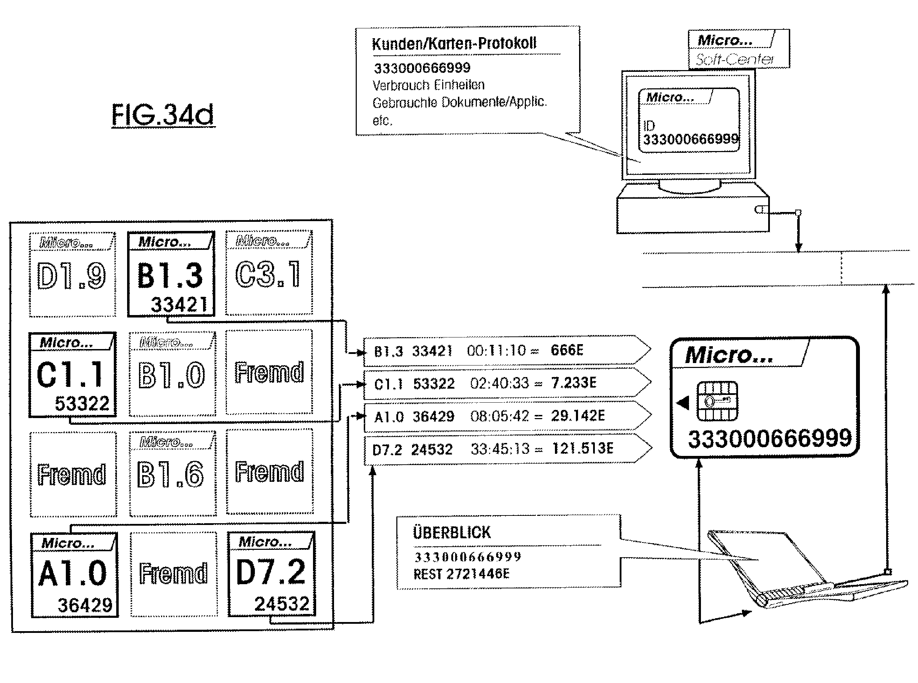

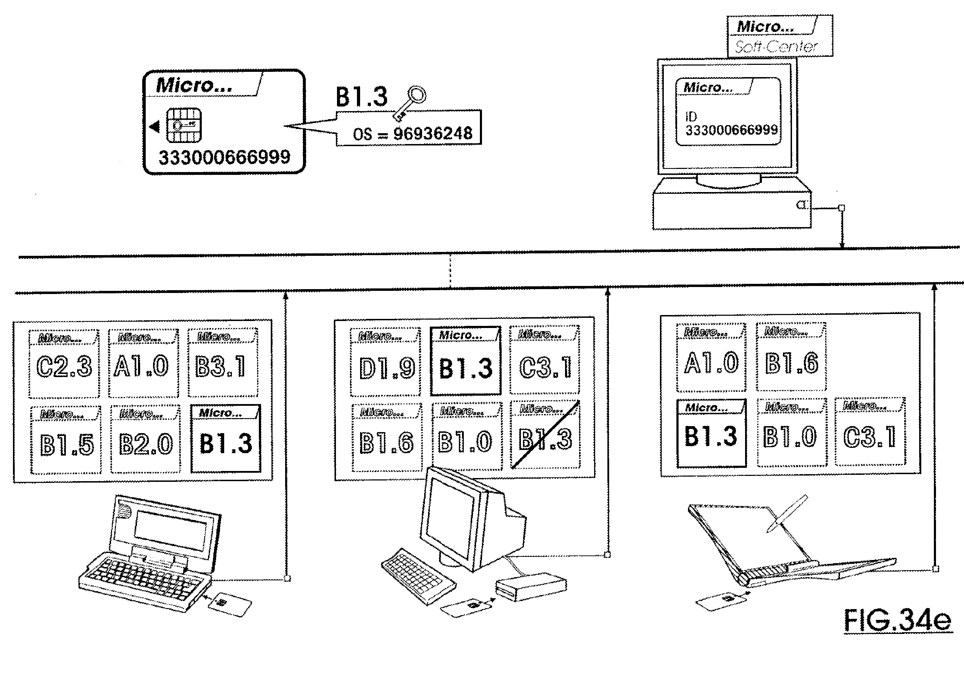

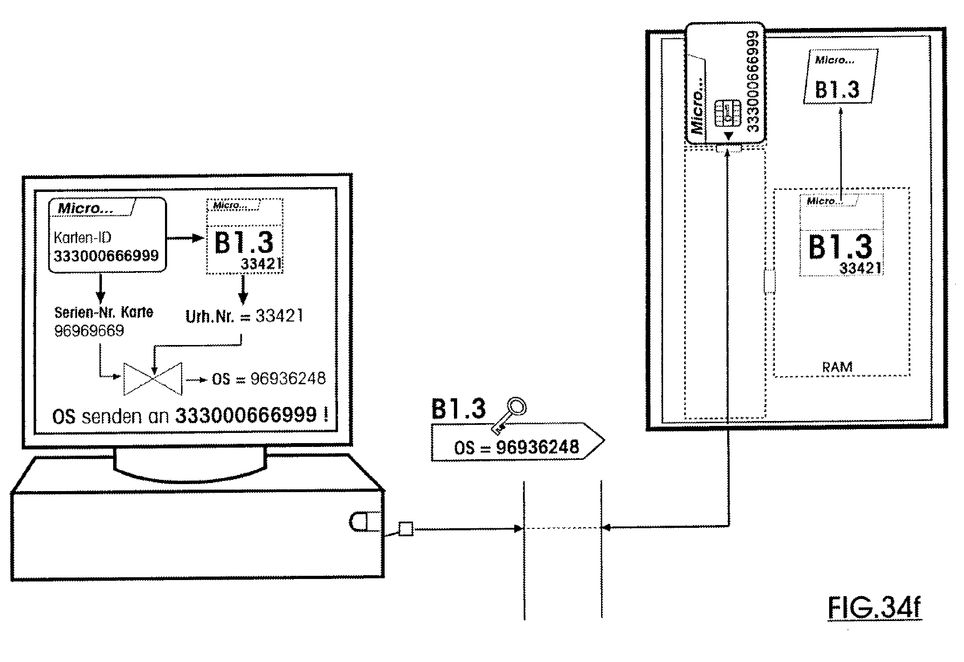

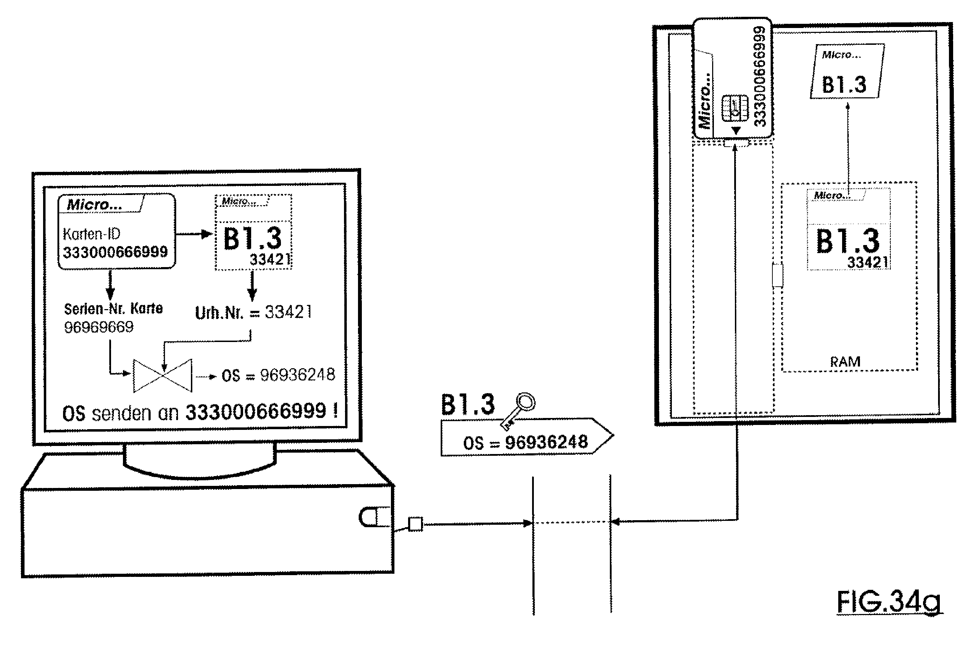

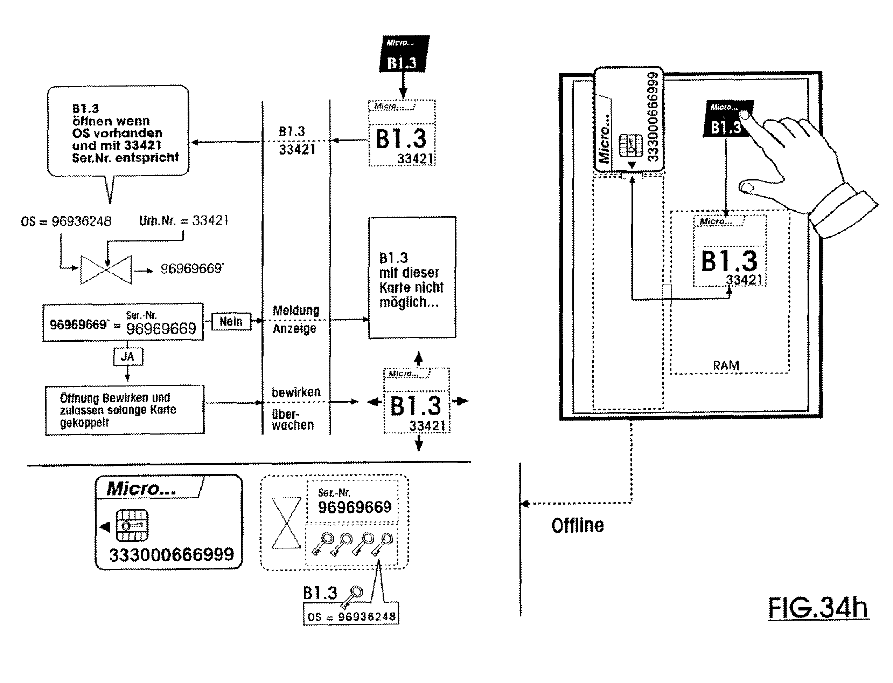

**Fig. 34** zeigt in den **Teil-****Fign. 34a** bis **34h** schematisch Abläufe im Zusammenhang mit der Abrechnung gelieferter Dateien im Kontext der erfindungsgemäßen Lösung. Dabei zeigen die **Fign. 34a** bis **34c** eine Variante, bei der der Werkgebrauch nach Nutzungszeit abgerechnet wird. **Fig. 34c** zeigt die Ansicht des Anzeigeteils 125 mit einer Anzeige der Kartennummer und der verbleibenden Guthabeneinheiten in einer oberen Displayzeile 125a und einer Anzeige der Uhrzeit, der Urhebernummer und der bisher bei diesem Werk aufgelaufenen Nutzungszeit und Nutzungsentgelte. Die Höhe der Nutzungsentgelte kann sowohl bei der zeitabhängigen und bei der volumenabhängigen Abrechnungsweise werkabhängig sein.

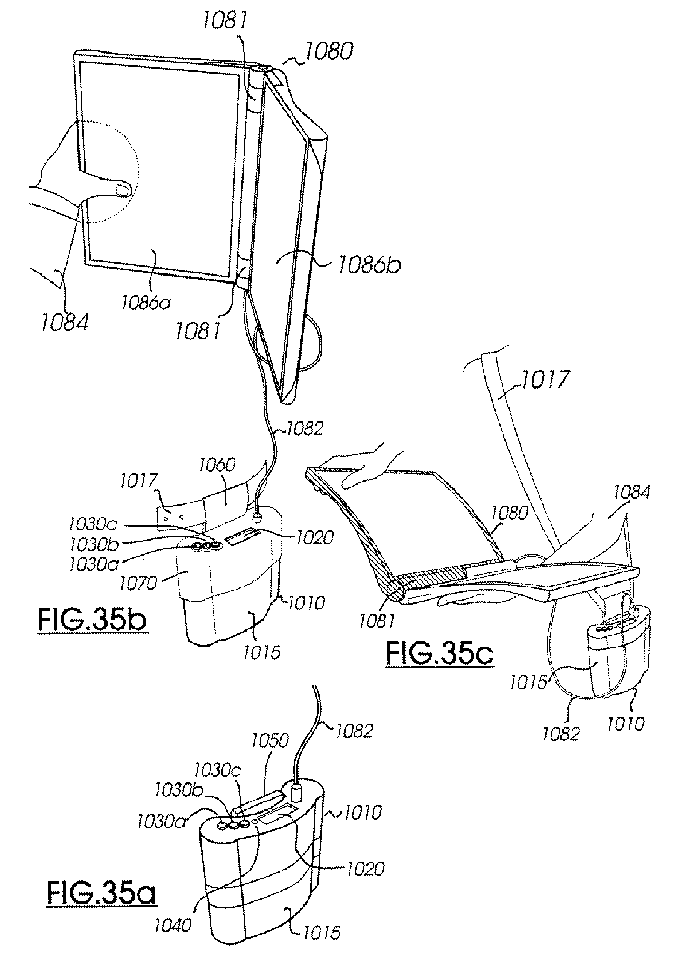

**Fig. 35** zeigt in den Teil-Fign. **35a** bis **35c** eine erfindungsgemäße Datenverarbeitungseinrichtung mit einem Wearable-Rechner 1010.

Der Wearable-Rechner 1010 weist ein Wearable-Rechnergehäuse 1015 auf, welches flach, mit abgerundeten Kanten und leicht konkav gebogen ausgeführt ist, so daß es beispielsweise mit einem Gürtel 1017 leicht am Körper getragen werden kann. Auch andere Formgebungen des Gehäuses 1015 sind möglich, sofern der Rechner leicht am Körper getragen werden kann. Insbesondere kommen solche Formen in Betracht, die ein Einnähen oder Einstecken des Wearable-Rechners 1010 in Kleidungsstücke ermöglichen.

Der exemplarisch dargestellte Wearable-Rechner 1010 weist ein AnzeigeDisplay 1020 sowie beispielsweise als Tasten ausgeführte Bedienelemente 1030a, 1030b und 1030c auf. Auch kann eine Leuchtdiode 1040 als Statusanzeige vorgesehen sein.

An einer geeigneten Stelle weist der exemplarisch dargestellte Wearable-Rechner 1010 eine Aufnahmevorrichtung (nicht dargestellt) für ein Kartenmodul 1050 auf.

**Fig. 35b** zeigt die Halterung des Wearable-Rechners 1010 an einem Gürtel 1017 mittels einer am Gehäuse 1015 auf geeignete Weise befestigten Halteschlaufe. **Fig. 35b** zeigt ebenfalls einen Schmutz- und Spritzwasserschutz mittels einer von oben auf das Gehäuse 1015 des Wearable-Rechners 1010 aufgesteckten Schutzkappe 1070. Darüber hinaus zeigt **Fig. 35b** einen zweiflügeligen Handteil 1080 nach der Art eines Digitalen Buches, der durch eine Scharniereinrichtung 1081 buchartig auf- und zuklappbar und über ein Kabel 1082 mit dem Wearable-Rechner 1010 verbunden ist und der vom Benutzer 1084 in der Hand gehalten wird. Der zweiflügelige Handteil 1080 kann in einer bevorzugten Ausführungsform mit zwei Anzeigedisplays 1086a, 1086b versehen sein, die jeweils im wesentlichen die Innenseiten der beiden Flügel bilden. Dadurch, daß wesentliche Teile der Elektronik in den am Körper getragenen Wearable-Rechner 1010 verlagert sind, kann der Handteil 1080 besonders einfach, dünn und leicht ausgeführt werden.

**Fig. 35c** zeigt einen Benutzer 1084, der den Wearable-Rechner 1010 an einem Schultergurt 1017 trägt und dabei den Handteil 1080 bedien- und lesegerecht in der Hand hält, wobei die rechte Hand rückseitig angeordnete Bedienelemente betätigt.

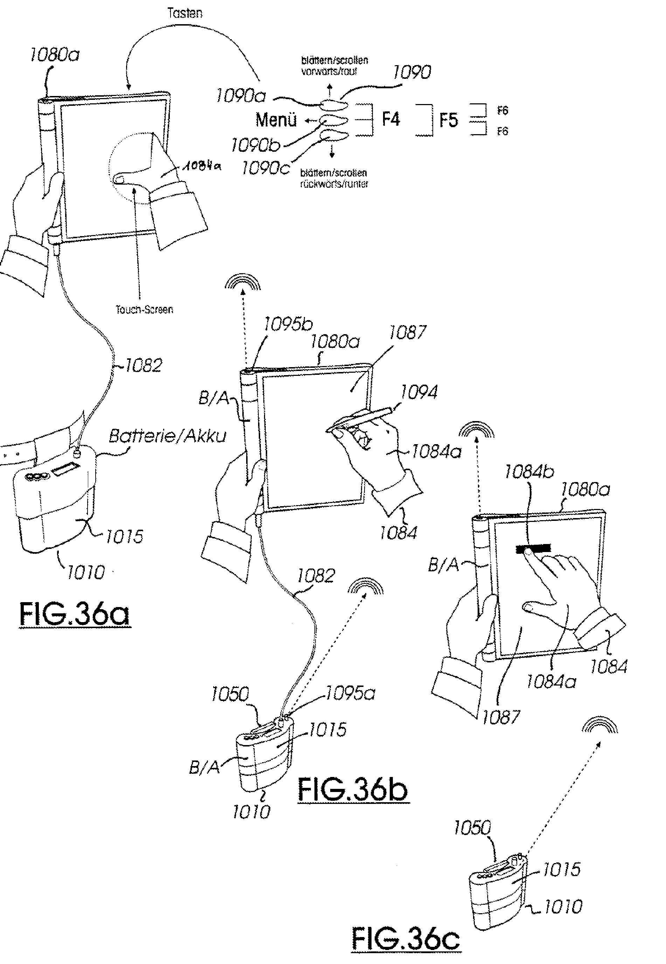

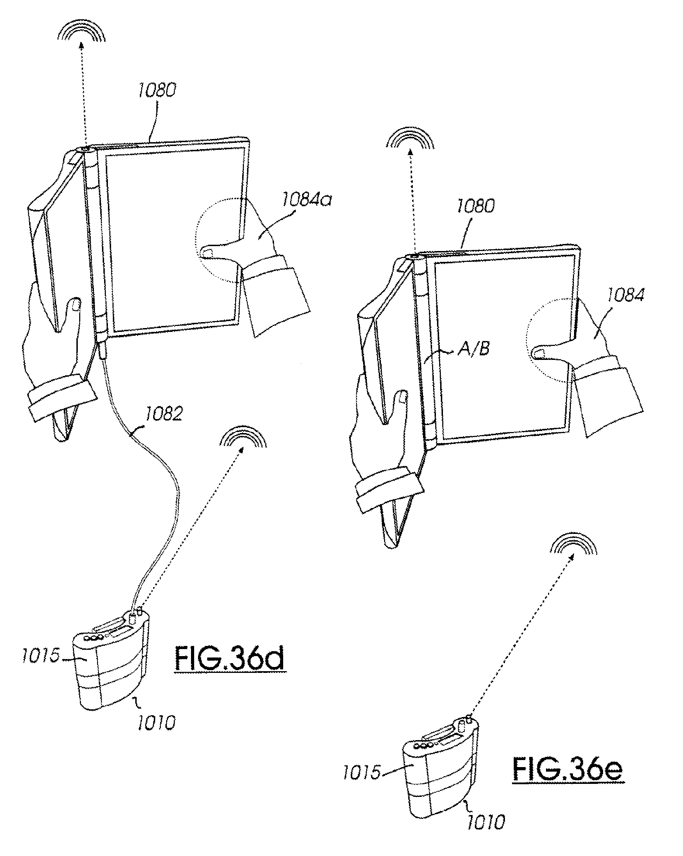

**Fig. 36** zeigt in den Teil-Fign. **36a** bis **36c** Varianten der in **Fig. 35** dargestellten Datenverarbeitungseinrichtung als einteilige Ausführungsform mit einem Display, wobei die Handteile aus den **Fign. 36a** und **36b** sowohl mit als auch ohne eigene Stromversorgung (beispielsweise Akkumulator oder Trockenbatterie) ausgeführt sein können.

**Fig. 36a** bis **Fig. 36c** zeigen einen Wearable-Rechner 1010, der mit einem einflügeligen Handteil 1080a zusammenwirkt, wobei unterschiedliche und kombinierbare Bedienmöglichkeiten angegeben sind.

**Fig. 36a** zeigt symbolisch auf der Rückseite des Handteils 1080a angeordnete Bedienelemente 1090, die beispielsweise in Gestalt von drei Drucktasten 1090a, 1090b und 1090c ausgeführt sein können. Dabei sind die Tasten 1090a, 1090b, 1090c im Greifhandbereich einer Hand 1084a eines Benutzers 1084 angeordnet. In einer besonders bevorzugten Ausführung sind die Tasten einzeln bedienbar, beispielsweise zum Auslösen einer Funktion "aufwärts blättern/rollen" durch Taste 1090a, zum Auslösen einer Funktion "abwärts blättern/rollen" durch Taste 1090c und zum Auslösen einer menübereitstellungsfunktion durch Taste 1090b. In der besonders bevorzugten Ausführungsform können die Tasten 1090a, 1090b und 1090c auch gemeinsam oder in Kombination mit anderen Eingabemitteln wie beispielsweise einem berührungsempfindlichen Bildschirm (nicht dargestellt) oder einer Spracheingabeeinrichtung mit Mikrofon bedienbar sein, um etwa durch gleichzeitiges Bedienen von zwei oder drei Tasten weitere Funktionen auszulösen. Die beispielhaft gezeigte Ausführungsform zeigt ferner eine Kabelverbindung, die den Handteil mit Energie versorgt und die bidirektionale Datenkommunikation zuläßt. Es ist offengelassen, ob der Handteil über einen eigenen Akkumulator oder Trockenbatterie oder dgl. verfügt. In solch einem Fall kann ggfs. die Stromquelle mittelbar über den Wearable-Rechner aufgeladen werden.

**Fig. 36b** zeigt eine Variante, die zusätzlich zu dem Kabel 1082 eine drahtlose Datenverbindung zwischen dem Wearable-Rechner 1010 und dem Handteil 1080a ermöglicht. Diese Drahtlose Datenverbindung kann insbesondere durch eine Hochfrequenz-Funkverbindung, beispielsweise gemäß dem "Bloetooth"-Standard, oder durch eine Infrarot-Verbindung, beispielsweise nach dem IRDA-Standard, erfolgen. Dazu weist der Wearable-Rechner 1010 an einer geeigneten Stelle eine Sende-/Empfangseinrichtung 1095a auf. Auch der Handteil 1080a weist an einer geeigneten Stelle eine Sende-/Empfangseinrichtung 1095b auf, die zu der Sende-/Empfangseinrichtung 1095a des Wearable-Rechners 1010 passend gewählt ist. Möglich ist auch die Datenkommunikation des Handteils und/- oder des Wearable-Rechners entfernten bzw. externen Geräten oder Einrichtungen wie beispielsweise dem Internet, anderen Personal Computern, Druckern etc. über ein kabelloses LAN (Local Area Network) oder WAN (Wide Area Network), während die Kommunikation zwischen Handteil und Wearable-rechner über kable 1082 bewerkstelligt wird.

**Fig. 36b** zeigt das Bedienen des Handteils 1080a durch einen Druckstift 1094, der von einer Hand 1084a eines Benutzers 1084 auf einer Druckempfindlichen Fläche 1087 geführt wird.

**Fig. 36c** zeigt eine Abwandlung der in **Fign. 36a** und/oder **36b** dargestellten Datenverarbeitungseinrichtung, bei dem auf das Kabel 1082 verzichtet worden ist. Während es bei den mit einem Kabel versehenen Ausführungsvarianten in den **Fign. 35** und **36a** bis **26b** möglich ist, die Stromversorgung des Handteils 1080 bzw. 1080a aus einer in dem Wearable-Rechner 1010 angeordneten Stromquelle (nicht dargestellt), beispielsweise einem Akkumulator oder einer Trockenbatterie, vorzunehmen, erfordert das in **Fig. 36c** dargestellte Ausführungsform oder Verwendungsart eine separate Stromversorgung des Handteils 1080a, beispielsweise durch einen im Handteil 1080a angeordneten Akkumulator, der Schwerpunkts- und Lastigkeitsgründen vorzugsweise im Handgriff vorgesehen ist.

**Fig. 36c** zeigt das Bedienen des Handteils 1080a durch einen Finger 1084b einer Hand 1084a eines Benutzers 1084 auf einer Druckempfindlichen Fläche 1087.

**Fign. 36d** und **36e** zeigen weitere Varianten der in den **Fign. 36a** bis **36c** dargestellten Ausführungen, jedoch mit einem zweiflügeligen Handteil 1080, wobei in **Fig. 36e** der Akkumulator bzw. die Trockenbatterie.aus Schwerpunkt- und Lastigkeitsgründen vorzugsweise im Drehgelenkbereich (Scharnier) untergebracht ist.

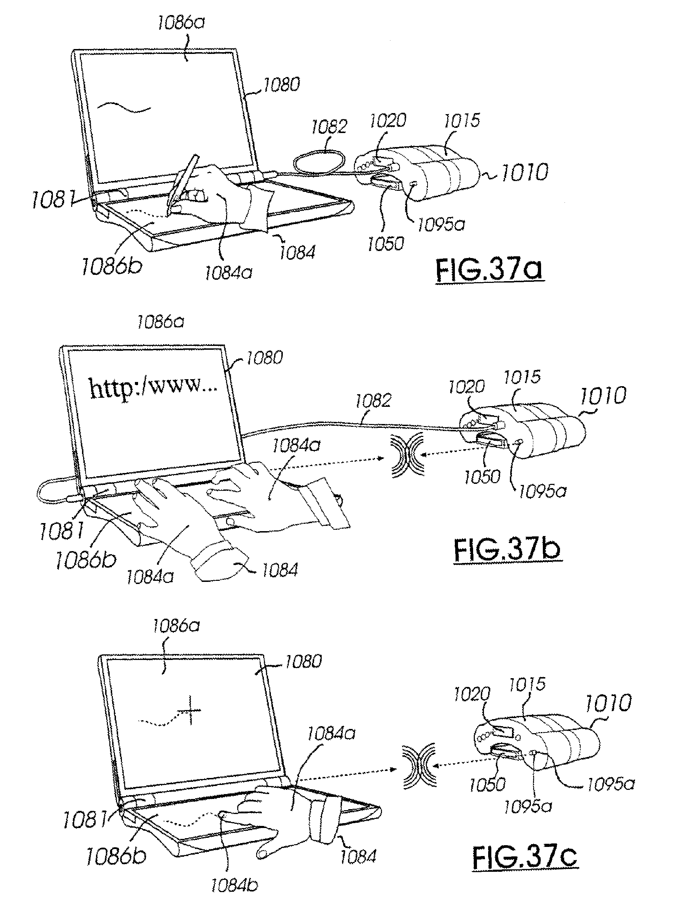

**Fig. 37** zeigt in den Teil-Fign. **37a** bis **37c** eine weitere Variante einer erfindungsgemäßen Datenverarbeitungseinrichtung. Soweit nicht anders angegeben, entsprechen die hierbei angegebenen Bezugszeichen den in den **Fign. 35** und **36** verwendeten Bezugszeichen.

Im einzelnen zeigt **Fig. 37** eine Anwendung der Datenverarbeitungseinrichtung, bei der der Handteil 1080 nach der Art eines Notebooks aufgestellt ist, d.h., ein erster Flügelteil 1086b liegt auf einer ebenen Fläche, beispielsweise einer Tischfläche, auf, wohingegen ein zweiter Flügelteil 1086b senkrecht gestellt ist. Die einzelnen Ausführungsbeispiele sind bezüglich der Bedienung und der entsprechenden Ausbildung in einer weiteren Ausführungsform beliebig kombinierbar (nicht dargestellt).

In **Fig. 37a** ist die nach innen weisende Oberfläche des ersten Flügelteils 1086b druckemepfindlich, und der Benutzer 1084 führt mit seiner Hand einen Druckstift 1094 darauf und führt auf diese Weise eine Dateneingabe aus.

In **Fig. 37b** ist die nach innen weisende Oberfläche des ersten Flügelteils 1086b mit der Funktionalität einer Eingabetastatur ausgestattet, und der Benutzer 1084 tätigt mit seiner Hand 1084a eine Dateneingabe. Offengelassen ist die Ausführung der Tastatur als virtuelle Tastatur, welche über eine sensitive Eingabefläche bedient wird oder als reale Tastatur mit mechanisch zu betätigenden Tasten.

In **Fig. 37c** ist die nach innen weisende Oberfläche des ersten Flügelteils 1086b mit der Funktionalität eines Touchpad ausgestattet, und der Benutzer 1084 tätigt mit einem Finger 1084b seiner Hand 1084a eine Dateneingabe. Am Beispiel wird ein auf der Anzeigefläche dargestllter Cursor dargestellt, welcher die relative Position der Fingerbewegung auf dem als Touchpad ausgebildeten zweiten Flügelteil (Buchklappe) anzeigt.

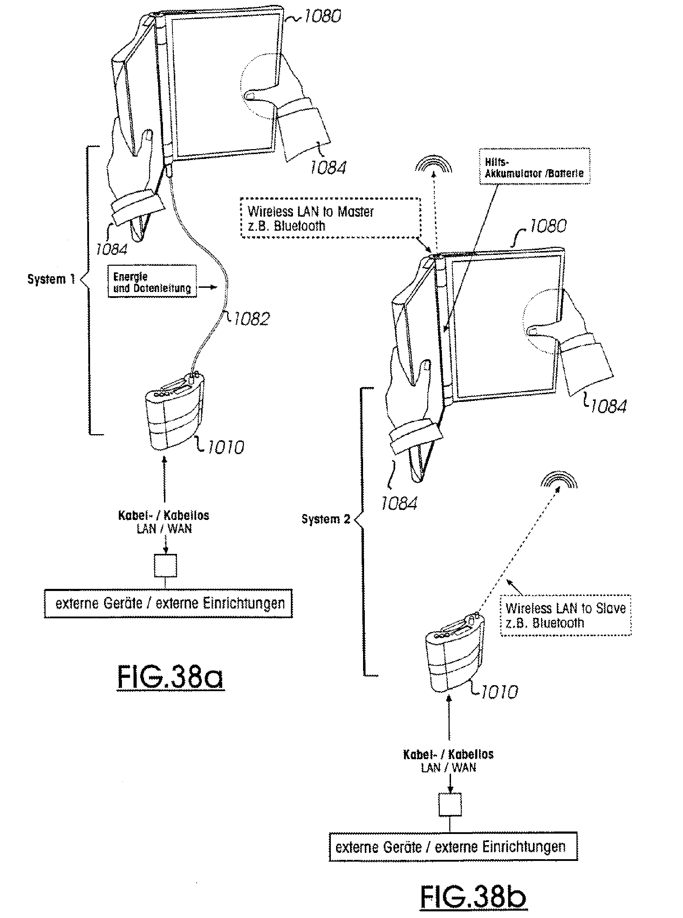

**Fig. 38** zeigt eine Ansicht einer ersten Variante eines erfindungsgemäßen Datenverarbeitungssystems mit einem Wearable-Rechner1010 und einem Handteil 1080, die über ein Kabel 1082 (**Fig. 38a**) oder drahtlos (**Fig. 38b**) miteinander verbunden sind. Diese erste Variante stellt eine besonders kostengünstige Lösung dar, bei der der Handteil 1080 nur im Zusammenwirken mit dem Wearable-Rechner 1010 benutzbar ist. Bei der in **Fig. 38a** gezeigten Variante ermöglicht das Kabel 1082 nicht nur einen Datenaustausch zwischen dem Handteil 1080 und dem Wearable-Rechner 1010; auch die Stromversorgung des Handteils 1080 ist über das Kabel 1082 aus einer im Wearable-Rechner 1010 angeordneten Stromquelle, beispielsweise einem Akkumulator, möglich. Dadurch kann der Handteil 1080 besonders gewichtsarm gebaut werden. Bei dem am Körper getragenen Wearable-Rechner 1010 führt hingegen das Gewicht der erforderlichen Stromquelle nicht notwendig zu einer Einbuße im Bedienungskomfort. Wenn das Kabel 1082 vermieden wird, muß - wie in **Fig. 38b** gezeigt - eine drahtlose Datenverbindung zwischen dem Handteil 1080 und dem Wearable-Rechner 1010 vorgesehen werden. Auch ist es erforderlich, im Handteil 1080 eine Stromquelle (nicht dargestellt) vorzusehen.

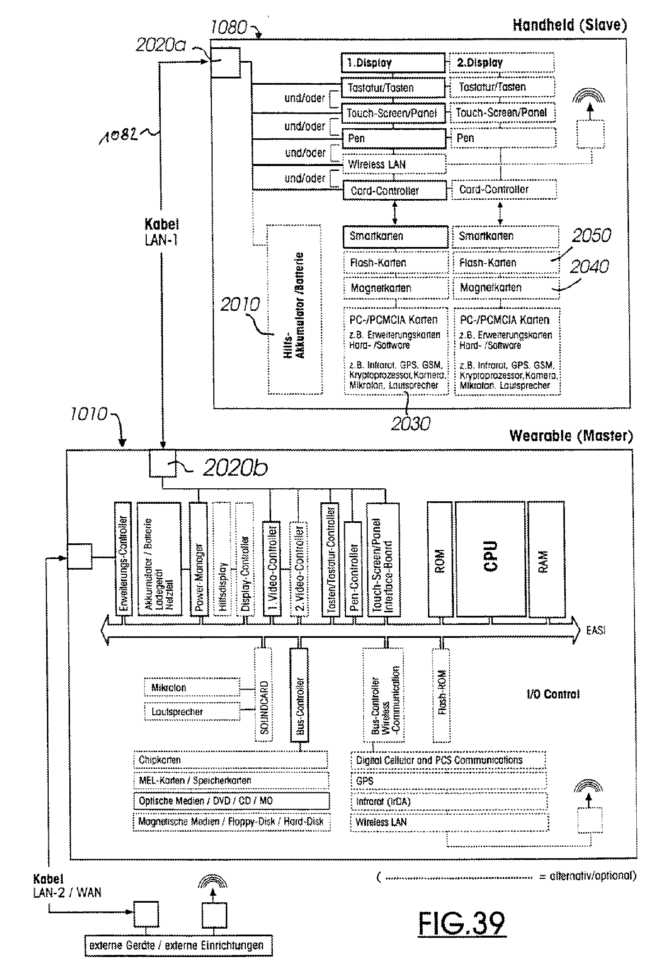

**Fig. 39** zeigt ein stark schematisiertes Blockschaltbild der in **Fig. 38** dargestellten ersten Variante eines erfindungsgemäßen Datenverarbeitungssystems. Insbesondere der zentrale Systembus (EASI), die Zentraleinheit (CPU) und der Speicher (ROM / RAM) sind im Wearable-Rechner 1010 angeordnet. Der Handteil 1080 weist insbesondere mindestens ein, in zweiflügeligen Ausführungen bevorzugterweise auch zwei oder mehr Anzeigedisplays sowie Eingabemittel, beispielsweise Tasten oder druck- oder berührungssensitive Flächen (Touchscreen, Slidepad, etc.) auf. Bei der in **Fig. 38b** dargestellten Variante ist optional eine Stromquelle 2010 im Handteil 1080 vorgesehen. Die elektronischen Einrichtungen des Handteils 1080 und des Wearable-rechners 1010 sind jeweils mit einem Kopplungs-Interface 2020a bzw. 2020b versehen, welches auf geeignete Weise so konstruiert und mit den übrigen Schaltungskomponenten verbunden ist, so daß der Wearable-Rechner 1010 mittels der im Handteil 1080 vorgesehenen Einrichtungen bedient werden kann. Dazu gehört insbesondere auch, daß Daten unter der Kontrolle der Zentraleinheit (CPU) des Wearable-Rechners 1010 auf einem oder mehreren Anzeigedisplays des Handteils 1080 angezeigt werden können. Der Handteil 1080 und der Wearable-Rechner 1010 können in bestimmten Ausführungsformen weitere Baugruppen enthalten, insbesondere
a) mindestens eine Interface-Einrichtung 2030 für Kartenmodule, beispielsweise gemäß dem PCMCIA-Standard;
b) mindestens eine Interface-Einrichtung 2040 für Magnetkarten;
c) mindestens eine Interface-Einrichtung für Flash-ROM-Module;
d) mindestens eine Interface-Einrichtung zur drahtlosen Datenkommunikation, beispielsweise gemäß dem BLUETOOTH-Standard (Funk) oder gemäß dem IRdA-Standard (Infrarot-Datenübertragung);
e) mindestens eine Interface-Einrichtung für Mikrofon und Lautsprecher (Soundkarte);
f) mindestens eine Interface-Karte für Wechselspeichermedien wie CD-ROMs, Disketten etc.; oder
g) mindestens ein Festplattenlaufwerk.

Die in **Fig. 39** in den schematisiert dargestellen Baugruppen angegebenen Beschriftungen geben Hinweise auf deren Art und/oder Zweck. An dem Wearable-Rechner können eine, in bestimmten Ausführungsformen auch mehrere gleichartige oder unterschiedliche Handteile gekoppelt werden.

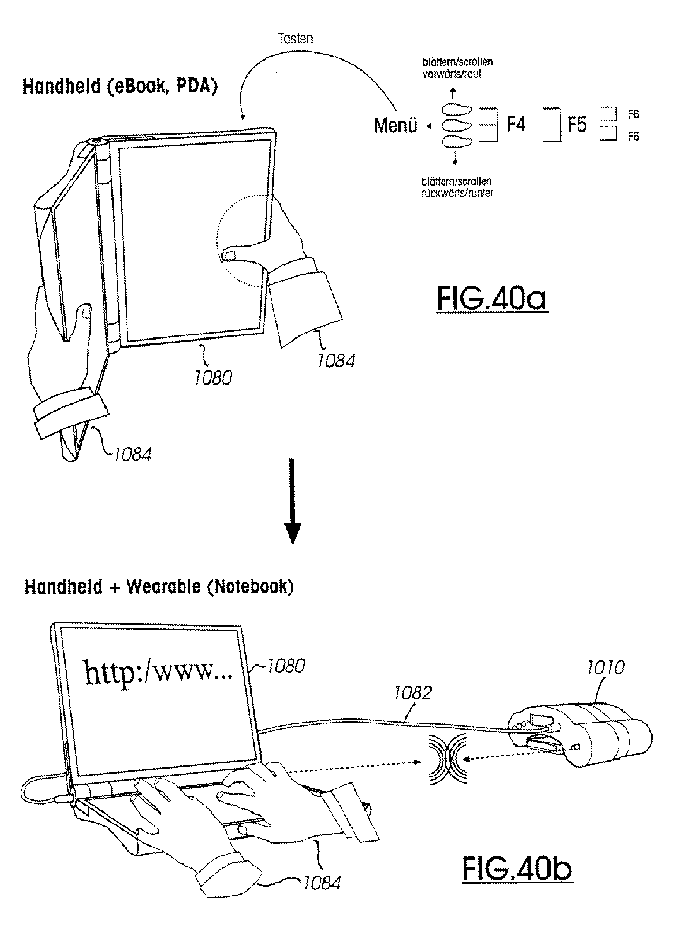

**Fig. 40** zeigt eine Ansicht einer zweiten Variante eines erfindungsgemäßen Datenverarbeitungssystems mit einem Wearable-Rechner 1010 und einem Handteil 1080, wobei der Handteil 1080 auch für sich allein verwendbar ist (**Fig. 40a**) oder drahtlos und/oder mit einem Kabel 1082 mit einem Wearable-Rechner 1010 verbunden werden kann **(****Fig. 40b****).** Im Unterschied zu der in **Fig. 38** dargestellten ersten Variante sind bei der in **Fig. 40** dargestellten Variante der Handteil 1080 sowie der Wearable-Rechner 1010 prinzipiell unabhängig voneinander einsetzbar, da sie beide alls vollwertige Rechner ausgeführt sind. **Fig. 40a** zeigt schematisch eine Nutzung des Handteils 1080 als autonomes Digitales Buch. **Fig. 40b** zeigt ein gekoppeltes System aus Handteil 1080 und Wearable-Rechner 1010. Durch die zusätzliche Datenverarbeitungskapazität des Wearable-Rechners 1010 ist es nun möglich, den Handteil 1080 in einen leistungsstarken Notebook-Rechner zu verwandeln, ohne daß es erforderlich wäre, die hierfür erforderliche Rechnerkapazität von vornherein im Handteil 1080 vorzusehen. Es ist dahermöglich, ein zwar autonom einsetzbares, aber dennoch kostengünstiges Handteil 1080 zu schaffen, wie beispielsweise ein "eBook" zum Lesen von von Buch-, Zeitschriften-Zeitungs- und Dokumenteninformationen und/oder einem Internet-Tablett zum "Surfen" im Internet und/oder einem PDA (Personal Digital Assistant) zum Lesen und Schreiben von Notizen, zur Terminverwaltung usw., der bei Bedarf durch Kopplung mit dem Wearable-Rechner 1010 zu einem leistungsfähigen Gesamtsystem aufgestockt werden kann. Beispielsweise enthält der Handteil nur einen Browser oder ein anderes Betriebssystem als im Wearable-Rechner. Das Betriebssystem kann durch oder nach Kopplung automatisch oder auf eine Eingabe hin umgeschaltet werden und/oder es ergänzt bzw. erweitert das auf dem Handteil befindliche aktive Betriebssystem.

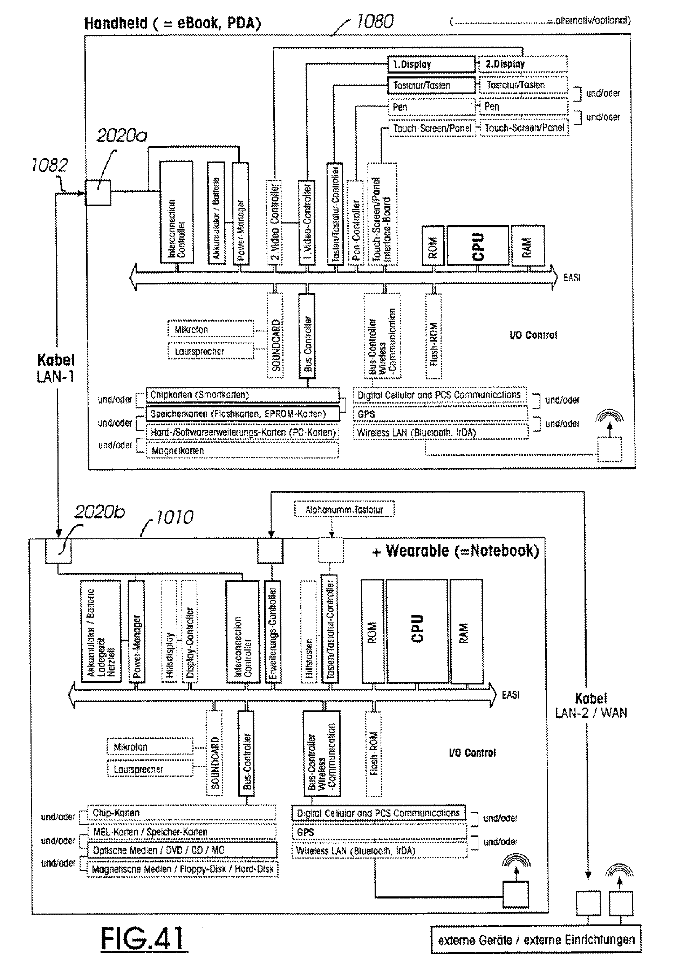

**Fig. 41** zeigt ein stark schematisiertes Blockschaltbild der in **Fig. 39** dargestellten zweiten Variante eines erfindungsgemäßen Datenverarbeitungssystems. Im Prinzip wird auf die vorstehenden Ausführungen zu **Fig. 39** bezug genommen. In **Fig. 41** ist demgegenüber jedoch dargestellt, daß sowohl der Handteil 1080 als auch der Wearable-Rechner 1010 jeweils über eine eigene Zentraleinheit (CPU) nebst Speicher (RAM / ROM) und Systembus (EASI) verfügen.

Die in **Fig. 41** in den schematisiert dargestellen Baugruppen angegebenen Beschriftungen geben Hinweise auf deren Art und/oder Zweck.

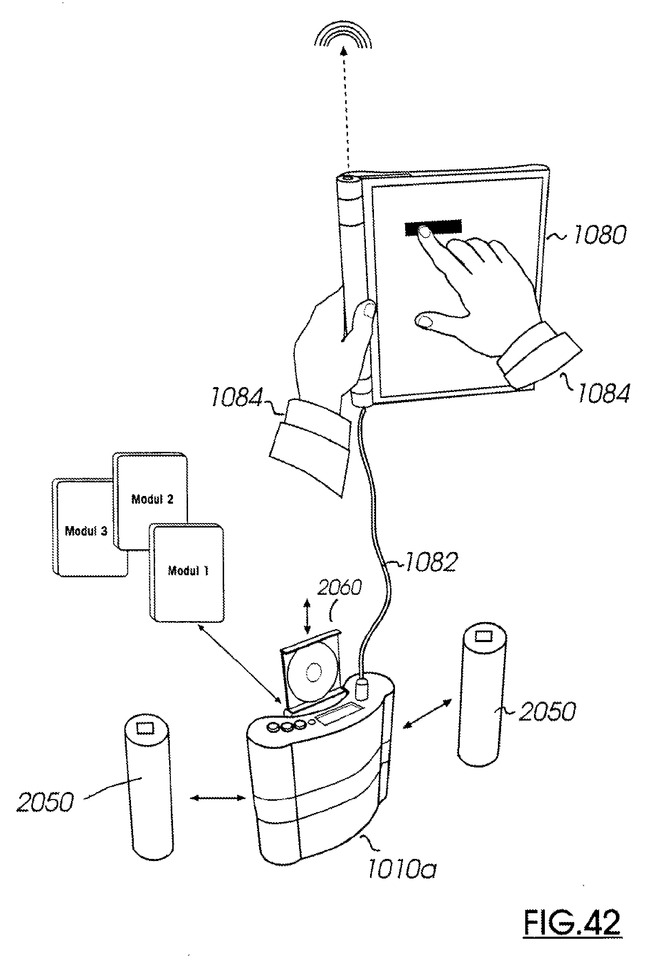

**Fig. 42** zeigt eine Ansicht einer dritten Variante eines erfindungsgemäßen Datenverarbeitungssystems mit einem Wearable-Erweiterungsgerät 1010a und einem Handteil 1080, wobei der Handteil 1080 auch für sich allein verwendbar ist. Im Unterschied zu dem in **Fig. 40** dargestellten System ist das Wearable-Erweiterungsgerät 1010a gegenüber dem dortigen Wearble-Rechner 1010 kein eigenständiger Rechner, sondern beinhaltet lediglich zusätzliche Peripherie und/oder Stromquellen 2050. Zu der im Wearable-Erweiterungsgerät vorgesehenen Perphierie können insbesondere gehören:
a) Laufwerke / Adapter 2060 für Wechselmedien wie CD-ROMs, Disketten, Kartenmodule;
b) Einrichtungen zur drahtlosen Datenübertragung, insbeosndere GSM- und/oder Bluetooth-Subsysteme.

Die im Wearable-Erweiterungsgerät einsetzbaren Peripheriekomponenten können jeweils darin fest installiert sein oder aber komponentenartig modular auf- oder umrüstbar sein.

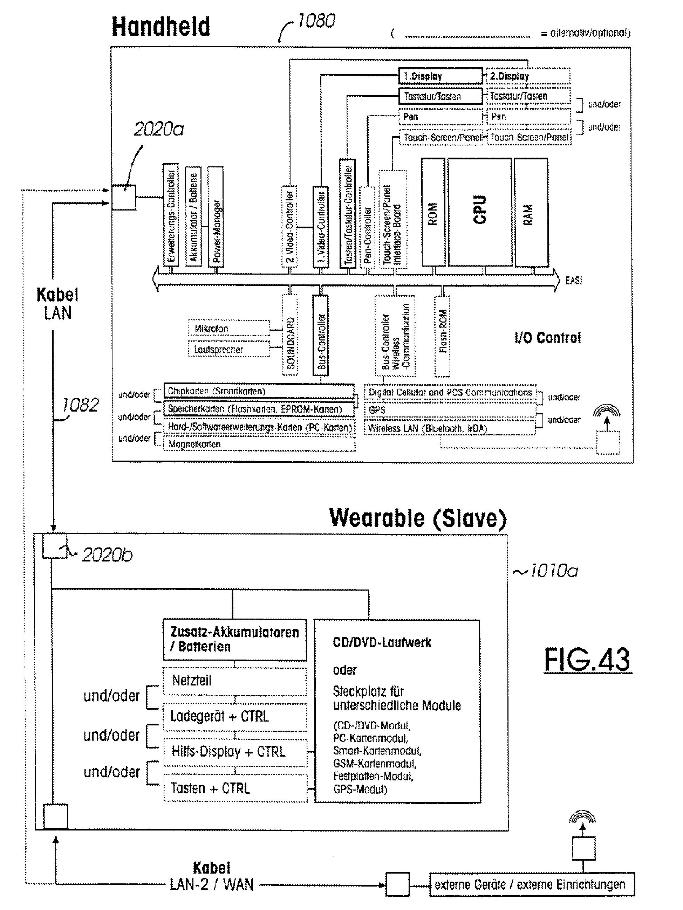

**Fig. 43** zeigt ein stark schematisiertes Blockschaltbild der in **Fig. 42** dargestellten dritten Variante eines erfindungsgemäßen Datenverarbeitungssystems. Im Prinzip wird auf die vorstehenden Ausführungen zu **Fign. 39** und **41** bezug genommen. In **Fig. 43** ist demgegenüber jedoch dargestellt, daß nur der Handteil 1080, nicht jedoch das Wearable-Erweiterungsgerät 1010a über eine eigene Zentraleinheit (CPU) nebst Speicher (RAM / ROM) und Systembus (EASI) verfügt.

Die in **Fig. 43** in den schematisiert dargestellen Baugruppen angegebenen Beschriftungen geben Hinweise auf deren Art und/oder Zweck.

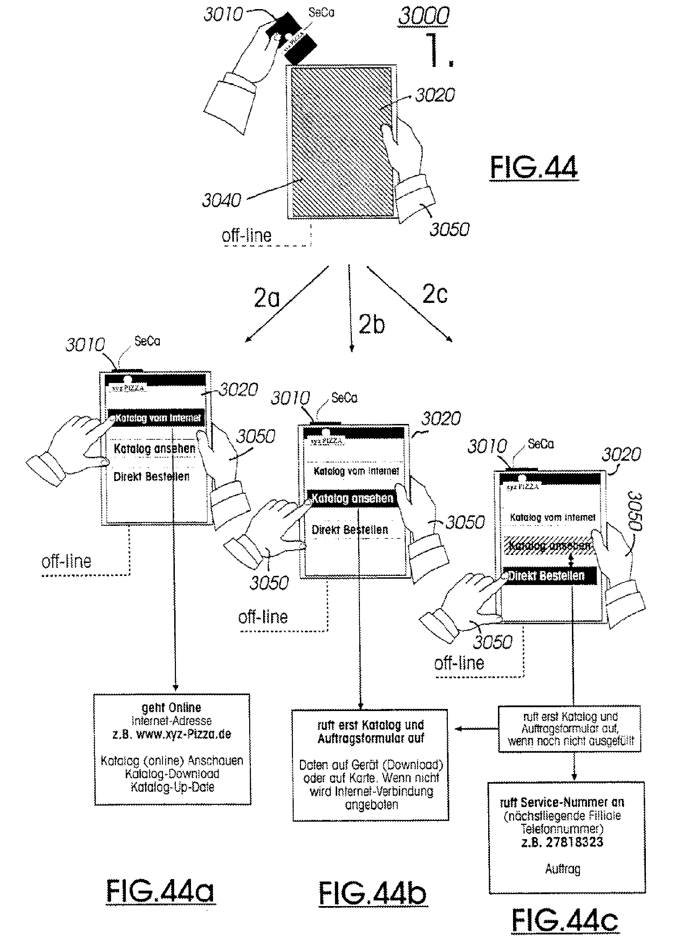

**Fig. 44** zeigt schematisch eine erfindungsgemäße Datenverarbeitungseinrichtung 3000 zur Auswahl und Bestellung von Gütern oder Dienstleistungen, die nicht unmittelbar über Datenleitungen erbracht werden können, beispielsweise die Lieferung körperlicher Waren oder die Erbringung von Dienstleistungen wie beispielsweise eine Taxifahrt oder eine Bestellung und/oder Reservierung von beispielsweise Kino- oder Theaterkarten oder Tischreservierungen in einem Restaurant oder Einkaufsbestellung an Einzelhandelsgeschäfte und/oder Großvertriebsformen wie Großhandelketten oder Kaufhäuser. Die Datenverarbeitungseinrichtung 3000 umfaßt insbesondere einen Handteil 3020, der von einer Bedienperson 3030 bedient wird, und ein Kartenmodul 3010, der mindestens eine nichtflüchtige Datenspeichereinrichtung (nicht dargestellt) aufweist und typischerweise vom Lieferanten oder Erbringer der Dienstleistung ausgegeben werden kann. Es ist aber auch möglich, daß das Kartenmodul von Dritten ausgegeben wird.

Der Handteil kann beispielsweise als Digitales Buch oder Palmtop oder PDA oder Notebook oder Mobiltelefon ausgestaltet sein und beinhaltet einen Rechner mitsamt Anzeigedisplay 3040 und geeigneten Eingabemitteln, z.B. einem Touchscreen. Der Handteil dient als universelles Informations-, Bestell-, und Reservierungsmittel und ist vorteilhafterweise mit einem geeigneten Datenferkommunikationsmittel mit oder ohne Kabel ausgestattet. Eine Low-Cost-Möglichkeit besteht in der Datenkommunikation über das Festnetz. Bevorzugterweise kann in diesem Fall eine Einrichtung vorgesehen sein, die sowohl das Telefonieren und/oder die Datenkommunikation gleichzeitig ermöglicht. Gegebenenfalls kan ein geeignetes Übertragungsprotokoll vorgesehen werden, das eine derartige gleichzeitige Übertragung zuläßt.

**Fig. 44a** zeigt schematisch den Handteil 3020 nach dem Einstecken oder Ankoppeln des Kartenmoduls 3010 in oder an eine dafür vorgesehene Koppeleinrichtung (nicht dargestellt).

Die Datenverarbeitungseinrichtung mitsamt der auf ihr ablaufenden Software kann beispielsweise derart eingerichtet sein, daß durch den Einsteck- oder Ankoppelvorgang über eine geeignete Telekommunikationseinrichtung (nicht dargestellt) eine Verbindung zu einem Serverrechner (nicht dargestellt) des Anbieters aufgebaut wird. Danach kann automatisch ein Katalog bestellbarer Waren und/oder Dienstleistungen vom Serverrechner (nicht dargestellt) in den Speicher des Kartenmoduls (nicht dargestellt) und/oder in einen Speicher (nicht dargestellt) des Handteils 3020 heruntergeladen und in zweckdienlicher Weise auf dem Anzeigedisplay 3040 angezeigt werden kann. Unmittelbar nach dem Ende des Download-Vorganges kann die Verbindung zum Serverrechner automatisch unterbrochen werden, um Telekommunikationskosten zu sparen. In der Praxis kann das Datenverarbeitungssystem beispielsweise derart ausgestaltet sein, daß es sich beispielsweise über eine Telefonleitung mittels Modem (nicht dargestellt) oder ISDN-Adapter (nicht dargestellt) oder sogar drahtlos über ein GSM-Mobiltelefon-Modul (nicht dargestellt) direkt in den Serverrechner einwählt und unter Nutzung geeigneter Protokolle eine Datenkommunikation mit dem Serverrechner aufnimmt. Es ist aber auch möglich, die Telekommunikationsverbindung zunächst zu einem Internetzugangsprovider aufzubauen und sodann unter Angabe einer Internetadresse beispielsweise in Gestalt einer URL (Uniform Resource Locator) eine Datenkommunikation mit dem Serverrechner zu beginnen, sofern dieser mit dem Internet verbunden ist. Wesentlich ist in jedem Fall, daß eine in dem nichtflüchtigen Speicher (nicht dargestellt) des Kartenmoduls 3010 gespeicherte Information beispielsweise in Gestalt von mindestens einer Telefonnummer und/oder Internet-adresse den vollautomatischen Aufbau der Datenkommunikation mit dem Serverrechner und das Herunterladen des Kataloges ermöglichst, sobald das Kartenmodul 3010 in den Handteil 3020 eingesteckt oder an diesen angekoppelt wird. Der Benutzer 3050 wird dadurch der Notwendigkeit enthoben, sich Telefonnummern, Internetadressen und Telekommunikations-Bedienungs- und Navigationsabläufe merken zu müssen.

In einer alternativen Variante ist es auch möglich, den gesamten Katalog der bestellbaren Waren und Dienstleistungen im nichtflüchtigen Speicher des Kartenmoduls im vorhinein fertigungsseitig abzulegen und so den Schritt des Herunterladens des Kataloges zu vermeiden. Es ist optional auch möglich, vorzusehen, daß wie vorstehend eine Telekommunikationsverbindung zum Herunterladen und/oder Lesen des Kataloges aufgebaut wird, wenn festgestellt wird, daß keine oder jedenfalls keine aktuellen katalogdaten vorliegen.

**Fig. 44b** zeigt einen Bedienvorgang, bei dem der Benutzer 3050 durch Druckbeaufschlagung des als Touch-Screen ausgeführten Anzeigedisplays 3040 in einem Modus wechselt, in dem er den Katalog auf dem Anzeigedisplay 3040 betrachten kann.

**Fig. 44c** zeigt einen nachfolgenden Bedienschritt, bei dem der Benutzer einzelne bestellbare Waren und/oder Dienstleistungen aus dem Katalog auswählt oder ausgewählt hat und eine Bestellung veranlaßt. Dabei stellt die Datenverarbeitungseinrichtung 3000 wiederum - wie bereits beim Katalog-Download - vollautomatisch eine Telekommunikationsverbindung zum Serverrechner (nicht dargestellt) her und übermittelt die Bestelldaten. In einer bevorzugten Ausführungsform übermittelt der Serverrechner eine Auftragsbestätigung an die Datenverarbeitungseinrichtung 3000 zurück.

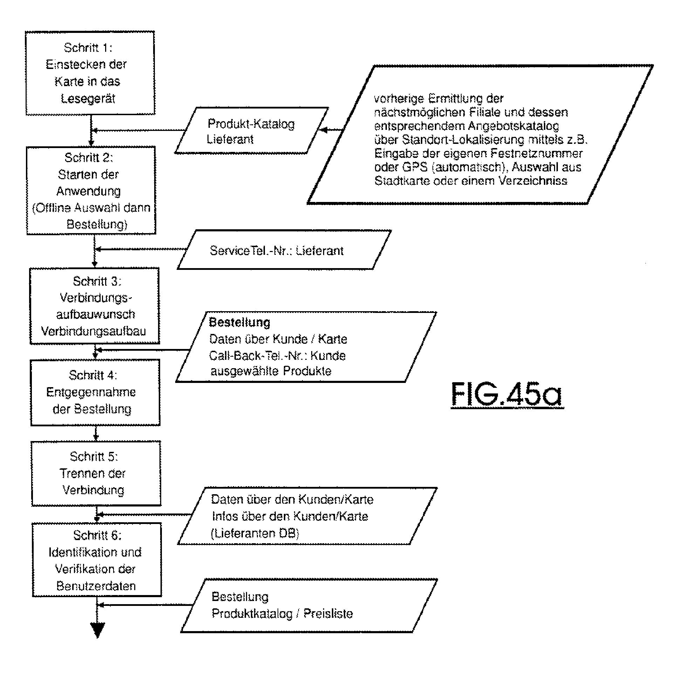

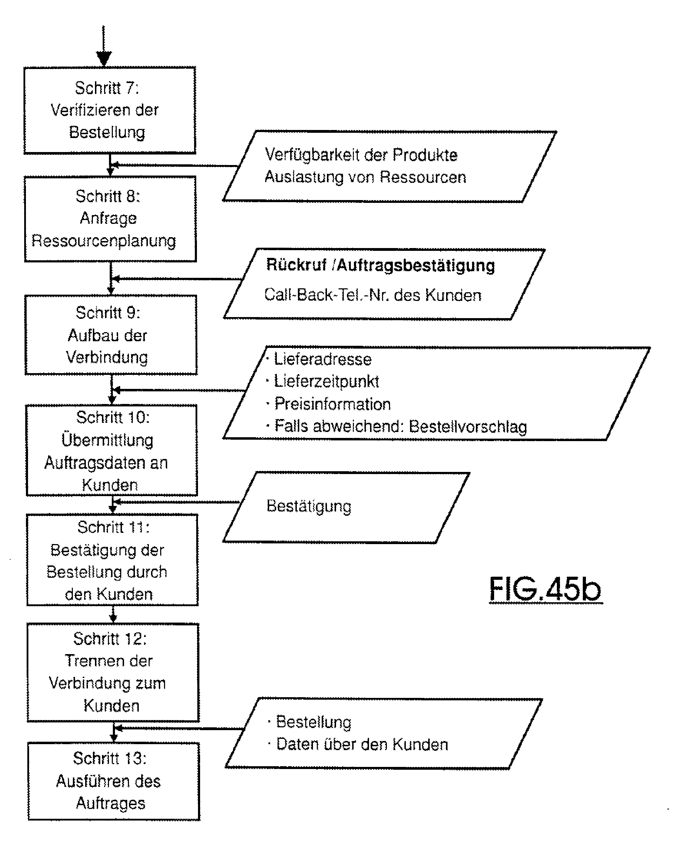

**Fig. 45** zeigt schematisch ein Ablaufdiagramm eines Auswähl- und Bestellvorganges mit der in **Fig. 44** dargestellten Datenverarbeitungseinrichtung. Dabei sind die aufeinanderfolgenden Schritte in ihrer ablaufbedingten Reihenfolge durch in Rechtecke eingefaßte Texte angegeben. Für die einzelnen Schritte sind Eingabewerte erforderlich, die durch die Texte in den Rauten spezifiziert sind.

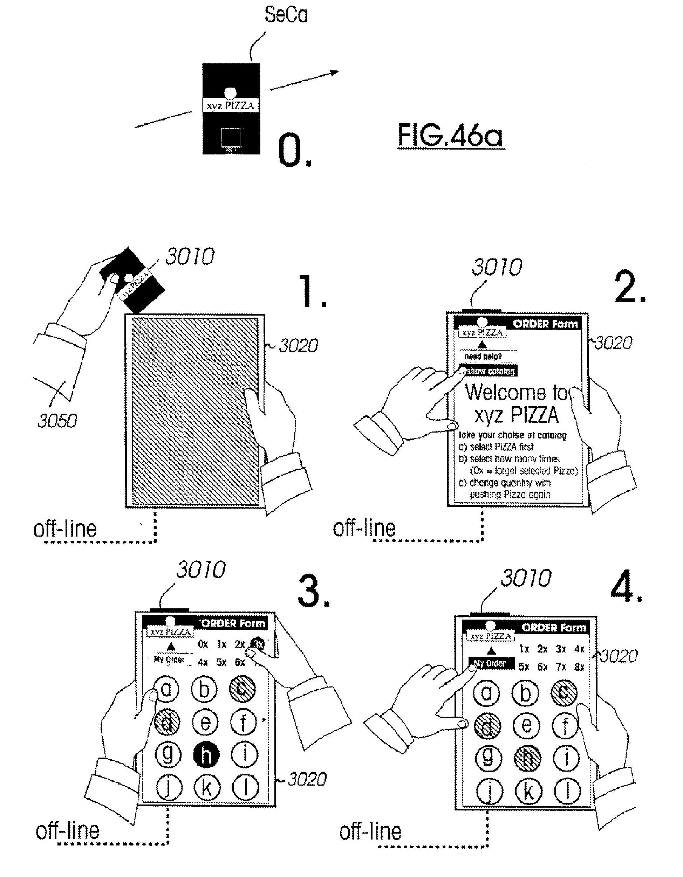

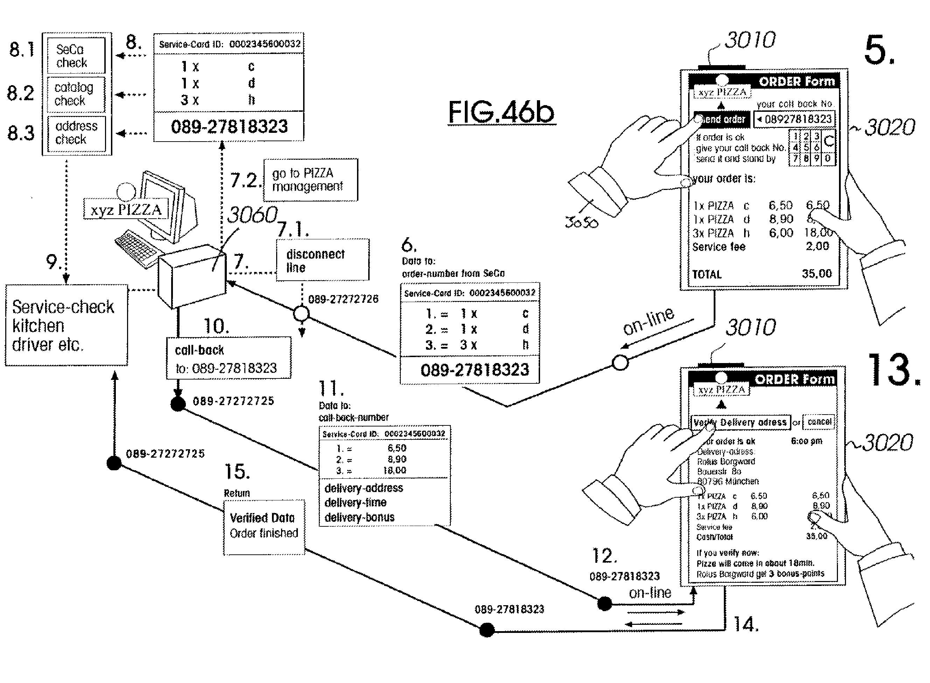

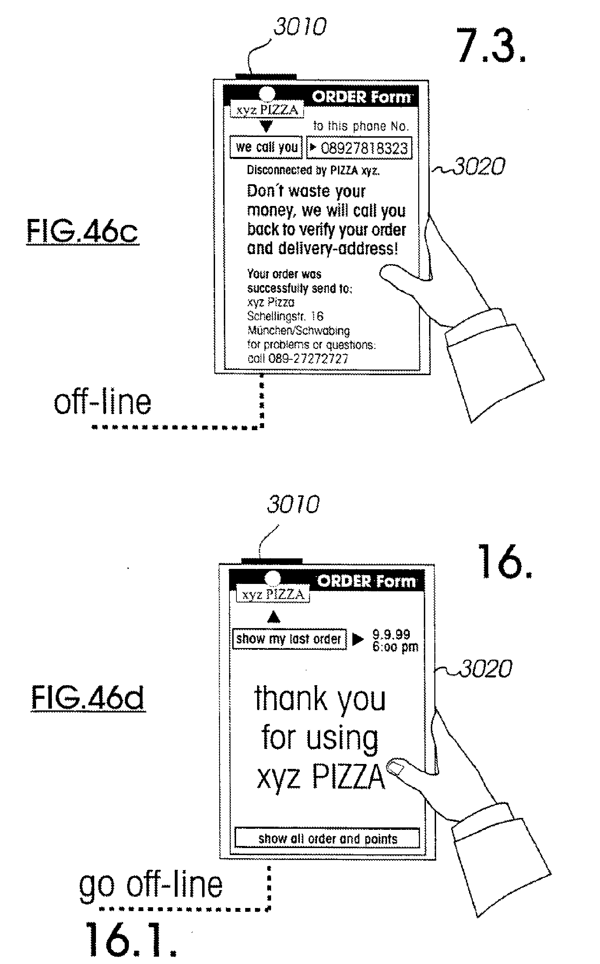

**Fig. 46** zeigt schematisch einen Ablauf gemäß dem Ablaufdiagramm aus **Fig. 45****.** Es bedeuten:
1. Einstecken oder Ankoppeln des Kartenmoduls 3010 an den Handteil 3020;
1.1 (optional) Lokalisieren potentieller Anbieter in einer Region um den geographischen Ort des Bestellers;
2. Anzeige des Kataloges, sofern der Katalog auf der Karte oder in einem Speicher des Handteils vorhanden und abrufbar ist; ansonsten ggfs. alternativ Herunterladen der Katalogdaten veranlassen (Internet, Onlien-Verbindung);
3. Auswählen von bestellbaren Artikeln oder Dienstleistungen sowie ggfs. deren Menge oder spezifische Beschaffenheit durch den Benutzer 3050;
4. Starten des Bestellvorganges;
5. Eingabe oder Auswahl der Rückrufnummer (z.B. im Festnetz) des Bestellers 3050 (falls nicht bereis für eine Lokalisierung eingegeben), Aufbau einer durch im Kartenmodul 3010 vorabgespeicherte Daten vorbestimmten Telekommunikationsverbindung zu dem Serverrechner 3060 des Anbieters und Übermittlung der Bestelldaten sowie der Telefonnummer des Bestellers;
6. Übertragung der Bestelldaten vom Handteil 3020 an den Serverrechner;
7. Entgegennahme der Bestelldaten durch den Serverrechner 3060;
7.1 Auslösen des Verbindungsabbruches;
7.2 Anstoß aller Warenwirtschaftlichen Dispositions- und Steuerungssysteme bzw. Information der zuständigen betrieblichen Einsatzleitstelle beim Anbieter;
7.3 Anzeige eines Hinweises, daß ein Rückruf durch den Serverrechner 3060 erfolgen wird; derweil befindet sich das Handteil in einem Zustand, in dem es Anrufe entgegennehmen kann (d.h. bei Verwendung einer Telefonleitung besteht eine entsprechende Leitung zum Anschluß an das Telefonnetz);
8. Überprüfungsoperationen:
   - Ist das Kartenmodul 3010 gültig? (Etwa Gültigkeitsdauer ablelaufen oder Sperrung wegen Mißbrauch)
   - Sind die der Bestellung zu Grunde gelegten katalogdaten noch gültig?
   - Läßt sich die Identität des Bestellers 3050 anhand der von ihm angegebenen Rückruf-Telefonnummer ausreichend bestimmen und/oder authentifizieren? Läßt sich aus der Rückrufnummer die Lieferadresse bestimmen und/oder verifizieren? Zu diesem Zweck kann auf digitale Telefonteilnehmerverzeichnisse zurückgegriffen werden, sofern diese eine Rückwärtssuche nach Telefonnummern gestatten. Diese Rückwärtssuche kann beispielsweise offline unter Verwendung eines auf einer CD-ROM gespeicherten Telefonteilnehmerverzeichnisses geschehen. Eine andere Lösung besteht darin, über eine online-Verbindung (nicht dargestellt) zu einer Telefonauskunft eine Zuordnung eines Anschlußinhabers zu der angegebenen Rückruf-Telefonnummer zu erhalten.
9. Betriebsinterne warenwirtschaftliche und/oder dispositorische Überprüfung, ob die Bestellung überhaupt ausgeführt werden kann oder mangels Vorräten oder Kapazitäten abgelehnt werden muß;
10. Initiierung des Rückrufes durch den Serverrechner 3060;
11. Übertragung der finalen Auftragsbestätigung durch den Server 3060 an den Handteil 3020;
12. Entgegennahme der Rückrufdaten durch den Handteil 3020 oder per Telefon ggfs zur fernmündlichen Klärung von Unstimmigkeiten (ggfs. kann optional Telefoneinrichtung im Handteil vorgesehen sein);
13. Anzeige der Rückrufdaten durch den Handteil 3020; endgültige Annahmeerklärung durch den Benutzer;
14. Übertragung der verifizierten Auftragsdaten mit der Annahmeerklärungsdaten an den Serverrechner 3060;
15. Auftragsannahme beendet; Ausführung der Bestellung durch den Anbieter; Beenden des Rückrufes;
16. Bei erfogreicher Annahme des Rückrufes durch den Handteil: Finale Auftragsbestätigung; evtl. mit Angabe einer voraussichtlichen Zeit für die Lieferung bzw. für die Erbringung der bestellten Dienstleistung.

Die erfindungsemäße Lösung weist insbesondere folgende Vorteile auf:
a) Der Benutzer 3020 braucht sich nicht mit Details der Telekommunikationsvorgänge zu befassen; die im Kartenmodul 3010 abgespeicherten Daten lassen einen vollautomatischen Ablauf zu.
b) Der Benutzer 3020 braucht lediglich einen Teil der Kommunikationskosten für das Absetzen der Bestellung zu tragen; die Kosten für den Rückruf trägt der Anbieter.
c) Der Anbieter ist in der Lage, die Angaben zur Identität des Bestellers sowie dessen Ort zu verifizieren und kann auf diese Weise vorsätzlich oder fahrlässig unrichtig angegebene Bestellungen korrigieren oder zurückweisen.
d) Das Blättern im Katalog geschieht offline und ist somit nicht mit zeitabhängigen Telekommunikationskosten verbunden.
e) Durch die Identifikation und/oder Authentikation des Bestellers anhand von Telefonteilnehmerverzeichnisdaten erübrigt sich in vielen Fällen der Abschluß von Rahmenverträgen vor der Erstinanspruchnahme des elektronischen Bestellservices. Das Kartenmodul kann beim ersten Gebrauch personalisiert und bei Mißbaruch gesperrt werden. Die Personalisierung kann bei einem Erstauftrag über Datenkommunikationsverbindung (Telefon) oder über Katlogaufruf im Internet ermöglicht werden.
f) Die zahlreichen anbieterseitigen Prüfungsvorgänge nach Entgegennahme der Bestelldaten erfolgen im Hinblick auf den Handteil des Bestellers ebenfalls offline. Dadurch werden zum einen Telekommunikationskosten eingespart und zum anderen können derweil weitere Bestellungen entgegengenommen werden.
g) Eine Integration in Buchhaltungs- und Warenwirtschaftssysteme unter Überstellung der vom Kunden eingegebenen Bestelldaten ist problemlos möglich. Bonuspunkte, Rabatte oder Sonderangebote können kartenmodulbezogen beispielsweise bei häufigerer Nutzung umsatzbezogen vergeben ung ggfs. auch auf dem Kartenmodul gespeichert werden.
h) Bestellerseitig sind keine Computerkenntnisse erforderlich. Der Besteller benötigt keinen PC für den Bestellvorgang. Die Informationen im Kartenmodul wie z.B. Katalogadetn können alternativ auch über das vorstehend beschriebene Abonnementsystem aktualisiert werden.
i) Die erfindungsgemäße Lösung ist besonders flexibel, da sie
   - transportabel ist,
   - überall einsetzbar ist, und
   - die Verwendung von Kartenmodulen unterschiedlicher Anbieter mit ein und demselben Handgerät und/oder mit ein und demselben Kartenmodul (vgl. entsprechende Ausführungen zum Abonnementsystem) möglich ist.

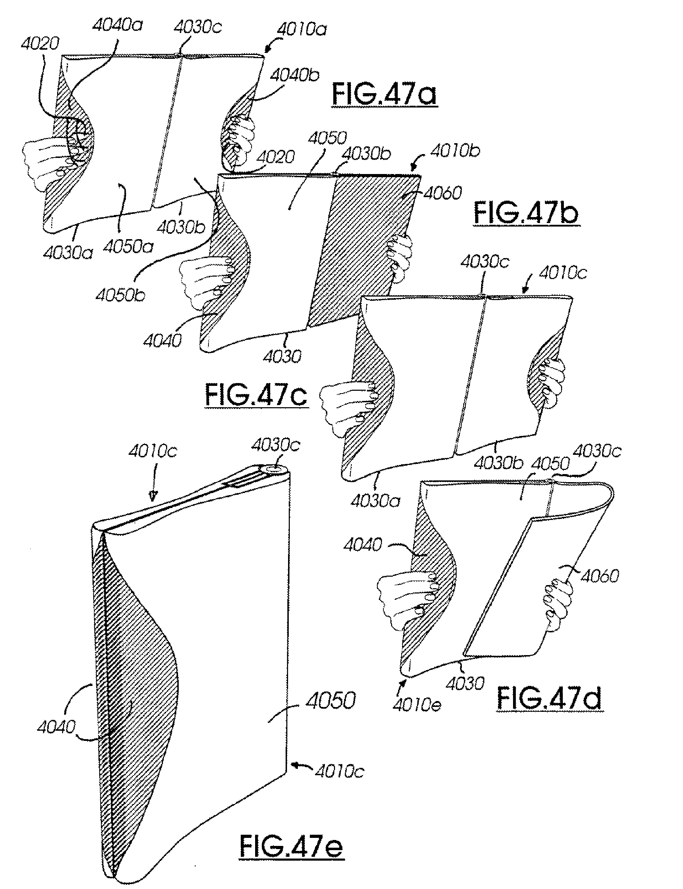

**Fig. 47** zeigt in den Teil-Fign. **47a** bis **47e** die Rücken- bzw. Außenansicht des Gehäuses verschiedener Varianten erfindungsgemäßer digitaler Handteile 4010a bis 4010d.

Die dargestellten digitalen Handteile 4010a bis 4010d umfassen mindestens eine flächige Anzeigeeinheit (nicht dargestellt) zur Anzeige digitaler Informationen und sind dazu bestimmt, vom Benutzer mit einer Hand oder mit beiden Händen gehalten zu werden. Bei bestimmten Ausführungsformen weisen digitale Handteile außerdem Eingabemittel, beispielsweise Eingabetasten 4020 auf. Bei Bedarf können digitale Handteile auch als vollwertige Rechner einschließlich Stromquelle, Zentraleinheit, Speicher und weiterer Peripherie ausgeführt werden. Als erfindungsgemäßes digitales Handteil zum Anzeigen digitaler Information kann auch ein Internet-Tablett, ein Mobiltelefon, ein PDA oder ein Notbebook-Rechner wie auch alle anderen bekannten oder denkbaren mobilen Anzeigegeräte angesehen werden, sofern diese in irgendeiner Form für die handgehaltene Bedienung bestimmt sind, z.B. in einer Verwendung als Lesegerät fur ein "e-Book". Zahlreiche wünschenswerte Anwendungen digitaler Kommunikation im allgemeinen und digitaler Handteile der vorstehend beschriebenen Art im besonderen sind nur möglich, wenn ein digitales Handteil vom Benutzer auch über längere Zeit ermüdungsarm gehalten und bedient werden kann. In diesem Zusammenhang sind insbesondere ein geringes Gewicht und eine komfortable Haptik und ein ergonomisches Halten von erheblicher Bedeutung. Es erweist sich daher als zweckmäßig, die Gehäuse von digitalen Handteilen - insbesondere Anzeigeteilen - in besonderer Weise - vor allen im handgreifbereich - auszugestalten.

**Fig. 47a** zeigt eine Rückenansicht eines zweiflügeligen digitalen Handteils 4010a mit einem ersten Flügel 4030a und einem zweiten Flügel 4030b, die über ein Scharnierteil 4030c zum Benutzer hin buchartig auf- und zuklappbar sind. Der schraffiert gezeigte linke bzw. rechte Handgreifbereich ist auf dem Gehäuserücken durch einen lippenförmig ausgestalteten ersten Gehäuserückenoberflächenbereich 4040a, 4040b realisiert, wohingegen die verbleibende Gehäuserückenfläche unschraffiert dargestellt ist und einen zweiten Gehäuserückenoberflächenbereich 4050a, 4050b bildet. Bedientasten 4020 sind auf dem ersten Gehäuserückenbereich angeordnet. Es erweist sich als zweckmäßig, den ersten Gehäuserückenoberflächenbereich 4040a, 4040b hinsichtlich des verwendeten Materials anders auszugestalten als den zweiten Gehäuserückkenoberflächenbereich 4050a, 4050b. Im folgenden werden Gehäuserückenoberflächenbereiche entsprechend dem ersten Gehäuserückenoberflächenbereich 4040a, 4040b als "Greifbereich" bezeichnet, wohingegen Gehäuserückenoberflächenbereiche entsprechend dem zweiten Gehäuserückenoberflächenbereich 4050a, 4050b als "Deckenbereich" bezeichnet. Von der Lippenform abweichende Ausgestaltungen sind ebenfalls möglich; die gezeigte Lippenform wird jedoch als bevorzugte Ausführungsform angesehen.

**Fig. 47b** zeigt eine erste Variante des in **Fig. 47a** dargestellten Gehäuserückens, bei der ein einflügeliger digitaler Handteil 4010b mit einem Flügel 4030 vorgesehen ist. Dieser Flügel 4030 kann durch einen zuklappbaren flexiblen Buchdeckel 4060 vor Schmutz und Beschädigung geschützt werden. Der Flügel 4030 weist ebenfalls einen Greifbereich 4040 und einen Deckenbereich 4050 auf. Im Gegensatz zu **Fig. 47a** zeigt **Fig. 47b** keine rückseitigen Bedientasten.

**Fig. 47c** zeigt eine zweite Variante des in **Fig. 47a** dargestellten Gehäuserückens, bei der ein zweiflügeliger digitaler Handteil 4010c mit zwei Flügeln 4030a, 4030b, jedoch ohne Eingabetasten 4020, vorgesehen ist.

**Fig. 47d** zeigt eine dritte Variante des in **Fig. 47a** dargestellten Gehäuserückens, bei der ein einflügeliger digitaler Handteil 4010b mit einem Flügel 4030 vorgesehen ist. Dieser Flügel 4030 kann durch eine zuklappbare buchdeckelartige Abdeckmaske 4060 vor Schmutz und Beschädigung geschützt werden. In **Fig. 47d** ist die Abdeckmaske 4060 flexibel nach hinten umgeschlagen. Der Flügel 4030 weist ebenfalls einen Greifbereich 4040 und einen Deckenbereich 4050 auf.

**Fig. 47e** zeigt den digitalen Handteil aus **Fig. 47c** im zugeklappen Zustand.

Ein wesentlicher Aspekt bei der Materialauswahl für den Greifbereich und den Deckenbereich ist die Durabilität und Abnutzungsbeständigkeit. Beispielsweise kann es gestalterisch gewünscht sein, die Oberfläche des Deckenteils mit Naturleder zu überziehen. Eine Ausführung der Oberfläche im Greifbereich mit Naturleder hätte jedoch den Nachteil, daß die Oberfläche relativ rasch eine abgegriffene und abgenutzte Anmutung annehmen würde. Die Unterscheidung zwischen Greifbereich und Dekkenbereich ermöglicht eine unterschiedliche Materialwahl, so daß beispielsweise der Greifbereich als alterungsbeständiges und abriebfestes Metallteil ausgeführt werden kann, wenn der Deckenteil in Naturleder ausgeführt ist. Ein auf diese Weise besonders durabel ausgeführter Greifbereich schützt den Deckenbereich vor vorzeitiger Abnutzung.

Ein weiterer wichtiger Aspekt ist die Kompressibilität des verwendeten Materials. Wenn der Deckenbereich der Haptik wegen beispielsweise durch Verendung von Polyurethanschaum kompressibel ausgeführt wird, kann eine beispielsweise infolge des Vorhandenseins von Drucktasten im Greifbereich dort unzweckmäßige Kompressibilität durch Einsatz eines weniger oder praktisch nicht kompressiblen Materials vermieden werden. Unabhängig vom Vorhandensein von Tasten erweist es sich als vorteilhaft, wenn der Greifbereich weniger nachgiebig ist sich nicht im Laufe der Zeit eindrückt.

Ferner kann die unterschiedliche mechanische Biegbarkeit eines Materials ein relevanter Faktor sein. Wenn beispielsweise der digitale Handteil ein biegbares Anzeigedisplay, etwa auf Polymerbasis, verwendet, kann es wünschenswert sein, dessen Gehäuse als Ganzes biegbar zu gestalten. Um die Biegbarkeit des Gesamtgehäuses zu steuern und zu begrenzen, etwa um eine Sollbiegelinie festzulegen, kann es vorteilhaft sein, den Greifbereich und den Deckenbereich mit Materialien unterschiedlicher Biegbarkeit (Steifigkeit) zu realisieren. Eine Möglichkeit bestünde beispielsweise darin, den Deckenbereich aus einem relativ leicht biegbaren Material geringerer Seifigkeit herzustellen, wohingegen der Greifbereich aus einem weniger biegbaren Material größerer Steifigkeit ausgeführt wird.

Ein weiterer wichtiger Gesichtspunkt bei der Ausgestaltung des Gehäuses des erfindungegemäßen digitalen Handteils besteht in der Festlegung, ob der Greifbereich und/oder der Deckenbereich als separat auswechselbare Teile ausgestaltet sind. Beispielsweise kann ein auswechselbarer Deckenbereich vorteilhaft sein, wenn etwa aus modischen Gründen dem Benutzer ein Wechsel des Oberflächen-Dessins ermöglicht werden soll. Auch die trotz des vorerwähnten Schutzes durch den Greifbereich gegebene Abnutzung des aus empfindlicheren Materialen gefertigten Deckenbereiches kann eine auswechselbare Lösung rechtfertigen.

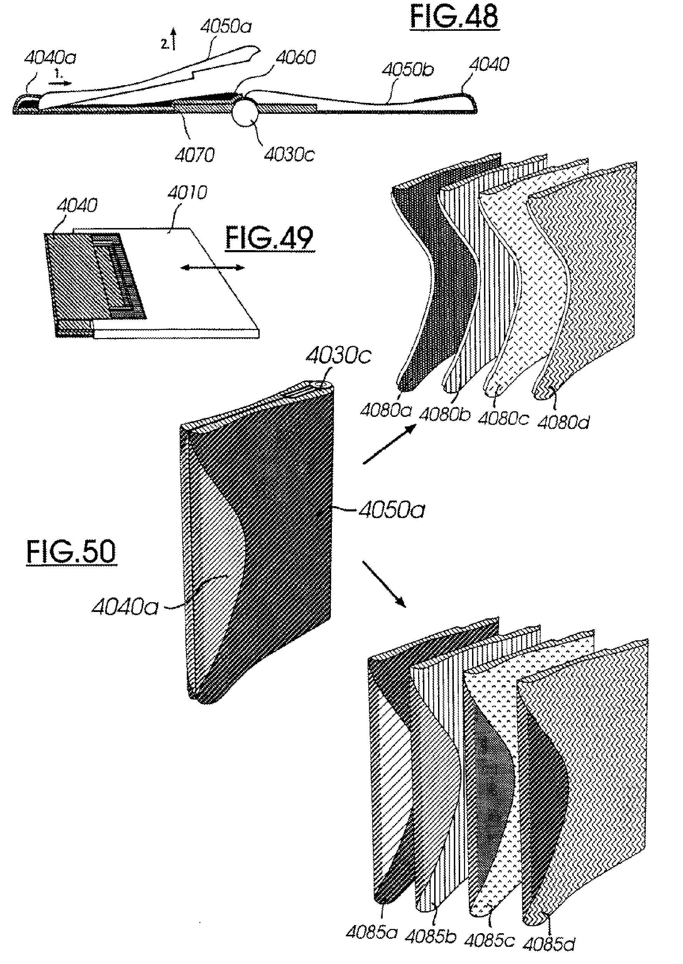

**Fig. 48** zeigt eine schematisierte Draufsicht auf die Unter- oder Oberkante einer Weiterentwicklung eines Gehäuse aus **Fig. 47c****,** die einen auswechselbaren kompressiblen Deckenbereich 4050a, 4050b vorsieht. Dabei ist der Greifbereich 4040a, 4040b im wesentlichen einstückig mit dem vorderen Teil des Gehäuses ausgeführt, wohingegen der Deckenbereich 4050a, 4050b in Gestalt separater abnehmbarer Deckenschalen ausgeführt ist. Diese Deckenschalen 4050a, 4050b sind unter dem Greifbereich 4040a, 4040b durch Klemmung fixiert können vom Benutzer leicht durch eine Seitwärtsbewegung (1.) und nachfolgende Aufwärtsbewegung (2.) herausgenommen und ausgewechselt werden. Die Deckenschalen 4050a, 4050b sind an ihrer Ober- und Unterseite bevorzugterweise mit einer vorspringenden Feder versehen, die in eine entsprechende Nut im Gehäuse greift und einen Schutz vor eindringendem Schmutz und vor Nässe bildet. Die Elektronik 4060 ist beispielsweise durch eine Vergußmasse oder durch einen sonstigen Schutzüberzug (nicht dargestellt) soweit geschützt, daß sie auch bei einem sachgemäßen Auswechseln der Deckenschale nicht beschädigt wird.

**Fig. 49** zeigt eine schematische Darstellung eine Gehäuserückenteils 4010 mit einem abnehmbaren Greifbereich 4040. Der Greifbereich 4040 wird durch ein im wesentlichen U-förmiges Teil gebildet, welches (in Pfeilrichtung) auf den Kantenbereich aufgeschoben und auch wieder heruntergezogen werden kann.

**Fig. 50** zeigt eine schematische Darstellung auswechselbarer Bestandteile eines modularen Gehäuserückenteils. Im oberen Figurenteil sind Deckenschalen 4080a bis 4080d gezeigt, die separat ausgetauscht werden können. Im unteren Figurenteil sind alternativ Kombinationsteile 4085a bis 4085d dargestellt, die ausgetauscht werden können und die sowohl den Greifbereich als auch den Deckenbereich verkörpern.

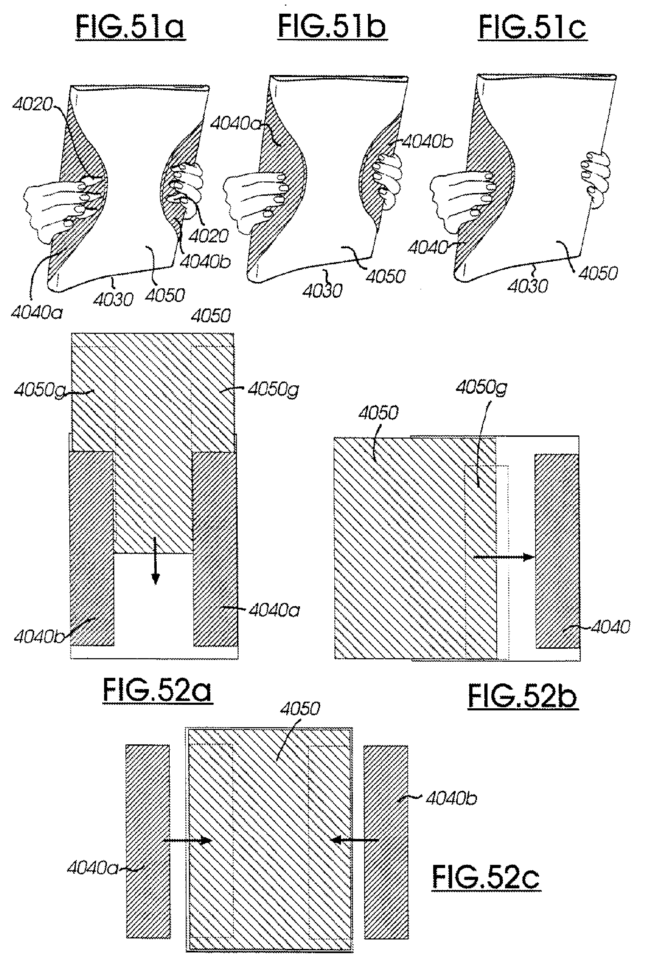

**Fig. 51** zeigt in den Teil-Fign. **51a** bis **51c** Rückenansichten weiterer Varianten von Gehäusen erfindungsgemäßer digitaler Handteile, nämlich solcher, die nur einen Flügel aufweisen. **Fig. 51a** zeigt einen Gehäuserückenteil mit zwei Greifbereichen 4040a, 4040b und einem Deckenbereich 4050 sowie mit Bedienelementen 4020. **Fig. 51b** zeigt einen anderen Gehäuserückenteil mit zwei Greifbereichen 4040a, 4040b und einem Deckenbereich 4050, jedoch ohne Bedienelemente. **Fig. 51c** zeigt ein weiteres Gehäuserückenteil mit einem Greifbereich 4040 und einem Deckenbereich 4050 ohne Bedienelemente.

**Fig. 52** zeigt schematisch den Vorgang des Auswechselns von bestimmten Rückenteilen bei modularen Gehäuserücken. **Fig. 52a** zeigt das Einschieben einer Deckenschale 4050 von oben nach unten in das Grundgehäuse, mit dem die Greifbereiche 4040a, 4040b fest verbunden sind. In einer Weiterbildung kann die Deckenschale 4050 flache Ausnehmungen 4050g aufweisen, die ein Einrasten der Greifbereiche 4040a, 4040b ermöglichen. Diese Vorgehensweise ist insbesondere geeignet für Handteile der in **Fig. 51b** dargestellten Art. **Fig. 52b** zeigt alternativ das Einschieben einer Deckenschale 4050 in Seitwärtsrichtung in das Grundgehäuse, mit dem ein einzelner Greifbereich 4040 fest verbunden ist. In einer Weiterbildung kann die Deckenschale 4050 eine flache Ausnehmung 4050g aufweisen, die ein Einrasten des Greifbereiches 4040 ermöglicht. Diese Vorgehensweise ist insbesondere geeignet für Handteile der in **Fig. 51c** dargestellten Art. **Fig. 52c** zeigt alternativ eine mit dem Grundgerät fest verbundene Deckenschale 4050, auf die zwei jeweils einen Greifbereich bildende Greifbereichsteile 4040a, 4040b in geeigneter Weise aufgesetzt werden können, beispielsweise durch Verkeben, Rastverbindungen, Schrauben etc. Diese Vorgehensweise ist insbesondere geeignet für Handteile der in **Fign. 51a, 51b** dargestellten Art.

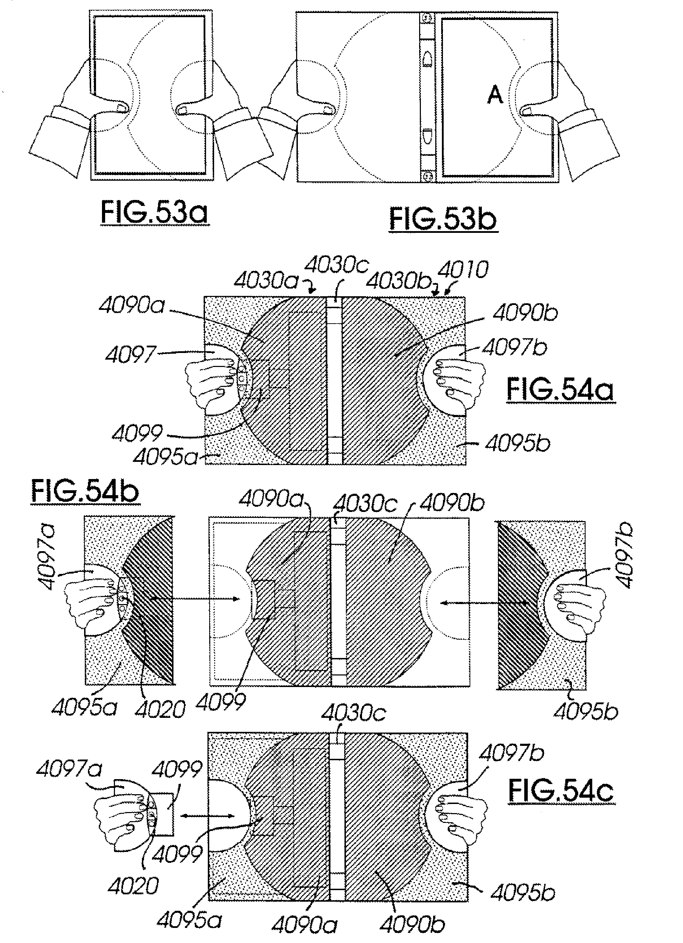

**Fig. 53** zeigt in den Teil-Fign. **53a** und **53b** schematisch unterschiedliche Funktionszonen bei einem modularen Gehäuse eines ein- bzw. zweiflügeligen erfindungsgemäßen digitalen Handteils.

**Fig. 54** zeigt in den Teil-Fign. **54a** bis **54c** verschiedene Aspekte eines weitergebildeten modularen Gehäuses eines erfindungsgemäßen digitalen Handteils.

**Fig. 54a** zeigt eine Draufsicht auf den Gehäuserücken eines vollständig zusammengesetzten zweiflügeligen erfindungsgemäßen digitalen Handteils mit einem ersten Flügelteil 4030a und einem zweiten Flügelteil 4030b. Auf der dem Benutzer zugewandten Seite kann jeder der Flügel ein flächigs Anzeigedisplay (nicht dargestellt) aufweisen; in einer bevorzugten Variante weise beide Flügel je ein Anzeigedisplay (nicht dargestellt) auf. Die Flügelteile 4030a, 4030b sind über eine Scharniereinrichtung 4030c zum Benutzer hin buchartig auf- und zuklappbar. Ein zum Grundgehäuse gehörende Gehäuserückenteil ist mit dem Bezugszeichen 4090a, 4090b bezeichnet. Unter das Gehäuserückenteil 4090a, 4090b einsteck- und befestigbar ist jeweils ein herausnehmbarer Buchrückenteil 4095a, 4095b. In **Fig. 54b** ist ein Zustand gezeigt, bei dem beide Buchrückenteile 4095a, 4095b seitlich erausgezogen sind. Jeder Buchrückenteil 4095a, 4095b weist im dargestellten Beispiel je ein Handgreifteil 4097a bzw. 4097b auf, welches Bedienelemente 4020 umfassen kann. **Fig. 54c** zeigt einen Zustand, bei dem das Handgreifteil 4097a seitlich aus dem Buchrückenteil 4095a herausgezogen ist. Es versteht sich, daß die elektrische Verbindung von Bedienelementen 4020 durch geeignete Steckverbindereinrichtungen 4099 trennbar ausgeführt ist.

Es ist ersichtlich, daß der Grad an Modularität der Gehäusekonstruktion nach den **Fign. 54a** bis **54c** variierbar ist. Bei Bedarf kann auf die separate Herausnehmbarkeit eines Buchrückenteils ebenso verzichtet werden wie auf die separate Herausnehmbarkeit eines Handgreifteils. die Heraus

Es versteht sich, daß alle vorstehend beschriebenen Geräte und Datenverarbeitungseinrichtungen in allen Ausführungsformen und Anwendungsmöglichkeiten für alle vorstehend beschriebenen Verfahren anwendbar sind.

Die Erfindung stellt weiterhin die folgenden Ausführungsbeispiele bereit:
1. Datenverarbeitungseinrichtung mit
   a) einem Clientteil (120),
   b) mindestens einem Telekommunikationskoppler zum Austausch von Daten mit einem externen Datenverarbeitungssystem (110), und
   c) einer Steuerungseinrichtung ;
   d) wobei der Clientteil (120) mit einer Funktionsmodul-Kopplungseinrichtung für mindestens ein mobiles Funktionsmodul (140) versehen ist,
   e) wobei die Funktionsmodul-Kopplungseinrichtung einen Datenaustausch zwischen dem Funktionsmodul (140) und dem Client teil (120) ermöglicht,
   f) wobei die Steuerungseinrichtung insbesondere den Datenaustausch mit dem externen Datenverarbeitungssystem in Abhängigkeit von über die Funktionsmodul-Kopplungsvorrichtung aus einem Funktionsmodul (140) eingelesenen Steuerdaten steuert, wenn über die Funktionsmodul-Kopplungseinrichtung ein Funktionsmodul (140) angekoppelt ist.
2. Datenverarbeitungseinrichtung nach Ausführungsbeispiel 1, **dadurch gekennzeichnet,**
   a) **dass** der Clientteil (120) einen nichtflüchtigen zweiten Datenspeicherbereich aufweist,
   b) wobei die Steuerungseinrichtung von dem externen Datenverarbeitungssystem 110 übertragene Daten als mindestens eine Datei im zweiten Datenspeicherbereich abspeichert.
3. Datenverarbeitungseinrichtung nach Ausführungsbeispiel 1 oder 2, **dadurch gekennzeichnet, dass** das Funktionsmodul (140) einen nichtflüchtigen ersten Datenspeicherbereich aufweist.
4. Datenverarbeitungseinrichtung nach Ausführungsbeispiel 2 und 3, **dadurch gekennzeichnet, dass** die im zweiten Datenspeicherbereich im Client teil 110 abgespeicherte mindestens eine Datei unter der Kontrolle der Steuerungseinrichtung über die Funktionsmodul-Kopplungseinrichtung in den ersten Datenspeicherbereich in dem Funktionsmodul (140) übertragen werden kann.
5. Datenverarbeitungseinrichtung nach Ausführungsbeispiel 3, **dadurch gekennzeichnet, dass** die Steuerungseinrichtung von dem externen Datenverarbeitungssystem 110 übertragene Daten im Funktionsmodul (140) als mindestens eine Datei im ersten Datenspeicherbereich abspeichert.
6. Datenverarbeitungseinrichtung nach Ausführungsbeispiel 4 oder 5, **dadurch gekennzeichnet, dass** der erste Datenspeicherbereich mindestens ein das einzelne Funktionsmodul (140) identifizierendes Identifikations-Datenelement enthält.
7. 7. Datenverarbeitungseinrichtung nach Ausführungsbeispiel 6, **dadurch gekennzeichnet, dass** der erste Datenspeicherbereich ein das das Funktionsmodul (140) eindeutig identifizierende Identifikations-Datenelement authentifizierendes Authentikations-Datenelement enthält.
8. Datenverarbeitungseinrichtung nach Ausführungsbeispiel 7, **dadurch gekennzeichnet, dass** das Authentikations-Datenlement eine digitale Signatur ist.
9. Datenverarbeitungseinrichtung nach einem der Ausführungsbeispiele 3 bis 8, **dadurch gekennzeichnet, dass** der erste Datenspeicherbereich des Funktionsmoduls (140) mindestens einen kryptographischen Schlüssel enthält, mit dem mindestens eine von dem externen Datenverarbeitungssystem 110 übertragene verschlüsselte Datei, die ein Computerprogramm, einen Text oder ein multimediales Werk repräsentiert, entschlüsselt werden kann.
10. Datenverarbeitungseinrichtung nach einem der Ausführungsbeispiele 3 bis 9, gekennzeichnet durch eine Nahbereichs-Datenkopplungseinrichtung.
11. Datenverarbeitungseinrichtung nach Ausführungsbeispiel 10, **dadurch gekennzeichnet, dass** die mindestens eine Datei unter Kontrolle der Steuerungseinrichtung über die Nahbereichs-Datenkopplungseinrichtung an eine Darstellungskomponente übertragbar ist.
12. Datenverarbeitungseinrichtung nach einem der Ausführungsbeispiele 2 bis 11, **dadurch gekennzeichnet, dass**
   a) im Clientteil (120) im zweiten Datenspeicherbereich eine Telekommunikations-Adressdatenelement gespeichert ist,
   b) wobei durch die externe Datenverarbeitungseinrichtung (110) ein Telekommunikationskanal zu dem Telekommunikationskoppler aufbaubar ist, wenn das Telekommunikations-Adressdatenelement als Adressierung verwendet wird.
13. Datenverarbeitungseinrichtung nach einem der Ausführungsbeispiele 3 bis 12, **dadurch gekennzeichnet, dass**
   a) im Funktionsmodul (140) im ersten Datenspeicherbereich eine Telekommunikations-Adressdatenelement gespeichert ist,
   b) wobei durch die externe Datenverarbeitungseinrichtung (110) ein Telekommunikationskanal zu dem Telekommunikationskoppler aufbaubar ist, wenn das Telekommunikations-Adressdatenelement als Adressierung verwendet wird.
14. Datenverarbeitungseinrichtung nach einem der Ausführungsbeispiele 12 oder 12, **dadurch gekennzeichnet, dass** das Telekommunikations-Adressdatenelement eine Telefonnummer ist.
15. Datenverarbeitungseinrichtung nach einem der Ausführungsbeispiele 12 oder 12, **dadurch gekennzeichnet, dass** das Telekommunikations-Adressdatenelement eine IP-Internetprotokolladresse ist.
16. Datenverarbeitungseinrichtung nach einem der Ausführungsbeispiele 1 bis 15, **dadurch gekennzeichnet, dass** die Funktionsmodul-Kopplungseinrichtung mehr als ein Funktionsmodul (140) aufnehmen kann.
17. Datenverarbeitungseinrichtung nach Ausführungsbeispiel 16, **dadurch gekennzeichnet, dass** das Telekommunikations-Adressdatenelement aus den jeweiligen in den Funktionsmodulen (140) gespeicherten Telekommunikations-Adressdatenelementen auswählbar ist.
18. Datenverarbeitungseinrichtung nach Ausführungsbeispiel 16, **dadurch gekennzeichnet, dass** das Telekommunikations-Adressdatenelement aus den jeweiligen in den Funktionsmodulen (140) gespeicherten Telekommunikations-Adressdatenelementen durch ein Bedienelement manuell auswählbar ist.
19. Datenverarbeitungseinrichtung nach einem der Ausführungsbeispiele 1 bis 18, **dadurch gekennzeichnet, dass** das Funktionsmodul (140) eine Chipkarte ist.
20. Datenverarbeitungseinrichtung nach einem der Ausführungsbeispiele 1 bis 18, **dadurch gekennzeichnet, dass** das Funktionsmodul (140) im Wesentlichen eine Stiftform aufweist.
21. Datenverarbeitungseinrichtung nach Ausführungsbeispiel 20, **dadurch gekennzeichnet, dass** das Funktionsmodul (140) in den Haltegriff eines digitalen Buches oder in den Scharnierteil eines zweiteiligen digitalen Buches einsetzbar ist.
22. Datenverarbeitungseinrichtung nach einem der Ausführungsbeispiele 1 bis 21, **dadurch gekennzeichnet, dass** die Funktionsmodul-Kopplungseinrichtung eine elektrische Steckverbindungseinrichtung beinhaltet.
23. Datenverarbeitungseinrichtung nach Ausführungsbeispiel 22, **dadurch gekennzeichnet, dass** das Funktionsmodul (140) mittels der elektrischen Steckverbindungseinrichtung unmittelbar eingesteckt ist.
24. Datenverarbeitungseinrichtung nach Ausführungsbeispiel 22, **dadurch gekennzeichnet, dass** die Steckverbindungseinrichtung ein Chipkarten-Kontaktfeld beinhaltet.
25. Datenverarbeitungseinrichtung nach Ausführungsbeispiel 22, **dadurch gekennzeichnet, dass** das Funktionsmodul (140) mittels der elektrischen Steckverbindungseinrichtung über ein Kabel verbunden ist.
26. Datenverarbeitungseinrichtung nach einem der Ausführungsbeispiele 1 bis 21, **dadurch gekennzeichnet, dass** die Funktionsmodul-Kopplungseinrichtung eine Infrarot-Datenübertragungseinrichtung beinhaltet.
27. Datenverarbeitungseinrichtung nach Ausführungsbeispiel 26, **dadurch gekennzeichnet, dass** die Infrarot-Datenübertragungseinrichtung eine IRdA-Schnittstelle beinhaltet.
28. Datenverarbeitungseinrichtung nach einem der Ausführungsbeispiele 1 bis 21, **dadurch gekennzeichnet, dass** die Funktionsmodul-Kopplungseinrichtung eine Funkübertragungseinrichtung beinhaltet.
29. Datenverarbeitungseinrichtung nach einem der Ausführungsbeispiele 1 bis 28, **dadurch gekennzeichnet, dass** der Clientteil eine im wesentlichen schüsselförmige Aufnahme umfasst, in die mindestens ein Funktionsmodul lose hineingelegt werden kann, wobei die Funktionsmodul Kopplungseinrichtung einen drahtlose Datenübertragungskanal schafft.
30. Datenverarbeitungseinrichtung nach einem der Ausführungsbeispiele 1 bis 21, **dadurch gekennzeichnet, dass**
   a) das Kartenmodul (140) in ein im Wesentlichen wie ein Diskettenspeichermedium ausgestaltetes Koppelstück einsetzbar ist,
   b) wobei das Koppelstück an einer Stelle, die einem Schreib-/Lesearmzugriffsbereich entspricht, mit einer mit dem Kartenmodul (140) elektrisch gekoppelten Induktionsvorrichtung versehen ist, und
   c) wobei das Kartenmodul (140) über die Induktionsvorrichtung Daten mit einem Schreib-Lesekopf austauschen kann, wenn das Kartenmodul in das Koppelstück und das Koppelstück in ein passendes Diskettenlaufwerk eingesetzt ist.
31. Datenverarbeitungseinrichtung nach einem der Ausführungsbeispiele 1 bis 30, **dadurch gekennzeichnet, dass** das externe Datenverarbeitungssystem (110) die übertragenen Daten vor der Übertragung verschlüsselt.
32. Datenverarbeitungseinrichtung nach Ausführungsbeispiel 31, **dadurch gekennzeichnet, dass** der erste Datenspeicherbereich im Funktionsmodul (140) einen zur Entschlüsselung der verschlüsselten Daten geeigneten Schlüssel enthält.
33. Datenverarbeitungseinrichtung nach Ausführungsbeispiel 31 oder 32, **dadurch gekennzeichnet, dass** das Funktionsmodul (140) einen Prozessor zur Entschlüsselung der verschlüsselten Daten aufweist.
34. Datenverarbeitungseinrichtung nach Ausführungsbeispiel 33, gekennzeichnet durch
   a) ein erstes Baugruppenteil mit dem ersten Datenspeicherbereich,
   b) ein zweites Baugruppenteil mit dem Prozessor zur Entschlüsselung der verschlüsselten Daten,
   c) wobei der erste Baugruppenteil in den der zweiten Baugruppenteil einsteckbar und im eingesteckten Zustand mit dem zweiten Baugruppenteil elektrisch verbunden ist sowie zusammen das Funktionsmodul (140) bilden.
35. Datenverarbeitungseinrichtung nach Ausführungsbeispiel 34, **dadurch gekennzeichnet, dass** das erste Baugruppenteil eine Chipkarte ist.
36. Datenverarbeitungseinrichtung nach Ausführungsbeispiel 34 oder 35, **dadurch gekennzeichnet, dass** das erste Baugruppenteil den zweiten Datenspeicherbereich zum Speichern der mindestens einen von dem externen Datenverarbeitungssystem (110) übertragenen Datei beinhaltet.
37. Datenverarbeitungseinrichtung nach Ausführungsbeispiel 34 oder 35, **dadurch gekennzeichnet, dass** das zweite Baugruppenteil den zweiten Datenspeicherbereich zum Speichern der mindestens einen von dem externen Datenverarbeitungssystem (110) übertragenen Datei beinhaltet.
38. Datenverarbeitungseinrichtung nach einem der Ausführungsbeispiele 1 bis 37, **dadurch gekennzeichnet, dass** das mindestens eine Funktionsmodul (140) mit einer Steuerungseinrichtung versehen ist.
39. Datenverarbeitungseinrichtung nach einem der Ausführungsbeispiele 1 bis 38, **dadurch gekennzeichnet, dass** Datenelemente vom Funktionsmodul (140) zum externen Datenverarbeitungssystem (110) sowie vom externen Datenverarbeitungssystem (110) zum Funktionsmodul (140) transparent durch den Clientteil (120) hindurchleitbar sind.
40. Datenverarbeitungseinrichtung mit
   a) einem Telekommunikationskoppler zum Austausch von Daten mit einem externen Datenverarbeitungssystem (110),
   b) einer Nahbereichs-Datenkopplungseinrichtung,
   c) einer Steuereinrichtung,
   d) einem nichtflüchtigen ersten Datenspeicherbereich und
   e) einem nichtflüchtigen zweiten Datenspeicherbereich,
   f) wobei die Steuerungseinrichtung den Datenaustausch mit dem externen Datenverarbeitungssystem (110) in Abhängigkeit von in dem ersten Datenspeicherbereich gespeicherten Steuerdaten steuert,
   g) wobei die Steuerungseinrichtung von dem externen Datenverarbeitungssystem (110) übertragene Daten als mindestens eine Datei im zweiten Datenspeicherbereich abspeichert, und
   h) wobei die mindestens eine Datei unter Kontrolle der Steuerungseinrichtung über die Nahbereichs-Datenkopplungseinrichtung an eine Darstellungskomponente übertragbar ist.
41. Datenverarbeitungseinrichtung nach einem der Ausführungsbeispiele 10 bis 40, **dadurch gekennzeichnet, dass** die Nahbereichs-Datenkopplungseinrichtung eine elektrische Steckverbindungseinrichtung beinhaltet.
42. Datenverarbeitungseinrichtung nach Ausführungsbeispiel 41, **dadurch gekennzeichnet, dass** die Darstellungskomponente mittels der elektrischen Steckverbindungseinrichtung unmittelbar eingesteckt ist.
43. Datenverarbeitungseinrichtung nach Ausführungsbeispiel 42, **dadurch gekennzeichnet, dass** die Darstellungskomponente mittels der elektrischen Steckverbindungseinrichtung über ein Kabel verbunden ist.
44. Datenverarbeitungseinrichtung nach einem der Ausführungsbeispiele 10 bis 40, **dadurch gekennzeichnet, dass** die Nahbereichs-Datenkopplungseinrichtung eine Infrarot-Datenübertragungseinrichtung beinhaltet.
45. Datenverarbeitungseinrichtung nach Ausführungsbeispiel 44, **dadurch gekennzeichnet, dass** die Infrarot-Datenübertragungseinrichtung eine IRdA-Schnittstelle beinhaltet.
46. Datenverarbeitungseinrichtung nach einem der Ausführungsbeispiele 10 bis 40, **dadurch gekennzeichnet, dass** die Nahbereichs-Datenkopplungseinrichtung eine Funkübertragungseinrichtung beinhaltet.
47. Datenverarbeitungseinrichtung nach einem der Ausführungsbeispiele 11 bis 46, **dadurch gekennzeichnet, dass** die Darstellungskomponente ein digitales Buch ist.
48. Datenverarbeitungseinrichtung nach einem der Ausführungsbeispiele 11 bis 46, **dadurch gekennzeichnet, dass** die Darstellungskomponente ein Notebook-Computer ist.
49. Datenverarbeitungseinrichtung nach einem der Ausführungsbeispiele 11 bis 46, **dadurch gekennzeichnet, dass** die Darstellungskomponente ein Palmtop-Computer ist.
50. Datenverarbeitungseinrichtung nach einem der Ausführungsbeispiele 11 bis 46, **dadurch gekennzeichnet, dass** die Darstellungskomponente ein Fernsehgerät ist.
51. Datenverarbeitungseinrichtung nach einem der Ausführungsbeispiele 11 bis 46, **dadurch gekennzeichnet, dass** die Darstellungskomponente ein Mobiltelefon ist.
52. Datenverarbeitungseinrichtung nach einem der Ausführungsbeispiele 11 bis 46, **dadurch gekennzeichnet, dass** die Darstellungskomponente ein Aktionsterminal ist.
53. Datenverarbeitungseinrichtung nach einem der Ausführungsbeispiele 11 bis 52, **dadurch gekennzeichnet, dass** die Darstellungskomponente eine Anzeigeeinrichtung 125 zur Darstellung von Texten und Bildern auf weist.
54. Datenverarbeitungseinrichtung nach einem der Ausführungsbeispiele 11 bis 46, **dadurch gekennzeichnet, dass** die Darstellungskomponente eine Anzeigeeinrichtung 125 zur Darstellung von Videosequenzen aufweist.
55. Datenverarbeitungseinrichtung nach einem der Ausführungsbeispiele 11 bis 54, **dadurch gekennzeichnet, dass** die Darstellungskomponente eine Schallwandlervorrichtung zur Wiedergabe von Tönen aufweist.
56. Datenverarbeitungseinrichtung nach einem der Ausführungsbeispiele 3 bis 55, **dadurch gekennzeichnet,**
   a) **dass** der erste Datenspeicherbereich mindestens ein Ladefreiga bedatenelement beinhaltet, welchem in einer vorbestimmten ersten Relation mindestens eine bestimmte, von dem externen Datenverarbeitungssystem (110) übertragbare Datei oder Kategorie von Dateien zugeordnet ist,
   b) wobei die Steuerungseinrichtung nur die Übertragung solcher Daten von dem externen Datenverarbeitungssystem zulässt, die zu einer Datei oder zu einer Kategorie von Dateien gehören, welche gemäß der vorbestimmten ersten Relation dem Ladefreigabeelement zugeordnet ist.
57. Datenverarbeitungseinrichtung nach einem der Ausführungsbeispiele 1 bis 56, **dadurch gekennzeichnet,**
   a) **dass** die Steuerungseinrichtung mindestens ein Abrufdatenelement an die externe Datenverarbeitungseinrichtung (110) übermittelt, welchem in einer vorbestimmten zweiten Relation mindestens eine bestimmte von dem externen Datenverarbeitungssystem (110) übertragbare Datei oder Kategorie von Dateien zugeordnet ist,
   b) wobei die externe Datenverarbeitungseinrichtung (110) nach der Übertragung des Abrufdatenelementes die der zweiten Relation gemäße mindestens eine Datei oder Kategorie von Dateien überträgt.
58. Datenverarbeitungseinrichtung nach Ausführungsbeispiel 57, **dadurch gekennzeichnet, dass** das Abrufdatenelement in Abhängigkeit von der Betätigung eines Bedienelementes übertragen wird.
59. Datenverarbeitungseinrichtung nach Ausführungsbeispiel 57, **dadurch gekennzeichnet, dass** das Abrufdatenelement in Abhängigkeit von Einkop peln eines Funktionsmoduls (140) in die Funktionsmodul-Kopplungseinrichtung übertragen wird.
60. Datenverarbeitungseinrichtung nach Ausführungsbeispiel 57 bis 60, **dadurch gekennzeichnet, dass** das Abrufdatenelement in dem ersten Datenspeicherbereich gespeichert ist und vor der Übertragung aus diesem ausgelesen wird.
61. Datenverarbeitungseinrichtung nach einem der Ausführungsbeispiele 57 bis 60, **dadurch gekennzeichnet, dass**
   a) vor dem Übertragen des Abrufdatenelementes ein erster Datenkommunikationskanal über den Telekommunikationskoppler zu dem externen Datenverarbeitungssystem (110) hin aufgebaut wird,
   b) die externe Datenverarbeitungseinrichtung (110) nach der Übertragung des Abrufdatenelementes im wesentlichen unverzüglich die der zweiten Relation gemäße mindestens eine Datei oder Kategorie von Dateien überträgt, und
   c) dass die Übertragung des Abrufdatenelementes und die Übertragung der der zweiten Relation gemäßen mindestens einen Datei oder Kategorie von Dateien über den ersten Datenkommunikationskanal erfolgen.
62. Datenverarbeitungseinrichtung nach einem der Ausführungsbeispiele 57 bis 60, **dadurch gekennzeichnet, dass**
   a) vor dem Übertragen des Abrufdatenelementes ein erster Datenkommunikationskanal über den Telekommunikationskoppler zu dem externen Datenverarbeitungssystem (110) hin aufgebaut wird, über den das Abrufdatenelement übertragen wird,
   b) der erste Datenkommunikationskanal nach der Übertragung des Abrufdatenelementes abgebaut wird, und
   c) die externe Datenverarbeitungseinrichtung (110) nach der Übertragung des Abrufdatenelementes vor der Übertragung der der zweiten Relation gemäßen mindestens einen Datei oder Kategorie von Dateien einen zweiten Datenkommunikationskanal zum Telekommunikationskoppler aufbaut, über den die der zweiten Relation gemäße mindestens eine Datei oder Kategorie von Dateien übertragen wird.
63. Datenverarbeitungseinrichtung nach einem der Ausführungsbeispiele 1 bis 62, **dadurch gekennzeichnet, dass** die externe Datenverarbeitungseinrichtung (110) zu vorbestimmten Zeiten vor der Übertragung der der zweiten Relation gemäßen mindestens einen Datei oder Kategorie von Dateien einen Datenkommunikationskanal zum Telekommunikationskoppler aufbaut, über den die der zweiten Relation gemäße mindestens eine Datei oder Kategorie von Dateien übertragen wird.
64. Datenverarbeitungseinrichtung nach einem der Ausführungsbeispiele 1 bis 62, **dadurch gekennzeichnet, dass** die externe Datenverarbeitungseinrichtung (110) eine Mehrzahl von Dateien ohne spezifizierte Empfängeradresse im Broadcast-Modus überträgt.
65. Datenverarbeitungseinrichtung nach einem der Ausführungsbeispiele 1 bis 64, **dadurch gekennzeichnet, dass** der Telekommunikationskoppler ein Anschluss an ein Telefonnetz ist.
66. Datenverarbeitungseinrichtung nach einem der Ausführungsbeispiele 1 bis 64, **dadurch gekennzeichnet, dass** der Telekommunikationskoppler ein Internetzugangsanschluss ist.
67. Datenverarbeitungseinrichtung nach einem der Ausführungsbeispiele 1 bis 64, **dadurch gekennzeichnet, dass** der Telekommunikationskoppler ein eine Mobilfunkeinrichtung beinhaltet.
68. Datenverarbeitungseinrichtung nach einem der Ausführungsbeispiele 1 bis 64, **dadurch gekennzeichnet, dass** der Telekommunikationskoppler ein eine GSM-Mobilfunkeinrichtung beinhaltet.
69. Datenverarbeitungseinrichtung nach einem der Ausführungsbeispiele 1 bis 64, **dadurch gekennzeichnet, dass** der Telekommunikationskoppler ein eine Satellitenfunkeinrichtung beinhaltet.
70. Datenverarbeitungseinrichtung nach Ausführungsbeispiel 69, **dadurch gekennzeichnet, dass** die Satellitenfunkeinrichtung einen Download-Kanal zum Herunterladen von mindestens einer Datei bereitstellt.
71. Datenverarbeitungseinrichtung nach Ausführungsbeispiel 69 oder 70, **dadurch gekennzeichnet, dass** die Satellitenfunkeinrichtung einen Rückkanal zur Übertragung von Daten zum Satelliten aufweist.
72. Datenverarbeitungseinrichtung nach einem der vorstehenden Ausführungsbeispiele, **dadurch gekennzeichnet, dass** nach durch die externe Datenverarbeitungseinrichtung bewirkter vollständiger Übertragung mindestens einer Datei ein Quittungsdatenelement an die externe Datenverarbeitungseinrichtung übertragen wird.
73. Datenverarbeitungseinrichtung nach Ausführungsbeispiel 72, **dadurch gekennzeichnet, dass** das Quittungsdatenelement eine digitale Signatur beinhaltet.
74. Datenverarbeitungseinrichtung nach einem der Ausführungsbeispiele 40 bis 73, **dadurch gekennzeichnet, dass** die von dem externen Datenverarbeitungssystem (110) übertragenen Daten verschlüsselt sind.
75. Datenverarbeitungseinrichtung nach Ausführungsbeispiel 74, **dadurch gekennzeichnet, dass** im ersten Datenspeicherbereich ein zur Entschlüsselung geeigneter kryptographischer Schlüssel abgespeichert ist.
76. Datenverarbeitungseinrichtung nach einem der Ausführungsbeispiele 1 bis 75, gekennzeichnet durch ein Pager-Modul, durch das ein vollzogener Übertragungsvorgang einer Datei angezeigt wird.
77. Datenverarbeitungseinrichtung mit
   a) einer Steuereinrichtung,
   b) einem nichtflüchtigen ersten Speicher zum Speichern mindestens einer Datei,
   c) einer Funktionsmodul-Kopplungseinrichtung für mindestens ein Funktionsmodul, und
   d) einer Anzeigeeinrichtung ;
   e) wobei das Funktionsmodul einen nichtflüchtigen zweiten Speicher aufweist, in dem ein einen positiven Guthabenwert dar stellendes Datenelement gespeichert ist,
   f) f) wobei die Steuereinrichtung Daten der in dem ersten Speicher abgespeicherten mindestens einen Datei mittels der Anzeigeeinrichtung darstellt und den im zweiten Speicher gespeicherten Guthabenwert nach dem Maß der Zeitspanne, während der die Daten dargestellt werden, vermindert, bis der Guthabenwert kleiner oder gleich Null ist.
78. Datenverarbeitungseinrichtung mit
   a) einer Steuereinrichtung,
   b) einem nichtflüchtigen ersten Speicher zum Speichern mindestens einer Datei,
   c) einer Funktionsmodul-Kopplungseinrichtung für mindestens ein Funktionsmodul, und
   d) einer Anzeigeeinrichtung ;
   e) wobei das Funktionsmodul einen nichtflüchtigen zweiten Speicher aufweist, in dem ein einen positiven Guthabenwert dar stellendes Datenelement gespeichert ist,
   f) wobei die Steuereinrichtung Daten der in dem ersten Speicher abgespeicherten mindestens einen Datei mittels der Anzeigeeinrichtung darstellt und den im zweiten Speicher gespeicherten Guthabenwert nach dem Maß der Quantität an dargestellten Daten vermindert, bis der Guthabenwert kleiner oder gleich Null ist.
79. Datenverarbeitungseinrichtung nach einem der Ausführungsbeispiele 77 oder 78, **dadurch gekennzeichnet, dass** die mindestens eine Datei nur dann dargestellt wird, wenn ein Funktionsmodul mit einem positiven Guthabenwert präsent ist.
80. Datenverarbeitungseinrichtung nach Ausführungsbeispiel 79, **dadurch gekennzeichnet, dass** die mindestens eine Datei verschlüsselt ist.
81. Datenverarbeitungseinrichtung nach Ausführungsbeispiel 80, **dadurch gekennzeichnet, dass** die Entschlüsselung an die Präsenz eines Funktionsmoduls mit einem positiven Guthabenwert gebunden ist.
82. Datenverarbeitungseinrichtung nach einem der Ausführungsbeispiele 77 bis 81, **dadurch gekennzeichnet,**
   a) **dass** der zweite Speicher mindestens ein Zugriffsfreigabedatenelement beinhaltet, welchem in einer vorbestimmten dritten Relation mindestens eine bestimmte, im ersten Speicher speicherbare Datei oder Kategorie von Dateien zugeordnet ist,
   b) wobei die Steuerungseinrichtung nur die Darstellung solcher Daten zulässt, die zu einer Datei oder einer Kategorie von Dateien gehören, welche gemäß der vorbestimmten dritten Relation dem Zugriffsfreigabeelement zugeordnet ist.
83. Datenverarbeitungseinrichtung nach Ausführungsbeispiel 82, **dadurch gekennzeichnet, dass** das mindestens eine Zugriffsfreigabedatenelement unveränderbar in dem zweiten Speicher gespeichert ist.
84. Datenverarbeitungseinrichtung nach Ausführungsbeispiel 82, **dadurch gekennzeichnet, dass** das mindestens eine Zugriffsfreigabedatenelement von einem über eine Datenkommunikationseinrichtung gekoppelten externen Datenverarbeitungssystem in den zweiten Speicher einspeicherbar ist.
85. Datenverarbeitungseinrichtung nach einem der Ausführungsbeispiele 77 bis 84, **dadurch gekennzeichnet,**
   a) **dass** der zweite Speicher mindestens ein Tarifdatenelement beinhaltet, welchem in einer vorbestimmten vierten Relation mindestens eine bestimmte, im ersten Speicher speicherbare Datei oder Kategorie von Dateien zugeordnet ist,
   b) wobei die Steuerungseinrichtung bei der Darstellung der Daten der in dem ersten Speicher gespeicherten mindestens einen Datei oder Kategorie von Dateien den im zweiten Speicher gespeicherten Guthabenwert in Abhängigkeit von dem gemäß der vierten Relation jeweils zugeordneten Tarifdatenelement vermindert.
86. Datenverarbeitungseinrichtung nach Ausführungsbeispiel 85, **dadurch gekennzeichnet, dass** das mindestens eine Tarifdatenelement unveränderbar in dem zweiten Speicher gespeichert ist.
87. Datenverarbeitungseinrichtung nach Ausführungsbeispiel 85, **dadurch gekennzeichnet, dass** das mindestens eine Tarifdatenelement von einem über eine Datenkommunikationseinrichtung gekoppelten externen Datenverarbeitungssystem in den zweiten Speicher einspeicherbar ist.
88. Datenverarbeitungseinrichtung nach Ausführungsbeispiel 85, **dadurch gekennzeichnet, dass** das Tarifdatenelement der Datei beigefügt ist, für das es gilt.
89. Datenverarbeitungseinrichtung nach Ausführungsbeispiel 77 bis 87, **dadurch gekennzeichnet, dass** das den Guthabenwert darstellende Datenelement von einem über eine Datenkommunikationseinrichtung gekoppelten externen Datenverarbeitungssystem in den zweiten Speicher einspeicherbar ist.
90. Datenverarbeitungseinrichtung nach einem der Ausführungsbeispiele 1 bis 76, gekennzeichnet durch eine Datenverarbeitungseinrichtung nach einem der Ausführungsbeispiele 77 bis 89.
91. Universelles digitales Mobilgerät, aufweisend
   a) einen ersten Flügelteil und
   b) einen zweiten Flügelteil,
   c) die durch ein Scharnierteil buchartig auf- und zuklappbar sind,
   d) wobei mindestens einer der beiden Flügelteile ein Flügelgrund teil und ein herausnehmbares Flügelrückenteil aufweist.
92. Universelles digitales Mobilgerät nach Ausführungsbeispiel 91, **dadurch gekennzeichnet, dass** der herausnehmbare Flügelrückenteil einen herausnehmbaren Handgreifteil aufweist.
93. Universelles digitales Mobilgerät, aufweisend
   a) einen ersten Flügelteil und
   b) einen zweiten Flügelteil,
   c) die durch ein Scharnierteil buchartig auf- und zuklappbar sind,
   d) wobei mindestens einer der beiden Flügelteile ein Flügelgrundteil und ein herausnehmbares Handgreifteil aufweist.
94. Mobilgerät nach Ausführungsbeispiel 92 oder 93, **dadurch gekennzeichnet, dass** das Handgreifteil mindestens ein Bedienelement beinhaltet.
95. Mobilgerät nach Ausführungsbeispiel 94, **dadurch gekennzeichnet, dass** das Handgreifteil drei zur Rückenseite hin orientierte Bedientasten aufweist.
96. Universelles digitales Mobilgerät, aufweisend
   a) einen Gehäuseteil und
   b) ein im Greifhandbereich des Gehäuseteils angeordneter Handgreifteil,
   c) wobei der Handgreifteil als Befestigungseinrichtung für mindestens ein Rückenteil dient.
97. Universelles digitales Mobilgerät, aufweisend
   a) einen Gehäuseteil und
   b) ein im Greifhandbereich des Gehäuseteils angeordneter Handgreifteil,
   c) wobei der Handgreifteil als Greifschutz und zur Stabilisierung bezüglich mindestens eines Rückseitenteils dient.
98. Mobilgerät nach einem der Ausführungsbeispiele 96 und 97, **dadurch gekennzeichnet, dass** der Handgreifteil mindestens ein Bedienelement auf weist.
99. Mobilgerät nach Ausführungsbeispiel 98, **dadurch gekennzeichnet, dass** das mindestens eine Bedienelement aus einer Taster, Slidepad, Mehrfachwippen und Trackball umfassenden Gruppe ausgewählt ist.
100. Mobilgerät nach einem der Ausführungsbeispiele 97 bis 99, **dadurch gekennzeichnet, dass** der Handgreifteil aus dem Gehäuseteil herausnehmbar ist.
101. Universelles digitales Mobilgerät, umfassend
   a) ein Handteil
      aa) mit mindestens einer Anzeigeeinrichtung,
      ab) mit Bedienmitteln zum Eingeben Information und Manipulieren von angezeigter Information, und
      ac) mit mindestens einer ersten Schnittstelle zum Datenaustausch, und
   b) einem Anhangteil
      ba) mit einer Steuereinheit,
      bb) mit einem Speicher,
      bc) mit einer Energievorsorgungseinheit, und
      bd) mit mindestens einer zweiten Schnittstelle zum Datenaustausch,
   c) wobei die erste Schnittstelle und die zweite Schnittstelle koppelbar sind und
   d) der Anhangteil Daten von den Bedienmitteln entgegennehmen und Daten über die Anzeigeeinrichtung ausgeben kann.

## Patentansprüche

1. Datenverarbeitungseinrichtung (3000) zur Auswahl und Bestellung von Gütern und/oder Dienstleistungen, insbesondere die nicht unmittelbar über Datenleitungen erbracht werden können, umfassend einen Handteil (3020) und ein Kartenmodul (3010),
wobei der Handteil und/oder das Kartenmodul mindestens eine nichtflüchtige Datenspeichereinrichtung aufweist, in der ein Katalog der bestellbaren Güter und/oder Dienstleistungen abgelegt ist,
wobei die Datenverarbeitungseinrichtung derart ausgebildet ist, dass nach Auswahl eines Guts und/oder einer Dienstleistung eine Telekommunikationsverbindung zu einem Serverrechner hergestellt und Bestelldaten übermittelt werden können.

2. Datenverarbeitungseinrichtung nach Anspruch 1, wobei der Handteil mit einem Datenkommunikationsmittel mit oder ohne Kabel ausgestattet ist.

3. Datenverarbeitungseinrichtung nach Anspruch 1 oder 2, wobei der Handteil als digitales Buch, Palmtop, PDA, Notebook oder Mobiltelefon ausgestaltet ist und einen Rechner mitsamt Anzeigedisplay und Eingabemitteln, insbesondere einen Touchscreen, umfasst.

4. Datenverarbeitungseinrichtung nach einem der vorangegangenen Ansprüche, wobei die Datenverarbeitungseinrichtung derart ausgebildet ist, dass nach Auswahl eines Guts und/oder einer Dienstleistung, vollautomatisch eine Telekommunikationsverbindung zu einem Serverrechner hergestellt und Bestelldaten übermittelt werden können.

5. Datenverarbeitungseinrichtung nach einem der vorangegangenen Ansprüche, wobei die Datenverarbeitungseinrichtung mitsamt einer auf ihr ablaufenden Software derart eingerichtet ist, dass nach einem Einsteck- oder Ankoppelvorgang des Kartenmoduls über eine Telekommunikationseinrichtung eine Verbindung zu einem Serverrechner eines Anbieters aufgebaut wird und automatisch der Katalog in eine Datenspeichereinrichtung des Kartenmoduls und/oder des Handteils heruntergeladen wird.

6. Datenverarbeitungseinrichtung nach Anspruch 5, wobei in einer Datenspeichereinrichtung eine Information, insbesondere in Gestalt einer Telefonnummer oder Internetadresse, gespeichert ist, die einen Aufbau der Datenkommunikation mit dem Serverrechner und Herunterladen des Katalogs ermöglicht.

7. Datenverarbeitungseinrichtung nach einem der vorangegangenen Ansprüche, wobei die Datenverarbeitungseinrichtung mitsamt einer auf ihr ablaufenden Software derart eingerichtet ist, dass eine Telekommunikationsverbindung zum Herunterladen und/oder Lesen des Katalogs aufgebaut wird, wenn festgestellt wird, dass keine oder keine aktuellen Katalogdaten vorliegen.

8. Datenverarbeitungseinrichtung nach einem der Ansprüche 5 - 7, wobei die Datenverarbeitungseinrichtung mitsamt einer auf ihr ablaufenden Software derart eingerichtet ist, dass die Verbindung zum Serverrechner automatisch nach dem Ende des Download-Vorganges unterbrochen wird.

9. Datenverarbeitungseinrichtung nach einem der vorangegangenen Ansprüche, wobei die Datenverarbeitungseinrichtung mitsamt einer auf ihr ablaufenden Software derart eingerichtet ist, dass ein potentieller Anbieter von Gütern und/oder Dienstleistungen in einer Region um den geografischen Ort des Bestellers lokalisiert wird.

10. Datenverarbeitungseinrichtung nach einem der vorangegangen Ansprüche, wobei die Datenverarbeitungseinrichtung ein GPS-Modul enthält.

11. Verfahren zur Auswahl und Bestellung von Gütern und/oder Dienstleistungen, insbesondere die nicht unmittelbar über Datenleitungen erbracht werden können, mit einer Datenverarbeitungseinrichtung nach einem der vorangegangenen Ansprüche mit den Schritten:
Anzeigen des Katalogs der bestellbaren Güter und/oder Dienstleistungen,
Starten des Bestellvorgangs nach Auswahl von bestellbaren Gütern und/oder Dienstleistungen,
Übertragen der Bestelldaten vom Handteil an den Serverrechner.

12. Verfahren nach Anspruch 11, wobei vor dem Schritt des Anzeigens des Katalogs und nach einem Einstecken oder Ankoppeln des Kartenmoduls, insbesondere automatisch, ein Herunterladen eines Katalogs über eine Telekommunikationsverbindung vom Serverrechner in eine Speichereinrichtung des Handteils und/oder des Kartenmoduls veranlasst werden kann.

13. Verfahren nach Anspruch 12, wobei das Herunterladen über eine Telekommunikationsverbindung automatisch veranlasst wird.

14. Verfahren nach einem der Ansprüche 11 - 13, weiterhin umfassend ein Lokalisieren eines potentiellen Anbieters, insbesondere mittels eines GPS-Moduls in der Datenverarbeitungseinrichtung, vor dem Schritt des Veranlassens des Herunterladens und/der vor dem Schritt des Anzeigen des Katalogs.

15. Verfahren nach einem der Ansprüche 11 - 14, wobei nach einem Herunterladen eines Katalogs und/oder nach dem Übertragen der Bestelldaten automatisch ein Verbindungsabbruch ausgelöst wird.

16. Verfahren nach einem der Ansprüche 11 - 15, weiterhin umfassend ein Initiieren eines Rückrufs durch den Serverrechner an den Handteil.

17. Verfahren nach einem Ansprüche 11 - 16, weiterhin umfassend ein Übertragen einer Auftragsbestätigung durch den Serverrechner an den Handteil.

18. Verfahren nach einem der Ansprüche 11 - 17, weiterhin umfassend ein Verifizieren der Bestellung durch den Serverrechner.

19. Verfahren nach einem der Ansprüche 11 - 18, wobei die bestellbaren Güter und/oder Dienstleistungen eine Bestellung und/oder Reservierung einer Taxifahrt, Kino- oder Theaterkarten, Tischbestellungen in einem Restaurant oder Einkaufsbestellungen an Einzelhandelsgeschäfte und/oder Großvertriebsformen, wie Großhandelsketten oder Kaufhäuser umfasst.
